# EUROPEAN PATENT APPLICATION

(11) **EP 3 395 911 A1**
(43) Date of publication of application: **31.10.2018**
(21) Application number: 16878282.9
(22) Date of filing: 29.11.2016
(51) Int. Cl.: C09B 67/20, B41J 2/01, B41M 5/00, C09B 11/20, C09D 11/328, D06P 3/24, D06P 5/00

(54) **COLORING COMPOSITION, INKJET INK, AND PRINTING METHOD**

(30) Priority: 25.12.2015 JP 2015255261
(71) Applicant: FUJIFILM Corporation, Tokyo 106-8620 (JP)
(72) Inventor: YAGI Kazunari, Ashigarakami-gun Kanagawa 258-8577 (JP); HARA Akihiro, Ashigarakami-gun Kanagawa 258-8577 (JP); TATEISHI Keiichi, Ashigarakami-gun Kanagawa 258-8577 (JP)
(74) Representative: Klunker IP Patentanwälte PartG mbB
(86) International application number: PCT/JP2016/085447
(87) International publication number: WO 2017/110388

(57) **Abstract**

Provided are a coloring composition including a compound represented by any one of Formulae (1) to (3) shown in the specification, an ink jet ink including the coloring composition, and a textile printing method.

## Description

### BACKGROUND OF THE INVENTION

### 1. Field of the Invention

The present invention relates to a coloring composition, an ink jet ink, and a textile printing method.

### 2. Description of the Related Art

A technique for dyeing fabric using a triarylmethane dye has been studied in the related art. For example, in order to dye a polyamide such as silk or nylon, Acid Blue 7 (AB7) or Acid Blue 9 (AB9) has been used.

As an industrial dyeing method for dyeing fabric, for example, screen printing, roller printing, or transfer printing has been used until now. These methods are dyeing techniques in which a series of steps including, for example, a step of planning a design pattern, an engraving or plate-making step, a step of preparing a printing paste, and a step of preparing a textile are integrated.

On the other hand, ink jet textile printing in which an ink jet method capable of directly supplying a dye to fabric is used has been proposed. Ink jet textile printing has advantageous effects in that, unlike textile printing of the related art, it is not necessary to make a plate and an image having excellent tone characteristics can be rapidly formed. Therefore, there are merits in that, for example, the delivery time can be reduced, many kinds in small quantities can be produced, and a plate-making step is unnecessary. Further, in ink jet textile printing, only an amount of ink required for forming an image is used. Therefore, it can be said that ink jet textile printing is an image forming method having excellent environmental friendliness in that, for example, the amount of waste liquid is less than that in a method of the related art.

On the other hand, JP2003-73358A describes a triarylmethane compound having a heterocycle bonded to a metal atom, in which an image is formed on paper by ink jet printing using a coloring composition including this compound, and the color, light fastness, and the like of the image are discussed.

### SUMMARY OF THE INVENTION

However, AB7 or AB9 has a problem in that light fastness is insufficient.

In addition, the triarylmethane compound having a heterocycle described in JP2003-73358A has light fastness. However, in JP2003-73358A, issues (in particular, light fastness) arising in a case where the triarylmethane compound having a heterocycle is used for dyeing fabric are not discussed.

Further, in ink jet textile printing, a step of jetting an ink including a dye to fabric from a nozzle of a recording head of an ink jet printer is provided. In this step, in consideration of an actual use, it is preferable that the ink can be jetted without any problem even in a case where it is used after a long-term storage, that is, it is preferable that the storage stability is excellent.

An object of the present invention is to provide a coloring composition having excellent light fastness and storage stability. In addition, another object of the present invention is to provide an ink jet ink including the coloring composition, and a textile printing method.

The objects of the present invention are achieved by the following means.
<1> A coloring composition comprising:
   a compound A represented by any one of the following Formulae (1) to (3); and
   a compound B in which any one of hydrogen atoms in the compound A is substituted with an ionic hydrophilic group,
   in which a content mass ratio of the compound A to the compound B is 99.99:0.01 to 0.01:99.99, 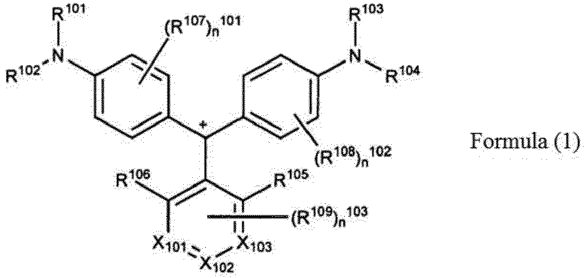
   in Formula (1), R¹⁰¹ and R¹⁰³ each independently represent a hydrogen atom, an alkyl group, an aryl group, or a heterocyclic group,
   R¹⁰² and R¹⁰⁴ each independently represent an alkyl group, an aryl group, or a heterocyclic group,
   R¹⁰⁵ and R¹⁰⁶ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group,
   R¹⁰⁷, R¹⁰⁸, and R¹⁰⁹ each independently represent a substituent,
   X₁₀₁, X₁₀₂, and X₁₀₃ each independently represent CH or a nitrogen atom,
   at least one of X₁₀₁, X₁₀₂, or X₁₀₃ represents CH,
   in a case where X₁₀₁ to X₁₀₃ represent CH, R¹⁰⁹ may be bonded after a hydrogen atom is removed,
   n¹⁰¹ and n¹⁰² each independently represent an integer of 0 to 4,
   n¹⁰³ represents an integer of 0 to 3,
   in a case where n¹⁰¹, n¹⁰², and n¹⁰³ each independently represent an integer of 2 or more, a plurality of R¹⁰⁷'s, R¹⁰⁸'s, and R¹⁰⁹'s may be the same as or different from each other,
   R¹⁰⁷ and R¹⁰⁸ may be bonded to each other to form a ring,
   a compound represented by Formula (1) has at least two ionic hydrophilic groups, and
   the compound represented by Formula (1) has a counter anion in a molecule, 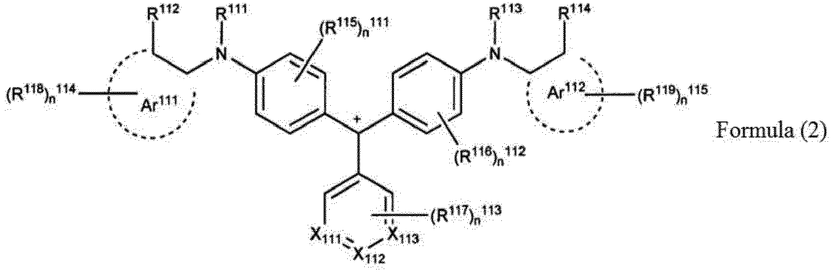
   in Formula (2), R¹¹¹ and R¹¹³ each independently represent a hydrogen atom, an alkyl group, an aryl group, or a heterocyclic group,
   R¹¹² and R¹¹⁴ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group,
   R¹¹⁵, R¹¹⁶, R¹¹⁷, R¹¹⁸, and R¹¹⁹ each independently represent a substituent,
   X₁₁₁, X₁₁₂, and X₁₁₃ each independently represent CH or a nitrogen atom,
   at least one of X₁₁₁, X₁₁₂, or X₁₁₃ represents CH,
   in a case where X₁₁₁ to X₁₁₃ represent CH, R¹¹⁷ may be bonded after a hydrogen atom is removed,
   Ar¹¹¹ and Ar¹¹² each independently represent a benzene ring, a naphthalene ring, or a heterocycle,
   n¹¹¹ and n¹¹² each independently represent an integer of 0 to 4,
   n¹¹³ represents an integer of 0 to 5,
   n¹¹⁴ and n¹¹⁵ each independently represent an integer of 0 or more,
   in a case where n¹¹¹, n¹¹², n¹¹³, n¹¹⁴, and n¹¹⁵ each independently represent an integer of 2 or more, a plurality of R¹¹⁵'s R¹¹⁶'s R¹¹⁷'s, R¹¹⁸'s, and R¹¹⁹'s may be the same as or different from each other,
   a compound represented by Formula (2) has at least two ionic hydrophilic groups, and
   the compound represented by Formula (2) has a counter anion in a molecule, 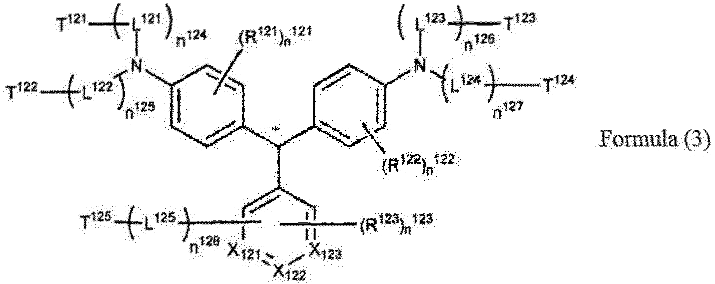
   in Formula (3), L¹²¹, L¹²², L¹²³, L¹²⁴, and L¹²⁵ each independently represent a divalent linking group,
   T¹²¹, T¹²², T¹²³, T¹²⁴, and T¹²⁵ each independently represent a hydrogen atom or a group represented by any one of the following Formulae (T-1) to (T-8),
   at least one of T¹²¹, T¹²², T¹²³, T¹²⁴, or T¹²⁵ represents a group represented by any one of Formulae (T-1) to (T-8),
   R¹²¹, R¹²², and R¹²³ each independently represent a substituent,
   X₁₂₁, X₁₂₂, and X₁₂₃ each independently represent CH or a nitrogen atom,
   at least one of X₁₂₁, X₁₂₂, or X₁₂₃ represents CH,
   in a case where X₁₂₁ to X₁₂₃ represent CH, R¹²³ or (L¹²⁵)n¹²⁸-T¹²⁵ may be bonded after a hydrogen atom is removed,
   n¹²¹ and n¹²² each independently represent an integer of 0 to 4,
   n¹²³ represents an integer of 0 to 5,
   n¹²⁴, n¹²⁵, n¹²⁶, n¹²⁷, and n¹²⁸ each independently represent 0 or 1.
   in a case where n¹²¹, n¹²², and n¹²³ each independently represent an integer of 2 or more, a plurality of R¹²¹'s, R¹²²'s, and R¹²³'s may be the same as or different from each other,
   R¹²¹ and R¹²² may be bonded to each other to form a ring,
   a compound represented by Formula (3) has at least two ionic hydrophilic groups, and
   the compound represented by Formula (3) has a counter anion in a molecule, 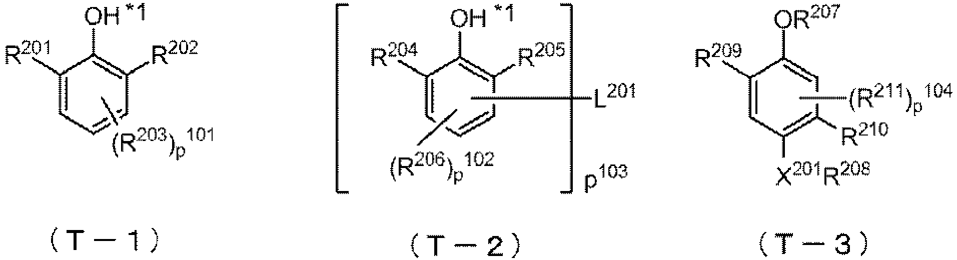 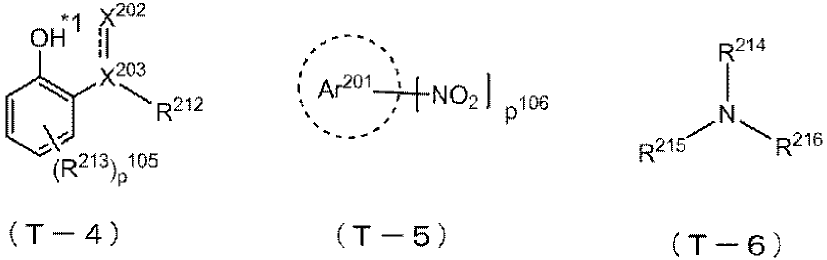 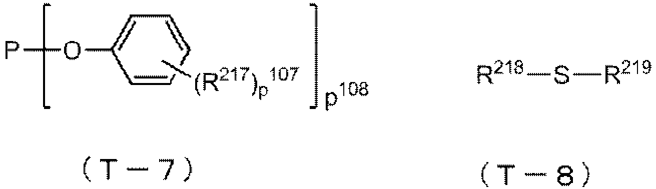
   in Formula (T-1), R²⁰¹ and R²⁰² each independently represent an alkyl group,
   R²⁰³ represents a substituent,
   p¹⁰¹ represents an integer of 0 to 3,
   in a case where p¹⁰¹ represents an integer of 2 or more, a plurality of R²⁰³'s may be the same as or different from each other,
   in Formula (T-2), R²⁰⁴ represents an alkyl group,
   R²⁰⁵ represents a hydrogen atom or an alkyl group,
   R²⁰⁶ represents a substituent,
   L²⁰¹ represents a p¹⁰³-valent linking group,
   p¹⁰² represents an integer of 0 to 2,
   p¹⁰³ represents 2 or 3,
   in a case where p¹⁰² represents an integer of 2 or more, a plurality of R²⁰⁶'s may be the same as or different from each other,
   in Formula (T-3), R²⁰⁷ represents an alkyl group,
   R²⁰⁸ represents a hydrogen atom or an alkyl group,
   R²⁰⁹ and R²¹⁰ each independently represent a hydrogen atom, an alkyl group, or an alkoxy group,
   R²¹¹ represents a substituent,
   X²⁰¹ represents an oxygen atom or NR²²⁰,
   R²²⁰ represents a hydrogen atom or an alkyl group,
   in a case where X²⁰¹ represents NH, at least one of R²⁰⁹ or R²¹⁰ represents an alkyl group or an alkoxy group,
   p¹⁰⁴ represents an integer of 0 to 2,
   in a case where p¹⁰⁴ represents 2, a plurality of R²¹¹'s may be the same as or different from each other,
   in Formula (T-4), X²⁰² represents an oxygen atom or a nitrogen atom,
   X²⁰³ represents a carbon atom or a nitrogen atom,
   in a case where X²⁰³ represents a carbon atom, a bond between X²⁰² and X²⁰³ is a double bond,
   in a case where X²⁰³ represents a nitrogen atom, a bond between X²⁰² and X²⁰³ is a single bond,
   R²¹² represents an aryl group, a heterocyclic group, or a group which is linked to X²⁰² to form a heterocyclic group,
   R²¹³ represents a substituent,
   p¹⁰⁵ represents an integer of 0 to 4,
   in a case where p¹⁰⁵ represents an integer of 2 or more, a plurality of R²¹³'s may be the same as or different from each other,
   in Formula (T-5), Ar²⁰¹ represents an aryl group or a heterocyclic group,
   p¹⁰⁶ represents an integer of 1 to 3,
   in Formula (T-6), R²¹⁴ represents a hydrogen atom, *-O·, a hydroxyl group, an alkyl group, or an alkoxy group,
   * represents a direct bond,
   · represents an unpaired electron,
   R²¹⁵ and R²¹⁶ each independently represent an alkyl group,
   R²¹⁵ and R²¹⁶ may be bonded to each other to form a ring,
   in Formula (T-7), R²¹⁷ represents a substituent,
   p¹⁰⁷ represents an integer of 0 to 5,
   in a case where p¹⁰⁷ represents an integer of 2 or more, a plurality of R²¹⁷'s may be the same as or different from each other,
   p¹⁰⁸ represents 2 or 3,
   in Formula (T-8), R²¹⁸ and R²¹⁹ each independently represent a hydrogen atom, an alkyl group, an aryl group, or a heterocyclic group,
   R²¹⁸ and R²¹⁹ may be bonded to each other to form a ring,
   a group represented by any one of Formulae (T-1) to (T-8) is bonded to L¹²¹, L¹²², L¹²³, L¹²⁴, or L¹²⁵ after any one of hydrogen atoms in the formula is removed,
   a hydrogen atom represented by *1 is not removed for bonding, and
   in a case where R²¹⁴ in Formula (T-6) represents a hydrogen atom, the hydrogen atom is not removed for bonding.
<2> The coloring composition according to <1>,
   in which the compound A is a compound represented by Formula (3), and
   at least one of T¹²¹, T¹²², T¹²³, T¹²⁴, or T¹²⁵ in Formula (3) represents a group represented by Formula (T-2), (T-4), (T-5), (T-6), or (T-8).
<3> The coloring composition according to <1> or <2>,
   in which the compound A is a compound represented by Formula (3), and
   at least one of T¹²¹, T¹²², T¹²³, T¹²⁴, or T¹²⁵ in Formula (3) represents a group represented by Formula (T-4), and
   Formula (T-4) is represented by the following Formula (T-41), (T-42), or (T-43), 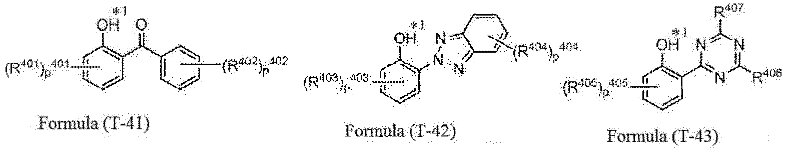 in Formula (T-41), R⁴⁰¹ and R⁴⁰² each independently represent a substituent,
   p⁴⁰¹ represents an integer of 0 to 4,
   p⁴⁰² represents an integer of 0 to 5,
   in a case where p⁴⁰¹ and p⁴⁰² each independently represent an integer of 2 or more, a plurality of R⁴⁰¹'s and R⁴⁰²'s may be the same as or different from each other,
   a hydrogen atom represented by *1 is not removed for bonding,
   in Formula (T-42), R⁴⁰³ and R⁴⁰⁴ each independently represent a substituent,
   p⁴⁰³ and p⁴⁰⁴ each independently represent an integer of 0 to 4,
   in a case where p⁴⁰³ and p⁴⁰⁴ each independently represent an integer of 2 or more, a plurality of R⁴⁰³'s and R⁴⁰⁴'s may be the same as or different from each other,
   a hydrogen atom represented by *1 is not removed for bonding,
   in Formula (T-43), R⁴⁰⁵ represents a substituent,
   R⁴⁰⁶ and R⁴⁰⁷ each independently represent an aryl group or a heterocyclic group,
   p⁴⁰⁵ represents an integer of 0 to 4,
   in a case where p⁴⁰⁵ represents an integer of 2 or more, a plurality of R⁴⁰⁵'s may be the same as or different from each other, and
   a hydrogen atom represented by *1 is not removed for bonding.
<4> The coloring composition according to any one of <1> to <3>,
   in which the number of ionic hydrophilic groups in the compound A is two or three.
<5> The coloring composition according to any one of <1> to <4>,
   in which the content mass ratio of the compound A to the compound B is 99:1 to 1:99.
<6> The coloring composition according to any one of <1> to <5>,
   in which an ionic hydrophilic group in the compound A and the compound B is at least one of a carboxyl group or a sulfo group.
<7> The coloring composition according to any one of <1> to <6>,
   in which R¹⁰⁷ and R¹⁰⁸ in Formula (1), R¹¹⁵ and R¹¹⁶ in Formula (2), and R¹²¹ and R¹²² in Formula (3) represent a secondary or tertiary alkyl group which is substituted at an ortho position with respect to a nitrogen atom.
<8> The coloring composition according to any one of <1> to <7>, which is a coloring composition for dyeing.
<9> An ink jet ink comprising the coloring composition according to any one of <1> to <8>.
<10> A textile printing method comprising the following steps (1) to (4):
   (1) a step of preparing a color paste by adding the coloring composition according to <8> to a solution including at least a polymer compound and water;
   (2) a step of printing the color paste of (1) on fabric;
   (3) a step of applying steam to the printed fabric; and
   (4) a step of washing the printed fabric with water and drying the washed fabric.
<11> A textile printing method comprising the following steps (11) to (14):
   (11) a step of applying a paste including at least a polymer compound and water to fabric;
   (12) a step of printing the ink jet ink according to <9> on the fabric using an ink jet method;
   (13) a step of applying steam to the printed fabric; and
   (14) a step of washing the printed fabric with water and drying the washed fabric.
<12> The textile printing method according to <10> or <11>,
   in which the fabric includes polyamide.

According to the present invention, a coloring composition having excellent light fastness and storage stability can be provided. In addition, an ink jet ink including the coloring composition, and a textile printing method can be provided.

### DESCRIPTION OF THE PREFERRED EMBODIMENTS

Hereinafter, the present invention will be described in detail.

First, specific examples of a substituent in the present invention are defined as a substituent group A.

### (Substituent Group A)

Examples of the substituent group A include a halogen atom, an alkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkyl- or aryl-sulfonylamino group, a mercapto group, an alkylthio group, an arylthio group, a heterocyclic thio group, a sulfamoyl group, an alkyl- or aryl-sulfinyl group, an alkyl- or aryl-sulfonyl group, an acyl group, an aryloxycarbonyl group, an alkoxycarbonyl group, a carbamoyl group, an aryl or heterocyclic azo group, an imido group, a phosphino group, a phosphinyl group, a phosphinyloxy group, a phosphinylamino group, a silyl group, and an ionic hydrophilic group. These substituents may further have a substituent, and examples of this substituent include a group selected from the above-described substituent group A.

Examples of the halogen atom include a fluorine atom, a chlorine atom, a bromine atom, and an iodine atom.

Examples of the alkyl group include a linear, branched, or cyclic substituted or unsubstituted alkyl group. In addition, a cycloalkyl group, a bicycloalkyl group, a tricyclo structure and the like having many ring structures are also included. Alkyl groups (for example, an alkyl group in an alkoxy group or an alkylthio group) in substituents described below are also included in the examples of the above-described alkyl group.

As the alkyl group, an alkyl group having 1 to 30 carbon atoms is preferable, and examples thereof include a methyl group, an ethyl group, an n-propyl group, an i-propyl group, a t-butyl group, an n-octyl group, an eicosyl group, a 2-chloroethyl group, a 2-cyanoethyl group, and a 2-ethylhexyl group. As the cycloalkyl group, a substituted or unsubstituted cycloalkyl group having 3 to 30 carbon atoms is preferable, and examples thereof include a cyclohexyl group, a cyclopentyl group, and a 4-n-dodecylcyclohexyl group. As the bicycloalkyl group, a substituted or unsubstituted bicycloalkyl group having 5 to 30 carbon atoms is preferable, that is, a monovalent group obtained by removing one hydrogen atom from bicycloalkane having 5 to 30 carbon atoms is preferable, and examples thereof include a bicyclo[1,2,2]heptan-2-yl group and a bicyclo[2,2,2]octan-3-yl group.

Examples of the aralkyl group include a substituted or unsubstituted aralkyl group. As the substituted or unsubstituted aralkyl group, an aralkyl group having 7 to 30 carbon atoms is preferable, and examples thereof include a benzyl group and a 2-phenethyl group.

Examples of the alkenyl group include a linear, branched, or cyclic substituted or unsubstituted alkenyl group. In addition, a cycloalkenyl group and a bicycloalkenyl group are also included.

As the alkenyl group, a substituted or unsubstituted alkenyl group having 2 to 30 carbon atoms is preferable, and examples thereof include a vinyl group, an allyl group, a prenyl group, a geranyl group, and an oleyl group. As the cycloalkenyl group, a substituted or unsubstituted cycloalkenyl group having 3 to 30 carbon atoms is preferable, that is, a monovalent group obtained by removing one hydrogen atom from cycloalkene having 3 to 30 carbon atoms is preferable, and examples thereof include a 2-cyclopenten-1-yl group and a 2-cyclohexen-1-yl group. As the bicycloalkenyl group, a substituted or unsubstituted bicycloalkenyl group can be used. A substituted or unsubstituted bicycloalkenyl group having 5 to 30 carbon atoms is preferable, that is, a monovalent group obtained by removing one hydrogen atom from bicycloalkene having one double bond is preferable, and examples thereof include a bicyclo[2,2,1]hept-2-en-1-yl group and a bicyclo[2,2,2]oct-2-en-4-yl group.

As the alkynyl group, a substituted or unsubstituted alkynyl group having 2 to 30 carbon atoms is preferable, and examples thereof include an ethynyl group, a propargyl group, and a trimethylsilylethynyl group.

As the aryl group, a substituted or unsubstituted aryl group having 6 to 30 carbon atoms is preferable, and examples thereof include a phenyl group, a p-tolyl group, a naphthyl group, an m-chlorophenyl group, an o-hexadecanoylaminophenyl group.

As the heterocyclic group, a monovalent group obtained by removing one hydrogen atom from a 5- or 6-membered substituted or unsubstituted aromatic or nonaromatic heterocyclic compound is preferable, and a 5- or 6-membered aromatic heterocyclic group having 3 to 30 carbon atoms is more preferable, and examples thereof include a 2-furyl group, a 2-thienyl group, a 2-pyrimidinyl group, and a 2-benzothiazolyl group. Examples of the nonaromatic heterocyclic group include a morpholinyl group.

As the alkoxy group, a substituted or unsubstituted alkoxy group having 1 to 30 carbon atoms is preferable, and examples thereof include a methoxy group, an ethoxy group, an isopropoxy group, a t-butoxy group, an n-octyloxy group, and a 2-methoxyethoxy group.

As the aryloxy group, a substituted or unsubstituted aryloxy group having 6 to 30 carbon atoms is preferable, and examples thereof include a phenoxy group, a 2-methylphenoxy group, a 4-t-butylphenoxy group, a 3-nitrophenoxy group, and a 2-tetradecanoylaminophenoxy group.

As the silyloxy group, a substituted or unsubstituted silyloxy group having 0 to 20 carbon atoms is preferable, and examples thereof include a trimethylsilyloxy group and a diphenylmethylsilyloxy group.

As the heterocyclic oxy group, a substituted or unsubstituted heterocyclic oxy group having 2 to 30 carbon atoms is preferable, and examples thereof include a 1-phenyltetrazole-5-oxy group and a 2-tetrahydropyranyloxy group.

As the acyloxy group, a formyloxy group, a substituted or unsubstituted alkylcarbonyloxy group having 2 to 30 carbon atoms, or a substituted or unsubstituted arylcarbonyloxy group having 6 to 30 carbon atoms is preferable, and examples thereof include an acetyloxy group, a pivaloyloxy group, a stearoyloxy group, a benzoyloxy group, and a p-methoxyphenylcarbonyloxy group.

As the carbamoyloxy group, a substituted or unsubstituted carbamoyloxy group having 1 to 30 carbon atoms is preferable, and examples thereof include an N,N-dimethylcarbamoyloxy group, an N,N-diethylcarbamoyloxy group, a morpholinocarbonyloxy group, an N,N-di-n-octylaminocarbonyloxy group, and an N-n-octylcarbamoyloxy group.

As the alkoxycarbonyloxy group, a substituted or unsubstituted alkoxycarbonyloxy group having 2 to 30 carbon atoms is preferable, and examples thereof include a methoxycarbonyloxy group, an ethoxycarbonyloxy group, a t-butoxycarbonyloxy group, and an n-octylcarbonyloxy group.

As the aryloxycarbonyloxy group, a substituted or unsubstituted aryloxycarbonyloxy group having 7 to 30 carbon atoms is preferable, and examples thereof include a phenoxycarbonyloxy group, a p-methoxyphenoxycarbonyloxy group, and a p-n-hexadecyloxyphenoxycarbonyloxy group.

Examples of the amino group include an alkylamino group, an arylamino group, and a heterocyclic amino group. As the amino group, an amino group, a substituted or unsubstituted alkylamino group having 1 to 30 carbon atoms, a substituted or unsubstituted anilino group having 6 to 30 carbon atoms is preferable, and examples thereof include a methylamino group, a dimethylamino group, an anilino group, an N-methyl-anilino group, a diphenylamino group, and a triazinylamino group.

As the acylamino group, a formylamino group, a substituted or unsubstituted alkylcarbonylamino group having 1 to 30 carbon atoms, or a substituted or unsubstituted arylcarbonylamino group having 6 to 30 carbon atoms is preferable, and examples thereof include an acetylamino group, a pivaloylamino group, a lauroylamino group, a benzoylamino group, and a 3,4,5-tri-n-octyloxyphenylcarbonylamino group.

As the aminocarbonylamino group, a substituted or unsubstituted aminocarbonylamino group having 1 to 30 carbon atoms is preferable, and examples thereof include a carbamoylamino group, an N,N-dimethylaminocarbonylamino group, an N,N-diethylaminocarbonylamino group, and a morpholinocarbonylamino group.

As the alkoxycarbonylamino group, a substituted or unsubstituted alkoxycarbonylamino group having 2 to 30 carbon atoms is preferable, and examples thereof include a methoxycarbonylamino group, an ethoxycarbonylamino group, a t-butoxycarbonylamino group, an n-octadecyloxycarbonylamino group, and an N-methyl-methoxycarbonylamino group.

As the aryloxycarbonylamino group, a substituted or unsubstituted aryloxycarbonylamino group having 7 to 30 carbon atoms is preferable, and examples thereof include a phenoxycarbonylamino group, a p-chlorophenoxycarbonylamino group, and an m-n-octyloxyphenoxycarbonylamino group.

As the sulfamoylamino group, a substituted or unsubstituted sulfamoylamino group having 0 to 30 carbon atoms is preferable, and examples thereof include a sulfamoylamino group, an N,N-dimethylaminosulfonylamino group, and an N-n-octylaminosulfonylamino group.

As the alkyl- or aryl-sulfonylamino group, a substituted or unsubstituted alkylsulfonylamino group having 1 to 30 carbon atoms or a substituted or unsubstituted arylsulfonylamino group having 6 to 30 carbon atoms is preferable, and examples thereof include a methylsulfonylamino group, a butylsulfonylamino group, a phenylsulfonylamino group, a 2,3,5-trichlorophenylsulfonylamino group, and a p-methylphenylsulfonylamino group.

As the alkylthio group, a substituted or unsubstituted alkylthio group having 1 to 30 carbon atoms is preferable, and examples thereof include a methylthio group, an ethylthio group, and an n-hexadecylthio group.

As the arylthio group, a substituted or unsubstituted arylthio group having 6 to 30 carbon atoms is preferable, and examples thereof include a phenylthio group, a p-chlorophenylthio group, and an m-methoxyphenylthio group.

As the heterocyclic thio group, a substituted or unsubstituted heterocyclic thio group having 2 to 30 carbon atoms is preferable, and examples thereof include a 2-benzothiazolylthio group and a 1-phenyltetrazole-5-ylthio group.

As the sulfamoyl group, a substituted or unsubstituted sulfamoyl group having 0 to 30 carbon atoms is preferable, and examples thereof include an N-ethylsulfamoyl group, an N-(3-dodecyloxypropyl)sulfamoyl group, an N,N-dimethylsulfamoyl group, an N-acetylsulfamoyl group, an N-benzoylsulfamoyl group, and an N-(N'-phenylcarbamoyl)sulfamoyl group.

As the alkyl- or aryl-sulfinyl group, a substituted or unsubstituted alkylsulfinyl group having 1 to 30 carbon atoms or a substituted or unsubstituted arylsulfinyl group having 6 to 30 carbon atoms is preferable, and examples thereof include a methylsulfinyl group, an ethylsulfinyl group, a phenylsulfinyl group, and a p-methylphenylsulfinyl group.

As the alkyl- or aryl-sulfonyl group, a substituted or unsubstituted alkylsulfonyl group having 1 to 30 carbon atoms or a substituted or unsubstituted arylsulfonyl group having 6 to 30 carbon atoms is preferable, and examples thereof include a methylsulfonyl group, an ethylsulfonyl group, a phenylsulfonyl group, and a p-methylphenylsulfonyl group.

As the acyl group, a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 2 to 30 carbon atoms and being bonded to a carbonyl group through a carbon atom is preferable, and examples thereof include an acetyl group, a pivaloyl group, a 2-chloroacetyl group, a stearoyl group, a benzoyl group, a p-n-octyloxyphenylcarbonyl group, a 2-pyridylcarbonyl group, and a 2-furylcarbonyl group.

As the aryloxycarbonyl group, a substituted or unsubstituted aryloxycarbonyl group having 7 to 30 carbon atoms is preferable, and examples thereof include a phenoxycarbonyl group, an o-chlorophenoxycarbonyl group, an m-nitrophenoxycarbonyl group, and a p-t-butylphenoxycarbonyl group.

As the alkoxycarbonyl group, a substituted or unsubstituted alkoxycarbonyl group having 2 to 30 carbon atoms is preferable, and examples thereof include a methoxycarbonyl group, an ethoxycarbonyl group, a t-butoxycarbonyl group, and an n-octadecyloxycarbonyl group.

As the carbamoyl group, a substituted or unsubstituted carbamoyl group having 1 to 30 carbon atoms is preferable, and examples thereof include a carbamoyl group, an N-methylcarbamoyl group, an N,N-dimethylcarbamoyl group, an N,N-di-n-octylcarbamoyl group, and an N-(methylsulfonyl)carbamoyl group.

As the aryl- or heterocyclic azo group, a substituted or unsubstituted aryl azo group having 6 to 30 carbon atoms or a substituted or unsubstituted heterocyclic azo group having 3 to 30 carbon atoms is preferable, and examples thereof include a phenylazo group, a p-chlorophenylazo group, and a 5-ethylthio-1,3,4-thiadiazol-2-ylazo group.

As the imido group, for example, an N-succinimido group or an N-phthalimido group is preferable.

As the phosphino group, a substituted or unsubstituted phosphino group having 0 to 30 carbon atoms is preferable, and examples thereof include a dimethylphosphino group, a diphenylphosphino group, and a methylphenoxyphosphino group.

As the phosphinyl group, a substituted or unsubstituted phosphinyl group having 0 to 30 carbon atoms is preferable, and examples thereof include a phosphinyl group, a dioctyloxyphosphinyl group, and a diethoxyphosphinyl group.

As the phosphinyloxy group, a substituted or unsubstituted phosphinyloxy group having 0 to 30 carbon atoms is preferable, and examples thereof include a diphenoxyphosphinyloxy group and a dioctyloxyphosphinyloxy group.

As the phosphinylamino group, a substituted or unsubstituted phosphinylamino group having 0 to 30 carbon atoms is preferable, and examples thereof include a dimethoxyphosphinylamino group and a dimethylaminophosphinylamino group.

As the silyl group, a substituted or unsubstituted silyl group having 0 to 30 carbon atoms is preferable, and examples thereof include a trimethylsilyl group, a t-butyldimethylsilyl group, and a phenyldimethylsilyl group.

Examples of the ionic hydrophilic group include a sulfo group, a carboxyl group, a thiocarboxyl group, a sulfino group, a phosphono group, a dihydroxyphosphino group, and a quaternary ammonium group. Among these a sulfo group or a carboxyl group is more preferable. In addition, the ionic hydrophilic group may be in a form including a cation or an anion (also referred to as "form of a salt"). For example, the carboxyl group, the phosphono group, or the sulfo group may be in the form of a salt, and examples of a cation which forms a salt with the carboxyl group, the phosphono group, or the sulfo group include an ammonium ion, an alkali metal ion (for example, a lithium ion, a sodium ion, or a potassium ion), and an organic cation (for example, a tetramethylammonium ion, a tetramethylguanidium ion, or tetramethylphosphonium). Among these, a lithium ion, a sodium ion, a potassium ion, an ammonium ion is preferable, and a lithium ion or a sodium ion is more preferable.

In the present invention, in a case where a compound is a salt, the salt is dissociated and present in a water-soluble ink in the form of ions.

A coloring composition according to the present invention includes: a compound A represented by any one of Formulae (1) to (3); and a compound B in which any one of hydrogen atoms in the compound A is substituted with an ionic hydrophilic group, in which a content mass ratio of the compound A to the compound B is 99.99:0.01 to 0.01:99.99.

In a case where the coloring composition according to the present invention is used as a coloring composition for textile printing, fabric dyed cyan or blue can be obtained. In a colored portion of the dyed fabrics, the improvement of light fastness is verified. The mechanism of action is not clear but is thought to be that, since a portion which is likely to be decomposed by light is shielded in the compound represented by Formula (1) or (2), the light fastness is improved. In addition, in the compound represented by Formula (3), an anti-fading portion is introduced into a dye through a covalent bond. Therefore, it is thought to be that the dye is not faded by light and the anti-fading portion present right near the dye functions to improve the light fastness.

In addition, by mixing the compound A and the compound B having a structure which is slightly different from that of the compound A with each other, an increase in viscosity can be suppressed, and the size of a dye aggregate which can function as a nucleus for crystal precipitation can be controlled to be less than that in a case where the compound A or the compound B is used alone. Therefore, it is presumed that storage stability is improved.

### [Compound A]

The coloring composition according to the present invention includes the compound A represented by any one of Formulae (1) to (3). The compound A may be a compound represented by Formula (1), may be a compound represented by Formula (2), or may be a compound represented by Formula (3).

Hereinafter, the compound represented by Formula (1), the compound represented by Formula (2), and the compound represented by Formula (3) will be described as "the compound A".

First, the compound represented by Formula (1) will be described.

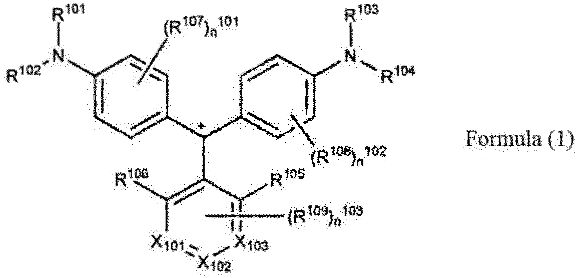

In Formula (1), R¹⁰¹ and R¹⁰³ each independently represent a hydrogen atom, an alkyl group, an aryl group, or a heterocyclic group. R¹⁰² and R¹⁰⁴ each independently represent an alkyl group, an aryl group, or a heterocyclic group. R¹⁰⁵ and R¹⁰⁶ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. R¹⁰⁷, R¹⁰⁸, and R¹⁰⁹ each independently represent a substituent, and X₁₀₁, X₁₀₂, and X₁₀₃ each independently represent CH or a nitrogen atom. At least one of X₁₀₁, X₁₀₂, or X₁₀₃ represents CH. In a case where X₁₀₁ to X₁₀₃ represent CH, R¹⁰⁹ may be bonded after a hydrogen atom is removed. n¹⁰¹ and n¹⁰² each independently represent an integer of 0 to 4, and n¹⁰³ represents an integer of 0 to 3. In a case where n¹⁰¹, n¹⁰², and n¹⁰³ each independently represent an integer of 2 or more, a plurality of R¹⁰⁷'s, R¹⁰⁸'s, and R¹⁰⁹'s may be the same as or different from each other. R¹⁰⁷ and R¹⁰⁸ may be bonded to each other to form a ring. A compound represented by Formula (1) has at least two ionic hydrophilic groups. The compound represented by Formula (1) has a counter anion in a molecule.

In a case where R¹⁰¹, R¹⁰², R¹⁰³, and R¹⁰⁴ in Formula (1) represent an alkyl group, an aryl group, or a heterocyclic group, these groups may have a substituent.

In a case where R¹⁰⁵ and R¹⁰⁶ each independently represent an alkyl group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, or an imido group, these groups may have a substituent.

In a case where each group has a substituent, the substituent may be selected from, for example, the substituent group A.

R¹⁰¹ and R¹⁰³ represent preferably a hydrogen atom, an alkyl group which may have a substituent, or an aryl group which may have a substituent.

R¹⁰² and R¹⁰⁴ represent preferably an alkyl group which may have a substituent or an aryl group which may have a substituent, and more preferably an alkyl group which has a substituent or an aryl group which may have a substituent.

As the alkyl group represented by R¹⁰¹, R¹⁰², R¹⁰³, and R¹⁰⁴, an alkyl group having 1 to 6 carbon atoms is preferable, an alkyl group having 1 to 3 carbon atoms is more preferable, and a methyl group or an ethyl group is still more preferable. In a case where R¹⁰² and R¹⁰⁴ represent an alkyl group, a methyl group which is substituted with a phenyl group is most preferable. The methyl group which is substituted with a phenyl group may further have a substituent.

As the aryl group represented by R¹⁰¹, R¹⁰², R¹⁰³, and R¹⁰⁴, a phenyl group or a naphthyl group is preferable, and a phenyl group is more preferable. In a case where R¹⁰² and R¹⁰⁴ represent an aryl group, it is preferable that R¹⁰¹ and R¹⁰³ represent a hydrogen atom.

It is preferable that R¹⁰⁵ and R¹⁰⁶ represent a halogen atom, an alkyl group which may have a substituent, an alkoxy group which may have a substituent, an acyloxy group which may have a substituent, a sulfamoyl group which may have a substituent, an acyl group which may have a substituent, an alkoxycarbonyl group which may have a substituent, or a sulfo group.

It is more preferable that R¹⁰⁵ and R¹⁰⁶ represent an alkyl group which may have a substituent or a halogen atom, in which a chlorine atom is preferable as the halogen atom.

The substituent represented by R¹⁰⁷, R¹⁰⁸, and R¹⁰⁹ may be selected from, for example, the substituent group A. As the substituent, an alkyl group, a sulfo group, a cyano group, a nitro group, a sulfamoyl group which may have a substituent, a halogen atom, an alkoxy group which may have a substituent, an aryloxy group which may have a substituent, a heterocyclic oxy group which may have a substituent, an acyloxy group which may have a substituent, an alkylamino group which may have a substituent, an arylamino group which may have a substituent, a heterocyclic amino group which may have a substituent, an acylamino group which may have a substituent, an aminocarbonylamino group which may have a substituent, an alkoxycarbonylamino group which may have a substituent, an aryloxycarbonylamino group which may have a substituent, or an alkyl- or aryl-sulfonylamino group which may have a substituent is preferable, and an alkyl group, a sulfo group, or an alkylamino group which may have a substituent, or an arylamino group which may have a substituent is more preferable.

As the alkyl group represented by R¹⁰⁷, R¹⁰⁸, and R¹⁰⁹, an alkyl group having 1 to 10 carbon atoms is preferable, an alkyl group having 1 to 6 carbon atoms is more preferable, and a methyl group, an ethyl group, an isopropyl group, or a tert-butyl group is still more preferable. From the viewpoint of light fastness, an ethyl group is more preferable rather than a methyl group, and an isopropyl group or a tert-butyl group is more preferable rather than an ethyl group.

It is more preferable that R¹⁰⁷ and R¹⁰⁸ represent a secondary alkyl group or a tertiary alkyl group which is substituted at the ortho position with respect to a nitrogen atom.

R¹⁰⁷ and R¹⁰⁸ may be bonded to each other to form a ring, but it is preferable that R¹⁰⁷ and R¹⁰⁸ are not bonded to each other from the viewpoint of storage stability.

It is preferable that n¹⁰¹ and n¹⁰² represent an integer of 0 to 2. It is preferable that n¹⁰³ represents 0 or 1.

X₁₀₁, X₁₀₂, and X₁₀₃ each independently represent CH or a nitrogen atom and preferably CH. In a case where X₁₀₁, X₁₀₂, and X₁₀₃ represent CH, a substituent R¹⁰⁹ may be bonded after a hydrogen atom is removed.

The compound represented by Formula (1) has at least two ionic hydrophilic groups. It is preferable that the compound represented by Formula (1) has at least two ionic hydrophilic groups from the viewpoints of ink storage stability and dyeing properties on a fiber. As the ionic hydrophilic group, an anionic ionic hydrophilic group (an ionic hydrophilic group which forms an anion in a case of being dissociated) is preferable, and examples of the anionic ionic hydrophilic group include a sulfo group, a carboxyl group, a thiocarboxyl group, a sulfino group, a phosphono group, and a dihydroxyphosphino group. A sulfo group or a carboxyl group is more preferable, and a sulfo group is most preferable.

The number of ionic hydrophilic groups in the compound represented by Formula (1) is preferably 2 to 6, more preferably 2 to 4, and still more preferably 2 or 3.

A compound represented by Formula (1) has a counter anion in a molecule. It is preferable that the ionic hydrophilic group represented by Formula (1) is an anionic ionic hydrophilic group and that an anion obtained by dissociation of the one anionic ionic hydrophilic group is the counter anion. It is more preferable that the counter anion is a sulfonate group (-SO₃⁻) obtained by dissociation of a sulfo group.

In general, a triphenylmethane compound is an ionic compound and has a resonance structure. Therefore, for example, regarding a compound 001-1, the following (A) to (C) represent the same compound.

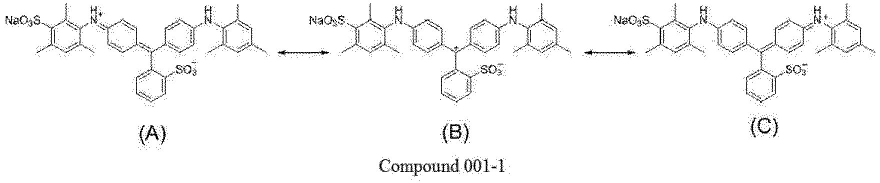

Formula (1) is represented by preferably the following Formula (1-1) or (1-2), and more preferably the following Formula (1-2).

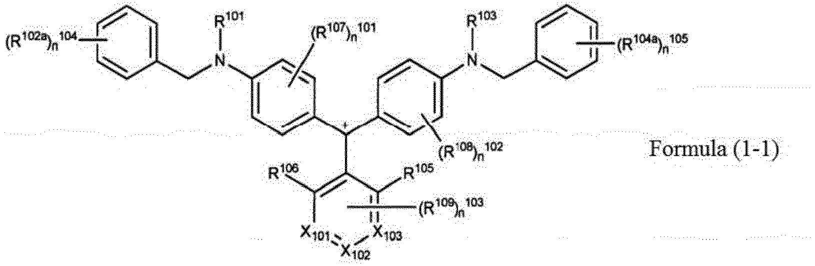

In Formula (1-1), R¹⁰¹ and R¹⁰³ each independently represent a hydrogen atom, an alkyl group, an aryl group, or a heterocyclic group. R¹⁰⁵ and R¹⁰⁶ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. R^{102a}, R^{104a}, R¹⁰⁷, R¹⁰⁸, and R¹⁰⁹ each independently represent a substituent, and X₁₀₁, X₁₀₂, and X₁₀₃ each independently represent CH or a nitrogen atom,
at least one of X₁₀₁, X₁₀₂, or X₁₀₃ represents CH,
in a case where X₁₀₁ to X₁₀₃ represent CH, R¹⁰⁹ may be bonded after a hydrogen atom is removed, n¹⁰¹ and n¹⁰² each independently represent an integer of 0 to 4, n¹⁰³ represents an integer of 0 to 3, and n¹⁰⁴ and n¹⁰⁵ each independently represent an integer of 0 to 5. In Formula (1-1), a substituent may be bonded after a hydrogen atom is removed. In a case where n¹⁰¹' n¹⁰², n¹⁰³, n¹⁰⁴, and n¹⁰⁵ each independently represent an integer of 2 or more, a plurality of R¹⁰⁷'s R¹⁰⁸'s R¹⁰⁹'s, R^{102a}'s, and R^{104a}'s may be the same as or different from each other. A compound represented by Formula (1-1) has at least two ionic hydrophilic groups. The compound represented by Formula (1-1) has a counter anion.

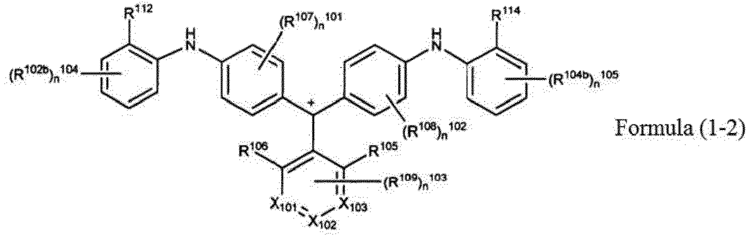

In Formula (1-2), R¹⁰⁵ and R¹⁰⁶ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. R¹¹² and R¹¹⁴ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. R^{102b}, R^{104b}, R¹⁰⁷, R¹⁰⁸, and R¹⁰⁹ each independently represent a substituent, and X₁₀₁, X₁₀₂, and X₁₀₃ each independently represent CH or a nitrogen atom. At least one of X₁₀₁, X₁₀₂, or X₁₀₃ represents CH. In a case where X₁₀₁ to X₁₀₃ represent CH, R¹⁰⁹ may be bonded after a hydrogen atom is removed. n¹⁰¹ and n¹⁰² each independently represent an integer of 0 to 4, and n¹⁰³ represents an integer of 0 to 3. n¹⁰⁴ and n¹⁰⁵ each independently represent an integer of 0 to 5. In Formula (1-2), a substituent may be bonded after a hydrogen atom is removed. In a case where n¹⁰¹, n¹⁰², n¹⁰³, n¹⁰⁴, and n¹⁰⁵ each independently represent an integer of 2 or more, a plurality of R¹⁰⁷'s R¹⁰⁸'s R¹⁰⁹'s, R^{102b}'s, and R^{104b}'s may be the same as or different from each other. A compound represented by Formula (1-2) has at least two ionic hydrophilic groups. The compound represented by Formula (1-2) has a counter anion.

R¹⁰¹ and R¹⁰³ in Formula (1-1) have the same specific examples and the same preferable ranges as R¹⁰¹ and R¹⁰³ in Formula (1).

R¹⁰⁵, R¹⁰⁶, R¹⁰⁷, R¹⁰⁸, and R¹⁰⁹ in Formulae (1-1) and (1-2) have the same specific examples and the same preferable ranges as R¹⁰⁵, R¹⁰⁶, R¹⁰⁷, R¹⁰⁸, and R¹⁰⁹ in Formula (1).

X₁₀₁, X₁₀₂, X₁₀₃, n¹⁰¹, n¹⁰², and n¹⁰³ in Formulae (1-1) and (1-2) have the same preferable ranges as X₁₀₁, X₁₀₂, X₁₀₃, n¹⁰¹, n¹⁰², and n¹⁰³ in Formula (1).

R^{102a}, R^{104a}, R^{102b}, and R^{104b} in Formulae (1-1) and (1-2) have the same specific examples and the same preferable ranges as R¹⁰⁷, R¹⁰⁸, and R¹⁰⁹.

R¹¹² and R¹¹⁴ in Formula (1-2) have the same specific examples and the same preferable ranges as R¹¹² and R¹¹⁴ in Formula (2) described below.

In Formulae (1-1) and (1-2), n¹⁰⁴ and n¹⁰⁵ represent preferably 1 to 3.

The compound represented by Formula (1-1) or (1-2) has at least two ionic hydrophilic groups, and specific examples and preferable ranges of the ionic hydrophilic groups are the same as those of Formula (1).

Next, the compound represented by Formula (2) will be described.

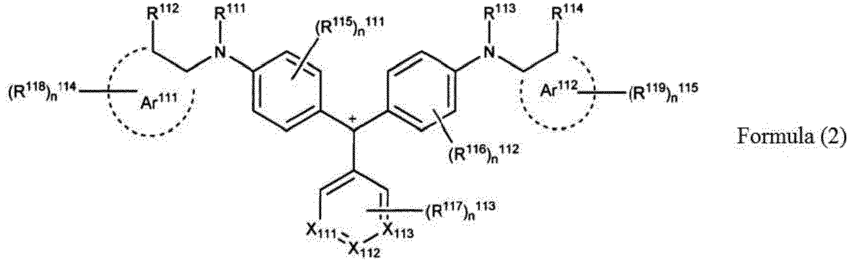

In Formula (2), R¹¹¹ and R¹¹³ each independently represent a hydrogen atom, an alkyl group, an aryl group, or a heterocyclic group. R¹¹² and R¹¹⁴ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. R¹¹⁵, R¹¹⁶, R¹¹⁷, R¹¹⁸, and R¹¹⁹ each independently represent a substituent, and X₁₁₁, X₁₁₂, and X₁₁₃ each independently represent CH or a nitrogen atom. At least one of X₁₁₁, X₁₁₂, or X₁₁₃ represents CH. In a case where X₁₁₁ to X₁₁₃ represent CH, R¹¹⁷ may be bonded after a hydrogen atom is removed. Ar¹¹¹ and Ar¹¹² each independently represent a benzene ring, a naphthalene ring, or a heterocycle. n¹¹¹ and n¹¹² each independently represent an integer of 0 to 4, n¹¹³ represents an integer of 0 to 5, and n¹¹⁴ and n¹¹⁵ each independently represent an integer of 0 or more. In a case where n¹¹¹, n¹¹², n¹¹³, n¹¹⁴, and n¹¹⁵ each independently represent an integer of 2 or more, a plurality of R¹¹⁵'s R¹¹⁶'s R¹¹⁷'s, R¹¹⁸'s, and R¹¹⁹'s may be the same as or different from each other. The compound represented by Formula (2) has at least two ionic hydrophilic groups. The compound represented by Formula (2) has a counter anion in a molecule.

In a case where R¹¹¹ and R¹¹³ represent an alkyl group, an aryl group, or a heterocyclic group, these groups may have a substituent.

In a case where R¹¹² and R¹¹⁴ each independently represent an alkyl group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, or an imido group, these groups may have a substituent.

In a case where each group has a substituent, the substituent may be selected from, for example, the substituent group A.

R¹¹¹ and R¹¹³ represent preferably a hydrogen atom or an alkyl group which may have a substituent, and more preferably a hydrogen atom.

R¹¹² and R¹¹⁴ represent preferably a halogen atom, an alkyl group which may have a substituent, an alkoxy group which may have a substituent, an acyloxy group which may have a substituent, a sulfamoyl group which may have a substituent, an acyl group which may have a substituent, an alkoxycarbonyl group which may have a substituent, a carbamoyl group, or a sulfo group, and more preferably an alkyl group which may have a substituent or a halogen atom. As the halogen atom, a chlorine atom is preferable.

As the alkyl group represented by R¹¹¹, R¹¹², R¹¹³, and R¹¹⁴, an alkyl group having 1 to 6 carbon atoms is preferable, an alkyl group having 1 to 3 carbon atoms is more preferable, a methyl group or an ethyl group is still more preferable, and a methyl group is even still more preferable.

The substituent represented by R¹¹⁵, R¹¹⁶, R¹¹⁷, R¹¹⁸, and R¹¹⁹ may be selected from, for example, the substituent group A. As the substituent, an alkyl group, a sulfo group, a cyano group, a nitro group, a sulfamoyl group which may have a substituent, a halogen atom, an alkoxy group which may have a substituent, an aryloxy group which may have a substituent, a heterocyclic oxy group which may have a substituent, an acyloxy group which may have a substituent, an amino group which may have a substituent, an alkylamino group which may have a substituent, an arylamino group which may have a substituent, a heterocyclic amino group which may have a substituent, an acylamino group which may have a substituent, an aminocarbonylamino group which may have a substituent, an alkoxycarbonylamino group which may have a substituent, an aryloxycarbonylamino group which may have a substituent, an alkyl- or aryl-sulfonylamino group which may have a substituent, an alkylthio group which may have a substituent, an alkylsulfonyl group which may have a substituent, or an alkylaminocarbonyl group which may have a substituent is preferable, and an alkyl group, a sulfo group, an alkylamino group which may have a substituent, or an arylamino group which may have a substituent is more preferable. In addition, in a case where the alkylamino group and the arylamino group have a substituent, the substituent is selected from, for example, the substituent group A. As the substituent, an alkyl group, a halogen atom, an alkoxycarbonyl group, or a sulfo group is preferable.

As the alkyl group represented by R¹¹⁵, R¹¹⁶, R¹¹⁷, R¹¹⁸, and R¹¹⁹, an alkyl group having 1 to 10 carbon atoms is preferable, an alkyl group having 1 to 6 carbon atoms is more preferable, and a methyl group, an ethyl group, an isopropyl group, or a tert-butyl group is still more preferable. From the viewpoint of light fastness, an ethyl group is more preferable rather than a methyl group, and an isopropyl group or a tert-butyl group is more preferable rather than an ethyl group.

As a substitution site in an aromatic ring of R¹¹⁵ and R¹¹⁶, an ortho position with respect to a nitrogen atom is preferable. It is more preferable that R¹¹⁵ and R¹¹⁶ represent a secondary alkyl group or a tertiary alkyl group which is substituted at the ortho position with respect to a nitrogen atom.

Ar¹¹¹ and Ar¹¹² represent preferably a benzene ring or a naphthalene ring, and more preferably a benzene ring.

It is preferable that n¹¹¹ and n¹¹² represent an integer of 0 to 2. It is preferable that n¹¹³ represents an integer of 0 to 3. It is preferable that n¹¹⁴ and n¹¹⁵ represent an integer of 0 to 5.

X₁₁₁, X₁₁₂, and X₁₁₃ each independently represent CH or a nitrogen atom and preferably CH. In a case where X₁₁₁, X₁₁₂, and X₁₁₃ represent CH, a substituent R¹¹⁷ may be bonded after a hydrogen atom is removed.

Formula (2) is represented by preferably the following Formula (2-1) or (2-2), and more preferably the following Formula (2-2).

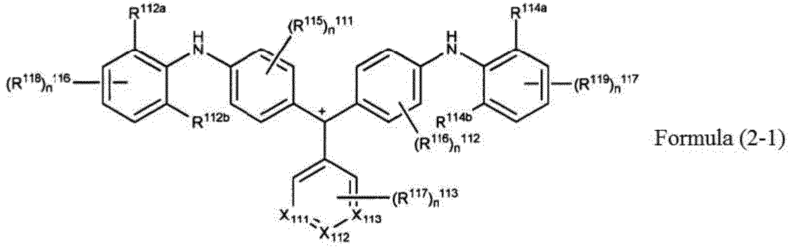

In Formula (2-1), R^{112a}, R^{112b}, R^{114a} and R^{114b} each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. R¹¹⁵, R¹¹⁶, R¹¹⁷, R¹¹⁸, and R¹¹⁹ each independently represent a substituent, and X₁₁₁, X₁₁₂, and X₁₁₃ each independently represent CH or a nitrogen atom. At least one of X₁₁₁, X₁₁₂, or X₁₁₃ represents CH. In a case where X₁₁₁ to X₁₁₃ represent CH, R¹¹⁷ may be bonded after a hydrogen atom is removed. n¹¹¹ and n¹¹² each independently represent an integer of 0 to 4, n¹¹³ represents an integer of 0 to 5, and n¹¹⁶ and n¹¹⁷ each independently represent an integer of 0 to 3. In Formula (2-1), a substituent may be bonded after a hydrogen atom is removed. In a case where n¹¹¹, n¹¹², n¹¹³, n¹¹⁶, and n¹¹⁷ each independently represent an integer of 2 or more, a plurality of R¹¹⁵'s R¹¹⁶'s R¹¹⁷'s, R¹¹⁸'s, and R¹¹⁹'s may be the same as or different from each other. A compound represented by Formula (2-1) has at least two ionic hydrophilic groups. The compound represented by Formula (2-1) has a counter anion in a molecule.

R^{112a}, R^{112b}, R^{114a}, and R^{114b} in Formula (2-1) have the same specific examples and the same preferable ranges as R¹¹² and R¹¹⁴ in Formula (2).

R¹¹⁵, R¹¹⁶, R¹¹⁷, R¹¹⁸, and R¹¹⁹ in Formula (2-1) have the same specific examples and the same preferable ranges as R¹¹⁵, R¹¹⁶, R¹¹⁷, R¹¹⁸, and R¹¹⁹ in Formula (2).

As a substitution site in an aromatic ring of R¹¹⁸ and R¹¹⁹ in Formula (2-1), a para position from a nitrogen atom is preferable.

X₁₁₁, X₁₁₂, X₁₁₃, n¹¹¹, n¹¹², and n¹¹³ in Formula (2-1) have the same preferable ranges as X₁₁₁, X₁₁₂, X₁₁₃, n¹¹¹, n¹¹², and n¹¹³ in Formula (2).

It is preferable that n¹¹⁶ and n¹¹⁷ represent an integer of 0 to 2.

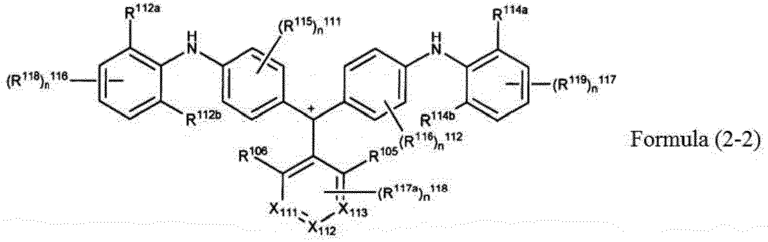

In Formula (2-2), R^{112a}, R^{112b}, R^{114a}, R^{114b}, R¹⁰⁵, and R¹⁰⁶ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group. R¹¹⁵, R¹¹⁶, R^{117a}, R¹¹⁸, and R¹¹⁹ each independently represent a substituent, and X₁₁₁, X₁₁₂, and X₁₁₃ each independently represent CH or a nitrogen atom. At least one of X₁₁₁, X₁₁₂, or X₁₁₃ represents CH. In a case where X₁₁₁ to X₁₁₃ represent CH, R^{117a} may be bonded after a hydrogen atom is removed. n¹¹¹ and n¹¹² each independently represent an integer of 0 to 4, and n¹¹⁶, n¹¹⁷, and n¹¹⁸ each independently represent an integer of 0 to 3. In Formula (2-2), a substituent may be bonded after a hydrogen atom is removed. In a case where n¹¹¹, n¹¹², n¹¹⁶, n¹¹⁷, and n¹¹⁸ each independently represent an integer of 2 or more, a plurality of R¹¹⁵'s R¹¹⁶'s R¹¹⁸'s, R¹¹⁹'s, and R^{117a}'s may be the same as or different from each other. A compound represented by Formula (2-2) has at least two ionic hydrophilic groups. The compound represented by Formula (2-2) has a counter anion in a molecule.

R^{112a}, R^{112b}, R^{114a}, and R^{114b} in Formula (2-2) have the same specific examples and the same preferable ranges as R¹¹² and R¹¹⁴ in Formula (2).

R¹¹⁵, R¹¹⁶, R^{117a}, R¹¹⁸, and R¹¹⁹ in Formula (2-2) have the same specific examples and the same preferable ranges as R¹¹⁵, R¹¹⁶, R¹¹⁷, R¹¹⁸, and R¹¹⁹ in Formula (2).

As a substitution site in an aromatic ring of R¹¹⁸ and R¹¹⁹ in Formula (2-2), a para position from a nitrogen atom is preferable.

X₁₁₁, X₁₁₂, X₁₁₃, n¹¹¹, and n¹¹² in Formula (2-2) have the same preferable ranges as X₁₁₁, X₁₁₂, X₁₁₃, n¹¹¹, and n¹¹² in Formula (2).

It is preferable that n¹¹⁶ and n¹¹⁷ represent an integer of 0 to 2. It is preferable that n¹¹⁸ represents 0 or 1.

The compound represented by Formula (2), (2-1), or (2-2) has at least two ionic hydrophilic groups, and the preferable range of the number of the ionic hydrophilic groups, and specific examples and preferable ranges thereof are the same as those of Formula (1).

Next, the compound represented by Formula (3) will be described.

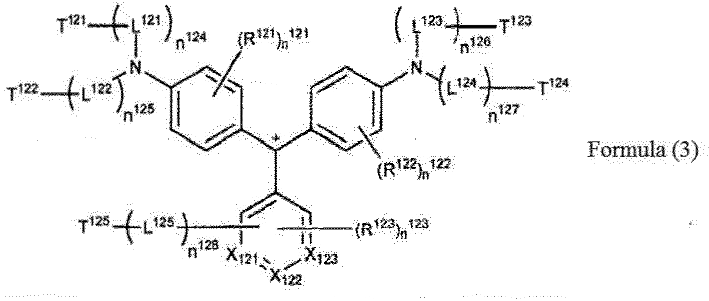

In Formula (3), L¹²¹, L¹²², L¹²³, L¹²⁴, and L¹²⁵ each independently represent a divalent linking group, and T¹²¹, T¹²², T¹²³, T¹²⁴, and T¹²⁵ each independently represent a hydrogen atom or a group represented by any one of the following Formulae (T-1) to (T-8). At least one of T¹²¹, T¹²², T¹²³, T¹²⁴, or T¹²⁵ represents a group represented by any one of Formulae (T-1) to (T-8). R¹²¹, R¹²², and R¹²³ each independently represent a substituent, and X₁₂₁, X₁₂₂, and X₁₂₃ each independently represent CH or a nitrogen atom. At least one of X₁₂₁, X₁₂₂, or X₁₂₃ represents CH. In a case where X₁₂₁ to X₁₂₃ represent CH, R¹²³ or (L¹²⁵)n¹²⁸-T¹²⁵ may be bonded after a hydrogen atom is removed. n¹²¹ and n¹²² each independently represent an integer of 0 to 4, and n¹²³ represents an integer of 0 to 5. n¹²⁴, n¹²⁵, n¹²⁶, n¹²⁷, and n¹²⁸ each independently represent 0 or 1. In a case where n¹²¹, n¹²², and n¹²³ each independently represent an integer of 2 or more, a plurality of R¹²¹'s, R¹²²'s, and R¹²³'s may be the same as or different from each other. R¹²¹ and R¹²² may be bonded to each other to form a ring. The compound represented by Formula (3) has at least two ionic hydrophilic groups. The compound represented by Formula (3) has a counter anion in a molecule.

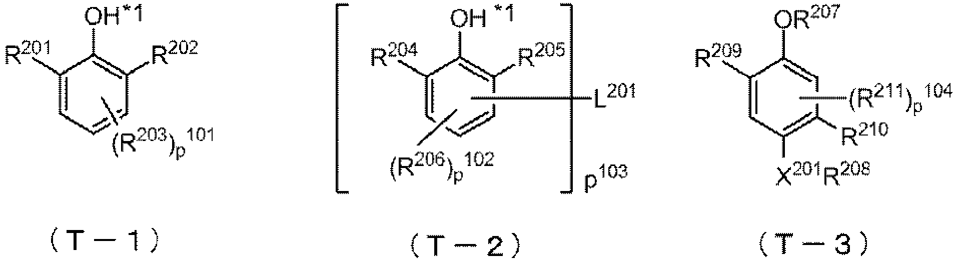

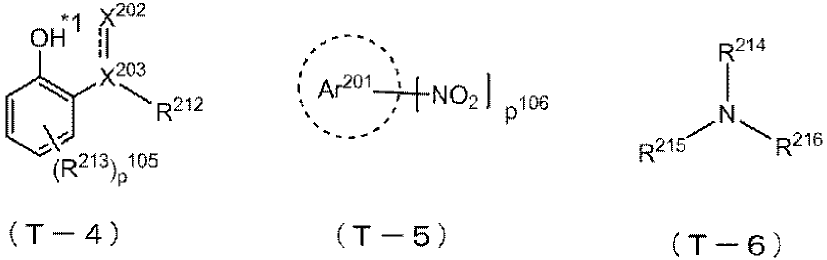

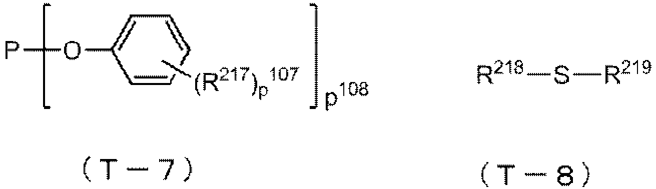

In Formula (T-1), R²⁰¹ and R²⁰² each independently represent an alkyl group. R²⁰³ represents a substituent. p¹⁰¹ represents an integer of 0 to 3. In a case where p¹⁰¹ represents an integer of 2 or more, a plurality of R²⁰³'s may be the same as or different from each other.

In Formula (T-2), R²⁰⁴ represents an alkyl group. R²⁰⁵ represents a hydrogen atom or an alkyl group. R²⁰⁶ represents a substituent. L²⁰¹ represents a p¹⁰³-valent linking group. p¹⁰² represents an integer of 0 to 2, and p¹⁰³ represents 2 or 3. In a case where p¹⁰² represents an integer of 2 or more, a plurality of R²⁰⁶'s may be the same as or different from each other.

In Formula (T-3), R²⁰⁷ represents an alkyl group. R²⁰⁸ represents a hydrogen atom or an alkyl group. R²⁰⁹ and R²¹⁰ each independently represent a hydrogen atom, an alkyl group, or an alkoxy group. R²¹¹ represents a substituent. X²⁰¹ represents an oxygen atom or NR²²⁰, and R²²⁰ represents a hydrogen atom or an alkyl group. In a case where X²⁰¹ represents NH, at least one of R²⁰⁹ or R²¹⁰ represents an alkyl group or an alkoxy group. p¹⁰⁴ represents an integer of 0 to 2. In a case where p¹⁰⁴ represents 2, a plurality of R²¹¹'s may be the same as or different from each other.

In Formula (T-4), X²⁰² represents an oxygen atom or a nitrogen atom. X²⁰³ represents a carbon atom or a nitrogen atom. In a case where X²⁰³ represents a carbon atom, a bond between X²⁰² and X²⁰³ is a double bond, and in a case where X²⁰³ represents a nitrogen atom, a bond between X²⁰² and X²⁰³ is a single bond. R²¹² represents an aryl group, a heterocyclic group, or a group which is linked to X²⁰² to form a heterocyclic group. R²¹³ represents a substituent. p¹⁰⁵ represents an integer of 0 to 4. In a case where p¹⁰⁵ represents an integer of 2 or more, a plurality of R²¹³'s may be the same as or different from each other.

In Formula (T-5), Ar²⁰¹ represents an aryl group or a heterocyclic group. p¹⁰⁶ represents an integer of 1 to 3.

In Formula (T-6), R²¹⁴ represents a hydrogen atom, *-O·, a hydroxyl group, an alkyl group, or an alkoxy group. * represents a direct bond, and· represents an unpaired electron. R²¹⁵ and R²¹⁶ each independently represent an alkyl group. R²¹⁵ and R²¹⁶ may be bonded to each other to form a ring.

In Formula (T-7), R²¹⁷ represents a substituent. p¹⁰⁷ represents an integer of 0 to 5. In a case where p¹⁰⁷ represents an integer of 2 or more, a plurality of R²¹⁷'s may be the same as or different from each other. p¹⁰⁸ represents 2 or 3.

In Formula (T-8), R²¹⁸ and R²¹⁹ each independently represent a hydrogen atom, an alkyl group, an aryl group, or a heterocyclic group. R²¹⁸ and R²¹⁹ may be bonded to each other to form a ring.

A group represented by any one of Formulae (T-1) to (T-8) is bonded to L¹²¹, L¹²², L¹²³, L²⁴, or L¹²⁵ after any one of hydrogen atoms in the formula is removed. A hydrogen atom represented by *1 is not removed for bonding, and in a case where R²¹⁴ in Formula (T-6) represents a hydrogen atom, the hydrogen atom is not removed for bonding.

In a case where L¹²¹, L¹²², L¹²³, L¹²⁴, and L¹²⁵ represent a divalent linking group, specific examples of the divalent linking group include an alkylene group, an arylene group, a heteryl group (aromatic heterocyclic group), an ether bond (-O-), -NH-, a thioether bond (-S-), a carbonyl group, a sulfonyl group, and a divalent linking group obtained by combining at least two of the above-described groups. These linking groups may have a substituent. In a case where each group has a substituent, the substituent may be selected from, for example, the substituent group A.

It is preferable that one to four of T¹²¹, T¹²², T¹²³, T¹²⁴, or T¹²⁵ represents a group represented by any one of Formulae (T-1) to (T-8), it is more preferable that one to three of T¹²¹, T¹²², T¹²³, T¹²⁴, or T¹²⁵ represents a group represented by any one of Formulae (T-1) to (T-8), and it is still more preferable that one or two of T¹²¹, T¹²², T¹²³, T¹²⁴, or T¹²⁵ represents a group represented by any one of Formulae (T-1) to (T-8). As the number of groups represented by any one of Formulae (T-1) to (T-8) increases, an effect of improving light fastness and chlorine fastness is likely to be obtained.

The substituent represented by R¹²¹, R¹²², and R¹²³ may be selected from, for example, the substituent group A. As the substituent, an alkyl group, a sulfo group, a sulfamoyl group which may have a substituent, a halogen atom, an alkoxy group which may have a substituent, an aryloxy group which may have a substituent, a heterocyclic oxy group which may have a substituent, an acyloxy group which may have a substituent, an alkylamino group which may have a substituent, an arylamino group which may have a substituent, a heterocyclic amino group which may have a substituent, an acylamino group which may have a substituent, an aminocarbonylamino group which may have a substituent, an alkoxycarbonylamino group which may have a substituent, an aryloxycarbonylamino group which may have a substituent, or an alkyl- or aryl-sulfonylamino group which may have a substituent is preferable. Among these, an alkyl group, a sulfo group, an alkylamino group which may have a substituent, or an arylamino group which may have a substituent is more preferable.

In a case where R¹²¹, R¹²², and R¹²³ represent an alkyl group, an alkyl group having 1 to 10 carbon atoms is preferable, an alkyl group having 1 to 6 carbon atoms is more preferable, and a methyl group, an ethyl group, an isopropyl group, or a tert-butyl group is still more preferable. From the viewpoint of light fastness, an ethyl group is more preferable rather than a methyl group, and an isopropyl group or a tert-butyl group is more preferable rather than an ethyl group.

It is more preferable that R¹²¹ and R¹²² represent a secondary alkyl group or a tertiary alkyl group which is substituted at the ortho position with respect to a nitrogen atom.

R¹²¹ and R¹²² may be bonded to each other to form a ring, but it is preferable that R¹²¹ and R¹²² are not bonded to each other from the viewpoint of storage stability.

It is preferable that n¹²¹ and n¹²² represent an integer of 0 to 2. It is preferable that n¹²³ represents an integer of 0 to 3.

n¹²⁴, n¹²⁵, n¹²⁶, n¹²⁷, and n¹²⁸ each independently represent 0 or 1. A group represented by any one of Formulae (T-1) to (T-8) is bonded to L¹²¹, L¹²², L¹²³, L¹²⁴, or L¹²⁵ after any one of hydrogen atoms in the formula is removed. In a case where n¹²⁴, n¹²⁵, n¹²⁶, n¹²⁷, and n¹²⁸ represent 0, the group represented by any one of Formulae (T-1) to (T-8) is bonded to a nitrogen atom.

X₁₂₁, X₁₂₂, and X₁₂₃ each independently represent CH or a nitrogen atom and preferably CH. In a case where X₁₂₁, X₁₂₂, and X₁₂₃ represent CH, a substituent may be bonded after a hydrogen atom is removed, and examples of the substituent include -(L¹²⁵)n¹²⁸-T¹²⁵ and R¹²³.

The compound represented by Formula (3) has at least two ionic hydrophilic groups, and the preferable range of the number of the ionic hydrophilic groups, and specific examples and preferable ranges thereof are the same as those of Formula (1).

In Formulae (T-1) to (T-3), in a case where R²⁰¹, R²⁰², R²⁰⁴, R²⁰⁵, R²⁰⁷, and R²⁰⁸ represent an alkyl group, the alkyl group may have a substituent.

In a case where R²⁰⁹ and R²¹⁰ represent an alkyl group or an alkoxy group, these groups may have a substituent.

In a case where each group has a substituent, the substituent may be selected from, for example, the substituent group A.

X²⁰¹ represents an oxygen atom or NR²²⁰, and R²²⁰ represents a hydrogen atom or an alkyl group which may have a substituent. As the alkyl group represented by R²²⁰, an alkyl group having 1 to 6 carbon atoms is preferable, an alkyl group having 1 to 4 carbon atoms is more preferable, and specific examples thereof include a methyl group, an ethyl group, and a propyl group.

As the alkyl group represented by R²⁰¹, R²⁰², R²⁰⁴, R²⁰⁵, R²⁰⁹, and R²¹⁰, an alkyl group having 1 to 6 carbon atoms is preferable, an alkyl group having 1 to 4 carbon atoms is more preferable, and a methyl group, an ethyl group, an isopropyl group, or a tert-butyl group is still more preferable.

In a case where X²⁰¹ represents NH, at least one of R²⁰⁹ or R²¹⁰ represents an alkyl group or an alkoxy group.

As the alkyl group represented by R²⁰⁷ and R²⁰⁸, an alkyl group having 1 to 10 carbon atoms is preferable, an alkyl group having 1 to 6 carbon atoms is more preferable, and a methyl group, an ethyl group, a propyl group, a butyl group, an isobutyl group, or a hexyl group is still more preferable.

As the alkoxy group represented by R²⁰⁹ and R²¹⁰, an alkoxy group having 1 to 6 carbon atoms is preferable, an alkoxy group having 1 to 3 carbon atoms is more preferable, and a methoxy group or an ethoxy group is still more preferable.

As the divalent linking group represented by L²⁰¹, the same divalent linking groups represented by L¹²¹, L¹²³, L¹²³, L¹²⁴, and L¹²⁵ can be used. Examples of the trivalent linking group include a triazine linking group and a cyanuric acid linking group. It is preferable that L²⁰¹ represents a divalent linking group.

The substituent represented by R²⁰³, R²⁰⁶, and R²¹¹ may be selected from, for example, the substituent group A.

p¹⁰¹ represents an integer of 0 to 3 and preferably 0 or 1. p¹⁰² and p¹⁰⁴ represents an integer of 0 to 2 and preferably 0 or 1.

Preferable aspects where the compounds represented by Formulae (T-1) and (T-3) are linked are as follows. In the preferable aspects, the compound is bonded to L¹²¹, L¹²², L¹²³, L¹²⁴, or L¹²⁵ through *.

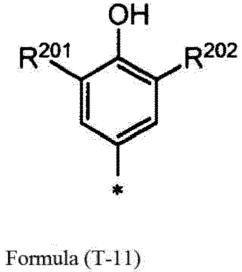

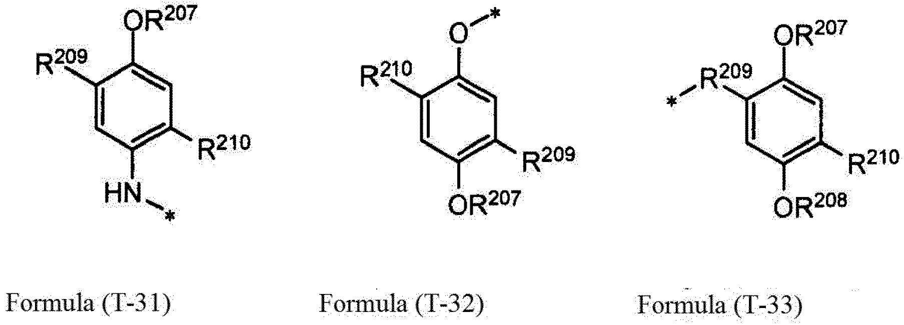

In Formula (T-4), the aryl group and the heterocyclic group represented by R²¹², and the aryl group or the heterocyclic group which is formed by R²¹² linking to X²⁰² may have a substituent.

In a case where each group has a substituent, the substituent may be selected from, for example, the substituent group A.

It is preferable that R²¹² represents an aryl group. Examples of the aryl group represented by R²¹² include a phenyl group and a naphthyl group. Among these, a phenyl group is preferable.

It is also preferable that R²¹² is linked to X²⁰² to form a heterocyclic group. Examples of the formed heterocycle include a benzotriazole ring, a triazole ring, a triazine ring, and a pyrimidine ring.

The substituent of R²¹³ may be selected from, for example, the substituent group A. p¹⁰⁵ represents an integer of 0 to 4 and preferably an integer of 0 to 2.

It is preferable that Formula (T-4) is represented by Formula (T-41), (T-42), or (T-43). A hydrogen atom represented by *1 is not removed for bonding to L¹²¹, L¹²², L¹²³, L¹²⁴, or L¹²⁵.

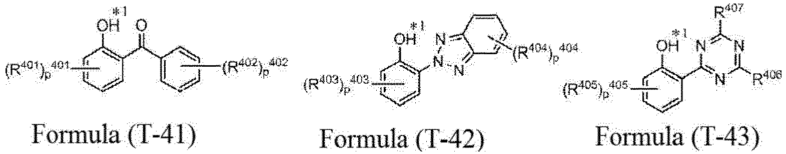

In Formula (T-41), R⁴⁰¹ and R⁴⁰² each independently represent a substituent. p⁴⁰¹ represents an integer of 0 to 4, and p⁴⁰² represents an integer of 0 to 5. In a case where p⁴⁰¹ and p⁴⁰² each independently represent an integer of 2 or more, a plurality of R⁴⁰¹'s and R⁴⁰²'s may be the same as or different from each other. A hydrogen atom represented by *1 is not removed for bonding.

In Formula (T-42), R⁴⁰³ and R⁴⁰⁴ each independently represent a substituent. p⁴⁰³ and p⁴⁰⁴ each independently represent an integer of 0 to 4. In a case where p⁴⁰³ and p⁴⁰⁴ each independently represent an integer of 2 or more, a plurality of R⁴⁰³'s and R⁴⁰⁴'s may be the same as or different from each other. A hydrogen atom represented by *1 is not removed for bonding.

In Formula (T-43), R⁴⁰⁵ represents a substituent. R⁴⁰⁶ and R⁴⁰⁷ each independently represent an aryl group or a heterocyclic group. p⁴⁰⁵ represents an integer of 0 to 4. In a case where p⁴⁰⁵ represents an integer of 2 or more, a plurality of R⁴⁰⁵'s may be the same as or different from each other. A hydrogen atom represented by *1 is not removed for bonding.

R⁴⁰¹, R⁴⁰², R⁴⁰³, R⁴⁰⁴, and R⁴⁰⁵ each independently represent a substituent. The substituent may be selected from, for example, the substituent group A.

R⁴⁰⁶ and R⁴⁰⁷ each independently represent an aryl group or a heterocyclic group. It is preferable that R⁴⁰⁶ and R⁴⁰⁷ represent a phenyl group.

p⁴⁰¹, p⁴⁰³, p⁴⁰⁴, and p⁴⁰⁵ each independently represent preferably an integer of 0 to 2. It is preferable that p⁴⁰² represents an integer of 0 to 2.

Preferable aspects where the compound represented by Formula (T-4) is linked are as follows. In the preferable aspects, the compound is bonded to L¹²¹, L¹²², L¹²³, L¹²⁴, or L¹²⁵ through *.

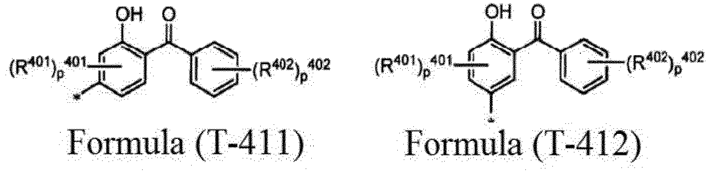

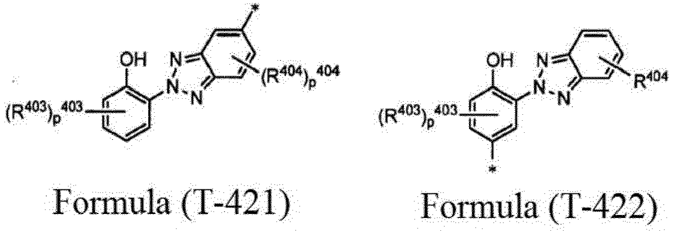

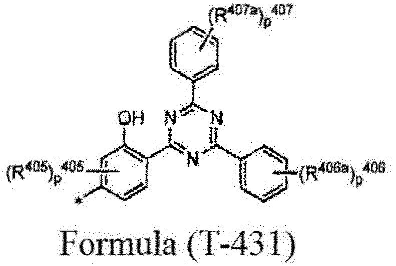

R^{406a} and R^{407a} each independently represent a substituent. R^{406a} and R^{407a} have the same preferable range as that of R⁴⁰⁵. p⁴⁰⁶ and p⁴⁰⁷ each independently represent an integer of 0 to 5. In a case where p⁴⁰⁶ and p⁴⁰⁷ each independently represent an integer of 2 or more, a plurality of R^{406a}'s and R^{407a}'s may be the same as or different from each other.

In Formula (T-5), the aryl group or the heterocyclic group represented by Ar²⁰¹ may have a substituent. In a case where each group has a substituent, the substituent may be selected from, for example, the substituent group A.

It is preferable that Ar²⁰¹ represents an aryl group. Examples of the aryl group represented by Ar²⁰¹ include a phenyl group and a naphthyl group. Among these, a phenyl group is preferable.

p¹⁰⁶ represents an integer of 1 to 3 and preferably 1 or 2.

Preferable aspects where the compound represented by Formula (T-5) is linked are as follows. In the preferable aspects, the compound is bonded to L¹²¹, L¹²², L¹²³, L¹²⁴, or L¹²⁵ through *.

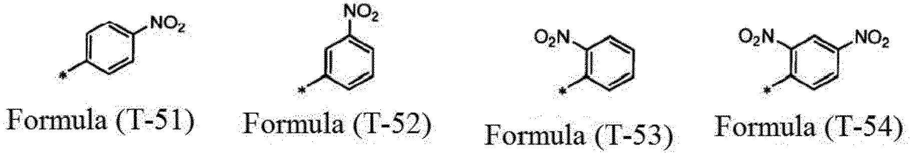

In Formula (T-6), the alkyl group and the alkoxy group represented by R²¹⁴ and the alkyl group represented by R²¹⁵ may have a substituent. In a case where each group has a substituent, the substituent may be selected from, for example, the substituent group A.

It is preferable that R²¹⁴ represents a hydrogen atom or an alkyl group. As the alkyl group represented by R²¹⁴, an alkyl group having 1 to 6 carbon atoms is preferable, an alkyl group having 1 to 4 carbon atoms is more preferable, and a methyl group, an ethyl group, a propyl group, or a butyl group is still more preferable.

As the alkyl group represented by R²¹⁵ and R²¹⁶, a branched alkyl group is preferable, and a secondary alkyl group having 3 to 10 carbon atoms or a tertiary alkyl group having 4 to 10 carbon atoms is more preferable. Specific examples of the secondary alkyl group include an isopropyl group, an s-butyl group, and a cyclohexyl group. Specific examples of the tertiary alkyl group include a tert-butyl group and a tert-amyl group. R²¹⁵ and R²¹⁶ may be bonded to each other to form a ring. In a case where the ring is formed, the number of carbon atoms in the formed ring is preferably 2 to 20 and more preferably 2 to 10. Examples of the formed ring include an aziridine ring, a piperidine ring, and a pyrrolidine ring. In particular, it is preferable that R²¹⁵ and R²¹⁶ represent tertiary alkyl group and are bonded to each other to form a piperidine ring.

It is preferable that Formula (T-6) is represented by Formula (T-61).

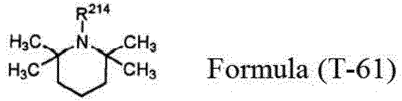

A preferable aspect where the compound represented by Formula (T-6) is linked is as follows. In the preferable aspects, the compound is bonded to L¹²¹, L¹²², L¹²³, L¹²⁴, or L¹²⁵ through *.

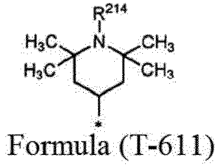

In Formula (T-7), the substituent of R²¹⁷ may be selected from, for example, the substituent group A.

p¹⁰⁷ represents an integer of 0 to 4 and preferably an integer of 0 to 2. p¹⁰⁸ represents 2 or 3.

In Formula (T-8), the alkyl group, the aryl group, and the heterocyclic group represented by R²¹⁸ and R²¹⁹ may have a substituent.

It is preferable that R²¹⁸ and R²¹⁹ represent a hydrogen atom, an alkyl group, or an aryl group. As the alkyl group represented by R²¹⁸ and R²¹⁹, an alkyl group having 1 to 6 carbon atoms is preferable, an alkyl group having 1 to 4 carbon atoms is more preferable, and a methyl group, an ethyl group, a propyl group, or a butyl group is still more preferable. Examples of the aryl group represented by R²¹⁸ and R²¹⁹ include a phenyl group and a naphthyl group. Among these, a phenyl group is preferable.

R²¹⁸ and R²¹⁹ may be bonded to each other to form a ring, and this ring may include a heteroatom such as a nitrogen atom.

Preferable aspects where the compound represented by Formula (T-8) is linked are as follows. In the preferable aspects, the compound is bonded to L¹²¹, L¹²², L¹²³, L¹²⁴, or L¹²⁵ through *.

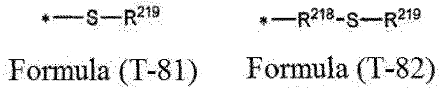

It is preferable that the compound A is a compound represented by Formula (3).

It is preferable that the compound A is represented by Formula (3) and that at least one of T¹²¹, T¹²², T¹²³, T¹²⁴, or T¹²⁵ in Formula (3) represents a group represented by Formula (T-2), (T-4), (T-5), (T-6), or (T-8).

It is more preferable that the compound A is represented by Formula (3) and that at least one of T¹²¹, T¹²², T¹²³, T¹²⁴, or T¹²⁵ in Formula (3) represents a group represented by Formula (T-4).

It is still preferable that the compound A is represented by Formula (3) and that at least one of T¹²¹, T¹²², T¹²³, T¹²⁴, or T¹²⁵ in Formula (3) represents a group represented by Formula (T-41), (T-42), or (T-43).

Hereinafter, specific examples of the compound represented by any one of Formulae (1) to (3) will be shown. In the present invention, the compound represented by any one of Formulae (1) to (3) is not limited to the specific examples. Me represents a methyl group, Et represents an ethyl group, tBu represents a tert-butyl group, and Ph represents a phenyl group. The number of sulfo groups in each of the compounds is shown as "Number of Sulfo Groups".

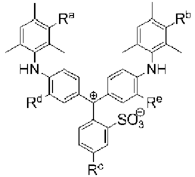

| Compound Name | R^{a} | R^{b} | R^{c} | R^{d} | R^{e} | Number of Sulfo Groups |
|---|---|---|---|---|---|---|
| Compound 001-1 | SO₃Na | H | H | H | H | 2 |
| Compound 001-2 | SO₃Na | SO₃Na | H | H | H | 3 |
| Compound 001-3 | SO₃Na | SO₃Na | H | SO₃Na | H | 4 |
| Compound 001-4 | SO₃Na | SO₃Na | H | SO₃Na | SO₃Na | 5 |
| Compound 001-5 | H | H | SO₃Na | H | H | 2 |
| Compound 001-6 | SO₃Na | H | SO₃Na | H | H | 3 |
| Compound 001-7 | SO₃Na | SO₃Na | SO₃Na | H | H | 4 |
| Compound 001-8 | SO₃Na | SO₃Na | SO₃Na | SO₃Na | H | 5 |
| Compound 001-9 | SO₃Na | SO₃Na | SO₃Na | SO₃Na | SO₃Na | 6 |

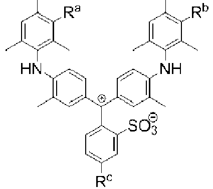

| Compound Name | R^{a} | R^{b} | R^{c} | Number of Sulfo Groups |
|---|---|---|---|---|
| Compound 002-1 | SO₃Na | H | H | 2 |
| Compound 002-2 | SO₃Na | SO₃Na | H | 3 |
| Compound 002-3 | H | H | SO₃Na | 2 |
| Compound 002-4 | SO₃Na | H | SO₃Na | 3 |
| Compound 002-5 | SO₃Na | SO₃Na | SO₃Na | 4 |

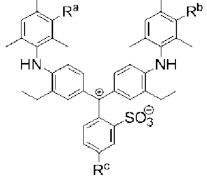

| Compound Name | R^{a} | R^{b} | R^{c} | Number of Sulfo Groups |
|---|---|---|---|---|
| Compound 003-1 | SO₃Na | H | H | 2 |
| Compound 003-2 | SO₃Na | SO₃Na | H | 3 |
| Compound 003-3 | H | H | SO₃Na | 2 |
| Compound 003-4 | SO₃Na | H | SO₃Na | 3 |
| Compound 003-5 | SO₃Na | SO₃Na | SO₃Na | 4 |

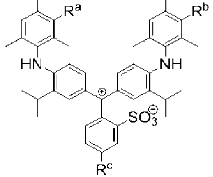

| Compound Name | R^{a} | R^{b} | R^{c} | Number of Sulfo Groups |
|---|---|---|---|---|
| Compound 004-1 | SO₃Na | H | H | 2 |
| Compound 004-2 | SO₃Na | SO₃Na | H | 3 |
| Compound 004-3 | H | H | SO₃Na | 2 |
| Compound 004-4 | SO₃Na | H | SO₃Na | 3 |
| Compound 004-5 | SO₃Na | SO₃Na | SO₃Na | 4 |

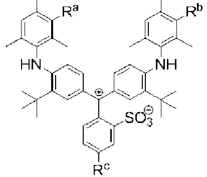

| Compound Name | R^{a} | R^{b} | R^{c} | Number of Sulfo Groups |
|---|---|---|---|---|
| Compound 005-1 | SO₃Na | H | H | 2 |
| Compound 005-2 | SO₃Na | SO₃Na | H | 3 |
| Compound 005-3 | H | H | SO₃Na | 2 |
| Compound 005-4 | SO₃Na | H | SO₃Na | 3 |
| Compound 005-5 | SO₃Na | SO₃Na | SO₃Na | 4 |

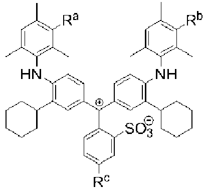

| Compound Name | R^{a} | R^{b} | R^{c} | Number of Sulfo Groups |
|---|---|---|---|---|
| Compound 006-1 | SO₃Na | H | H | 2 |
| Compound 006-2 | SO₃Na | SO₃Na | H | 3 |
| Compound 006-3 | H | H | SO₃Na | 2 |
| Compound 006-4 | SO₃Na | H | SO₃Na | 3 |
| Compound 006-5 | SO₃Na | SO₃Na | SO₃Na | 4 |

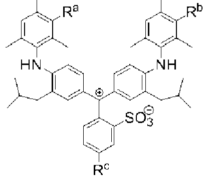

| Compound Name | R^{a} | R^{b} | R^{c} | Number of Sulfo Groups |
|---|---|---|---|---|
| Compound 007-1 | SO₃Na | H | H | 2 |
| Compound 007-2 | SO₃Na | SO₃Na | H | 3 |
| Compound 007-3 | H | H | SO₃Na | 2 |
| Compound 007-4 | SO₃Na | H | SO₃Na | 3 |
| Compound 007-5 | SO₃Na | SO₃Na | SO₃Na | 4 |

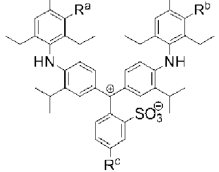

| Compound Name | R^{a} | R^{b} | R^{c} | Number of Sulfo Groups |
|---|---|---|---|---|
| Compound 008-1 | SO₃Na | H | H | 2 |
| Compound 008-2 | SO₃Na | SO₃Na | H | 3 |
| Compound 008-3 | H | H | SO₃Na | 2 |
| Compound 008-4 | SO₃Na | H | SO₃Na | 3 |
| Compound 008-5 | SO₃Na | SO₃Na | SO₃Na | 4 |

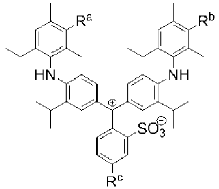

| Compound Name | R^{a} | R^{b} | R^{c} | Number of Sulfo Groups |
|---|---|---|---|---|
| Compound 009-1 | SO₃Na | H | H | 2 |
| Compound 009-2 | SO₃Na | SO₃Na | H | 3 |
| Compound 009-3 | H | H | SO₃Na | 2 |
| Compound 009-4 | SO₃Na | H | SO₃Na | 3 |
| Compound 009-5 | SO₃Na | SO₃Na | SO₃Na | 4 |

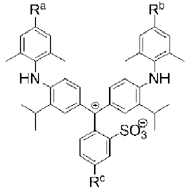

| Compound Name | R^{a} | R^{b} | R^{c} | Number of Sulfo Groups |
|---|---|---|---|---|
| Compound 010-1 | SO₃Na | H | H | 2 |
| Compound 010-2 | SO₃Na | SO₃Na | H | 3 |
| Compound 010-3 | H | H | SO₃Na | 2 |
| Compound 010-4 | SO₃Na | H | SO₃Na | 3 |
| Compound 010-5 | SO₃Na | SO₃Na | SO₃Na | 4 |

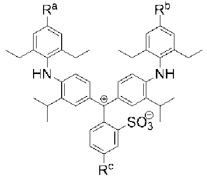

| Compound Name | R^{a} | R^{b} | R^{c} | Number of Sulfo Groups |
|---|---|---|---|---|
| Compound 011-1 | SO₃Na | H | H | 2 |
| Compound 011-2 | SO₃Na | SO₃Na | H | 3 |
| Compound 011-3 | H | H | SO₃Na | 2 |
| Compound 011-4 | SO₃Na | H | SO₃Na | 3 |
| Compound 011-5 | SO₃Na | SO₃Na | SO₃Na | 4 |

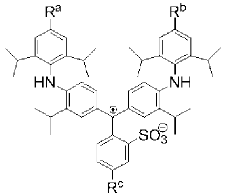

| Compound Name | R^{a} | R^{b} | R^{c} | Number of Sulfo Groups |
|---|---|---|---|---|
| Compound 012-1 | SO₃Na | H | H | 2 |
| Compound 012-2 | SO₃Na | SO₃Na | H | 3 |
| Compound 012-3 | H | H | SO₃Na | 2 |
| Compound 012-4 | SO₃Na | H | SO₃Na | 3 |
| Compound 012-5 | SO₃Na | SO₃Na | SO₃Na | 4 |

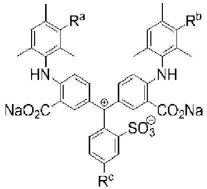

| Compound Name | R^{a} | R^{b} | R^{c} | Number of Sulfo Groups |
|---|---|---|---|---|
| Compound 013-1 | SO₃Na | H | H | 2 |
| Compound 013-2 | SO₃Na | SO₃Na | H | 3 |
| Compound 013-3 | H | H | SO₃Na | 2 |
| Compound 013-4 | SO₃Na | H | SO₃Na | 3 |
| Compound 013-5 | SO₃Na | SO₃Na | SO₃Na | 4 |

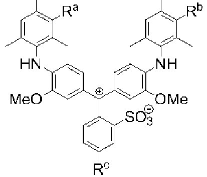

| Compound Name | R^{a} | R^{b} | R^{c} | Number of Sulfo Groups |
|---|---|---|---|---|
| Compound 014-1 | SO₃Na | H | H | 2 |
| Compound 014-2 | SO₃Na | SO₃Na | H | 3 |
| Compound 014-3 | H | H | SO₃Na | 2 |
| Compound 014-4 | SO₃Na | H | SO₃Na | 3 |
| Compound 014-5 | SO₃Na | SO₃Na | SO₃Na | 4 |

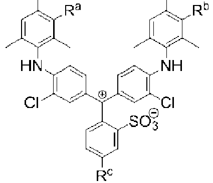

| Compound Name | R^{a} | R^{b} | R^{c} | Number of Sulfo Groups |
|---|---|---|---|---|
| Compound 015-1 | SO₃Na | H | H | 2 |
| Compound 015-2 | SO₃Na | SO₃Na | H | 3 |
| Compound 015-3 | H | H | SO₃Na | 2 |
| Compound 015-4 | SO₃Na | H | SO₃Na | 3 |
| Compound 015-5 | SO₃Na | SO₃Na | SO₃Na | 4 |

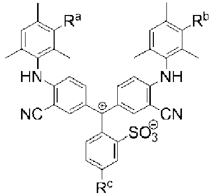

| Compound Name | R^{a} | R^{b} | R^{c} | Number of Sulfo Groups |
|---|---|---|---|---|
| Compound 016-1 | SO₃Na | H | H | 2 |
| Compound 016-2 | SO₃Na | SO₃Na | H | 3 |
| Compound 016-3 | H | H | SO₃Na | 2 |
| Compound 016-4 | SO₃Na | H | SO₃Na | 3 |
| Compound 016-5 | SO₃Na | SO₃Na | SO₃Na | 4 |

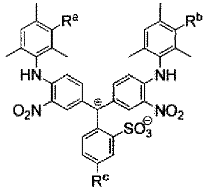

| Compound Name | R^{a} | R^{b} | R^{c} | Number of Sulfo Groups |
|---|---|---|---|---|
| Compound 017-1 | SO₃Na | H | H | 2 |
| Compound 017-2 | SO₃Na | SO₃Na | H | 3 |
| Compound 017-3 | H | H | SO₃Na | 2 |
| Compound 017-4 | SO₃Na | H | SO₃Na | 3 |
| Compound 017-5 | SO₃Na | SO₃Na | SO₃Na | 4 |

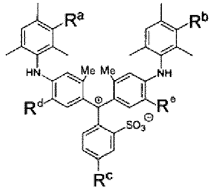

| Compound Name | R^{a} | R^{b} | R^{c} | R^{d} | R^{e} | Number of Sulfo Groups |
|---|---|---|---|---|---|---|
| Compound 018-1 | SO₃Na | H | H | H | H | 2 |
| Compound 018-2 | SO₃Na | SO₃Na | H | H | H | 3 |
| Compound 018-3 | SO₃Na | SO₃Na | H | SO₃Na | H | 4 |
| Compound 018-4 | SO₃Na | SO₃Na | H | SO₃Na | SO₃Na | 5 |
| Compound 018-5 | H | H | SO₃Na | H | H | 2 |
| Compound 018-6 | SO₃Na | H | SO₃Na | H | H | 3 |
| Compound 018-7 | SO₃Na | SO₃Na | SO₃Na | H | H | 4 |
| Compound 018-8 | SO₃Na | SO₃Na | SO₃Na | SO₃Na | H | 5 |
| Compound 018-9 | SO₃Na | SO₃Na | SO₃Na | SO₃Na | SO₃Na | 6 |

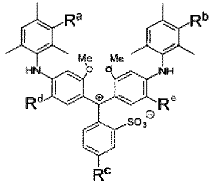

| Compound Name | R^{a} | R^{b} | R^{c} | R^{d} | R^{e} | Number of Sulfo Groups |
|---|---|---|---|---|---|---|
| Compound 019-1 | SO₃Na | H | H | H | H | 2 |
| Compound 019-2 | SO₃Na | SO₃Na | H | H | H | 3 |
| Compound 019-3 | SO₃Na | SO₃Na | H | SO₃Na | H | 4 |
| Compound 019-4 | SO₃Na | SO₃Na | H | SO₃Na | SO₃Na | 5 |
| Compound 019-5 | H | H | SO₃Na | H | H | 2 |
| Compound 019-6 | SO₃Na | H | SO₃Na | H | H | 3 |
| Compound 019-7 | SO₃Na | SO₃Na | SO₃Na | H | H | 4 |
| Compound 019-8 | SO₃Na | SO₃Na | SO₃Na | SO₃Na | H | 5 |
| Compound 019-9 | SO₃Na | SO₃Na | SO₃Na | SO₃Na | SO₃Na | 6 |

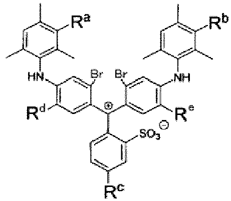

| Compound Name | R^{a} | R^{b} | R^{c} | R^{d} | R^{e} | Number of Sulfo Groups |
|---|---|---|---|---|---|---|
| Compound 020-1 | SO₃Na | H | H | H | H | 2 |
| Compound 020-2 | SO₃Na | SO₃Na | H | H | H | 3 |
| Compound 020-3 | SO₃Na | SO₃Na | H | SO₃Na | H | 4 |
| Compound 020-4 | SO₃Na | SO₃Na | H | SO₃Na | SO₃Na | 5 |
| Compound 020-5 | H | H | SO₃Na | H | H | 2 |
| Compound 020-6 | SO₃Na | H | SO₃Na | H | H | 3 |
| Compound 020-7 | SO₃Na | SO₃Na | SO₃Na | H | H | 4 |
| Compound 020-8 | SO₃Na | SO₃Na | SO₃Na | SO₃Na | H | 5 |
| Compound 020-9 | SO₃Na | SO₃Na | SO₃Na | SO₃Na | SO₃Na | 6 |

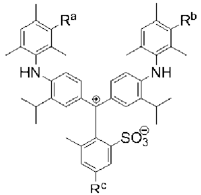

| Compound Name | R^{a} | R^{b} | R^{c} | Number of Sulfo Groups |
|---|---|---|---|---|
| Compound 021-1 | SO₃Na | H | H | 2 |
| Compound 021-2 | SO₃Na | SO₃Na | H | 3 |
| Compound 021-3 | H | H | SO₃Na | 2 |
| Compound 021-4 | SO₃Na | H | SO₃Na | 3 |
| Compound 021-5 | SO₃Na | SO₃Na | SO₃Na | 4 |

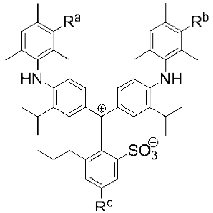

| Compound Name | R^{a} | R^{b} | R^{c} | Number of Sulfo Groups |
|---|---|---|---|---|
| Compound 022-1 | SO₃Na | H | H | 2 |
| Compound 022-2 | SO₃Na | SO₃Na | H | 3 |
| Compound 022-3 | H | H | SO₃Na | 2 |
| Compound 022-4 | SO₃Na | H | SO₃Na | 3 |
| Compound 022-5 | SO₃Na | SO₃Na | SO₃Na | 4 |

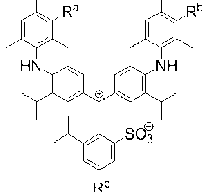

| Compound Name | R^{a} | R^{b} | R^{c} | Number of Sulfo Groups |
|---|---|---|---|---|
| Compound 023-1 | SO₃Na | H | H | 2 |
| Compound 023-2 | SO₃Na | SO₃Na | H | 3 |
| Compound 023-3 | H | H | SO₃Na | 2 |
| Compound 023-4 | SO₃Na | H | SO₃Na | 3 |
| Compound 023-5 | SO₃Na | SO₃Na | SO₃Na | 4 |

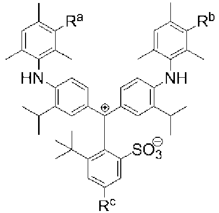

| Compound Name | R^{a} | R^{b} | R^{c} | Number of Sulfo Groups |
|---|---|---|---|---|
| Compound 024-1 | SO₃Na | H | H | 2 |
| Compound 024-2 | SO₃Na | SO₃Na | H | 3 |
| Compound 024-3 | H | H | SO₃Na | 2 |
| Compound 024-4 | SO₃Na | H | SO₃Na | 3 |
| Compound 024-5 | SO₃Na | SO₃Na | SO₃Na | 4 |

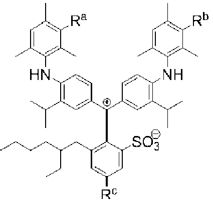

| Compound Name | R^{a} | R^{b} | R^{c} | Number of Sulfo Groups |
|---|---|---|---|---|
| Compound 025-1 | SO₃Na | H | H | 2 |
| Compound 025-2 | SO₃Na | SO₃Na | H | 3 |
| Compound 025-3 | H | H | SO₃Na | 2 |
| Compound 025-4 | SO₃Na | H | SO₃Na | 3 |
| Compound 025-5 | SO₃Na | SO₃Na | SO₃Na | 4 |

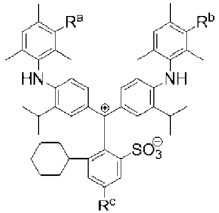

| Compound Name | R^{a} | R^{b} | R^{c} | Number of Sulfo Groups |
|---|---|---|---|---|
| Compound 026-1 | SO₃Na | H | H | 2 |
| Compound 026-2 | SO₃Na | SO₃Na | H | 3 |
| Compound 026-3 | H | H | SO₃Na | 2 |
| Compound 026-4 | SO₃Na | H | SO₃Na | 3 |
| Compound 026-5 | SO₃Na | SO₃Na | SO₃Na | 4 |

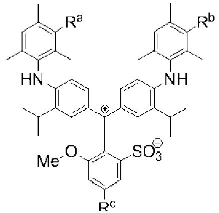

| Compound Name | R^{a} | R^{b} | R^{c} | Number of Sulfo Groups |
|---|---|---|---|---|
| Compound 027-1 | SO₃Na | H | H | 2 |
| Compound 027-2 | SO₃Na | SO₃Na | H | 3 |
| Compound 027-3 | H | H | SO₃Na | 2 |
| Compound 027-4 | SO₃Na | H | SO₃Na | 3 |
| Compound 027-5 | SO₃Na | SO₃Na | SO₃Na | 4 |

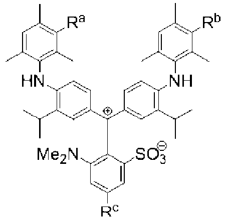

| Compound Name | R^{a} | R^{b} | R^{c} | Number of Sulfo Groups |
|---|---|---|---|---|
| Compound 028-1 | SO₃Na | H | H | 2 |
| Compound 028-2 | SO₃Na | SO₃Na | H | 3 |
| Compound 028-3 | H | H | SO₃Na | 2 |
| Compound 028-4 | SO₃Na | H | SO₃Na | 3 |
| Compound 028-5 | SO₃Na | SO₃Na | SO₃Na | 4 |

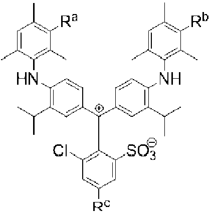

| Compound Name | R^{a} | R^{b} | R^{c} | Number of Sulfo Groups |
|---|---|---|---|---|
| Compound 029-1 | SO₃Na | H | H | 2 |
| Compound 029-2 | SO₃Na | SO₃Na | H | 3 |
| Compound 029-3 | H | H | SO₃Na | 2 |
| Compound 029-4 | SO₃Na | H | SO₃Na | 3 |
| Compound 029-5 | SO₃Na | SO₃Na | SO₃Na | 4 |

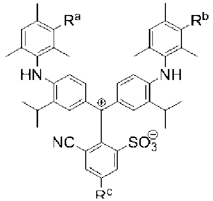

| Compound Name | R^{a} | R^{b} | R^{c} | Number of Sulfo Groups |
|---|---|---|---|---|
| Compound 030-1 | SO₃Na | H | H | 2 |
| Compound 030-2 | SO₃Na | SO₃Na | H | 3 |
| Compound 030-3 | H | H | SO₃Na | 2 |
| Compound 030-4 | SO₃Na | H | SO₃Na | 3 |
| Compound 030-5 | SO₃Na | SO₃Na | SO₃Na | 4 |

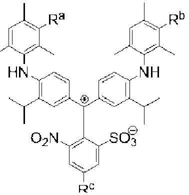

| Compound Name | R^{a} | R^{b} | R^{c} | Number of Sulfo Groups |
|---|---|---|---|---|
| Compound 031-1 | SO₃Na | H | H | 2 |
| Compound 031-2 | SO₃Na | SO₃Na | H | 3 |
| Compound 031-3 | H | H | SO₃Na | 2 |
| Compound 031-4 | SO₃Na | H | SO₃Na | 3 |
| Compound 031-5 | SO₃Na | SO₃Na | SO₃Na | 4 |

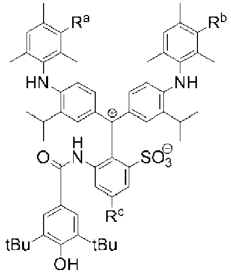

| Compound Name | R^{a} | R^{b} | R^{c} | Number of Sulfo Groups |
|---|---|---|---|---|
| Compound 032-1 | SO₃Na | H | H | 2 |
| Compound 032-2 | SO₃Na | SO₃Na | H | 3 |
| Compound 032-3 | H | H | SO₃Na | 2 |
| Compound 032-4 | SO₃Na | H | SO₃Na | 3 |
| Compound 032-5 | SO₃Na | SO₃Na | SO₃Na | 4 |

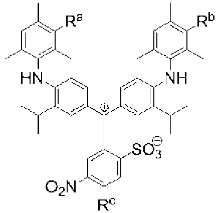

| Compound Name | R^{a} | R^{b} | R^{c} | Number of Sulfo Groups |
|---|---|---|---|---|
| Compound 033-1 | SO₃Na | H | H | 2 |
| Compound 033-2 | SO₃Na | SO₃Na | H | 3 |
| Compound 033-3 | H | H | SO₃Na | 2 |
| Compound 033-4 | SO₃Na | H | SO₃Na | 3 |
| Compound 033-5 | SO₃Na | SO₃Na | SO₃Na | 4 |

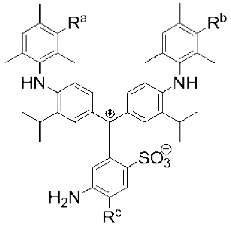

| Compound Name | R^{a} | R^{b} | R^{c} | Number of Sulfo Groups |
|---|---|---|---|---|
| Compound 034-1 | SO₃Na | H | H | 2 |
| Compound 034-2 | SO₃Na | SO₃Na | H | 3 |
| Compound 034-3 | H | H | SO₃Na | 2 |
| Compound 034-4 | SO₃Na | H | SO₃Na | 3 |
| Compound 034-5 | SO₃Na | SO₃Na | SO₃Na | 4 |

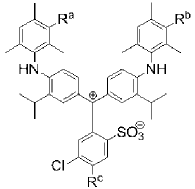

| Compound Name | R^{a} | R^{b} | R^{c} | Number of Sulfo Groups |
|---|---|---|---|---|
| Compound 035-1 | SO₃Na | H | H | 2 |
| Compound 035-2 | SO₃Na | SO₃Na | H | 3 |
| Compound 035-3 | H | H | SO₃Na | 2 |
| Compound 035-4 | SO₃Na | H | SO₃Na | 3 |
| Compound 035-5 | SO₃Na | SO₃Na | SO₃Na | 4 |

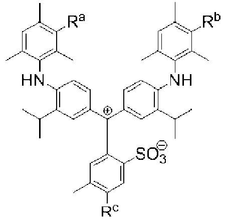

| Compound Name | R^{a} | R^{b} | R^{c} | Number of Sulfo Groups |
|---|---|---|---|---|
| Compound 036-1 | SO₃Na | H | H | 2 |
| Compound 036-2 | SO₃Na | SO₃Na | H | 3 |
| Compound 036-3 | H | H | SO₃Na | 2 |
| Compound 036-4 | SO₃Na | H | SO₃Na | 3 |
| Compound 036-5 | SO₃Na | SO₃Na | SO₃Na | 4 |

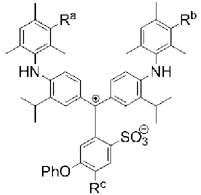

| Compound Name | R^{a} | R^{b} | R^{c} | Number of Sulfo Groups |
|---|---|---|---|---|
| Compound 037-1 | SO₃Na | H | H | 2 |
| Compound 037-2 | SO₃Na | SO₃Na | H | 3 |
| Compound 037-3 | H | H | SO₃Na | 2 |
| Compound 037-4 | SO₃Na | H | SO₃Na | 3 |
| Compound 037-5 | SO₃Na | SO₃Na | SO₃Na | 4 |

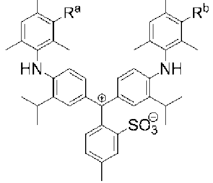

| Compound Name | R^{a} | R^{b} | Number of Sulfo Groups |
|---|---|---|---|
| Compound 137-1 | SO₃Na | H | 2 |
| Compound 137-2 | SO₃Na | SO₃Na | 3 |

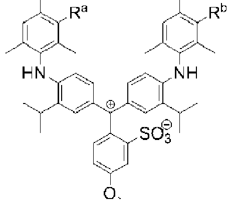

| Compound Name | R^{a} | R^{b} | Number of Sulfo Groups |
|---|---|---|---|
| Compound 038-1 | SO₃Na | H | 2 |
| Compound 038-2 | SO₃Na | SO₃Na | 3 |

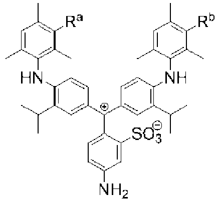

| Compound Name | R^{a} | R^{b} | Number of Sulfo Groups |
|---|---|---|---|
| Compound 039-1 | SO₃Na | H | 2 |
| Compound 039-2 | SO₃Na | SO₃Na | 3 |

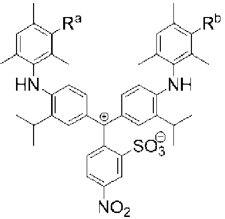

| Compound Name | R^{a} | R^{b} | Number of Sulfo Groups |
|---|---|---|---|
| Compound 040-1 | SO₃Na | H | 2 |
| Compound 040-2 | SO₃Na | SO₃Na | 3 |

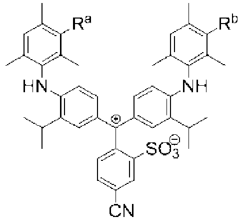

| Compound Name | R^{a} | R^{b} | Number of Sulfo Groups |
|---|---|---|---|
| Compound 041-1 | SO₃Na | H | 2 |
| Compound 041-2 | SO₃Na | SO₃Na | 3 |

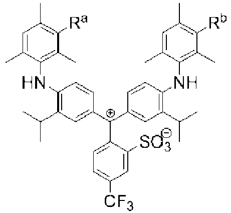

| Compound Name | R^{a} | R^{b} | Number of Sulfo Groups |
|---|---|---|---|
| Compound 042-1 | SO₃Na | H | 2 |
| Compound 042-2 | SO₃Na | SO₃Na | 3 |

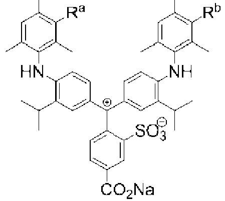

| Compound Name | R^{a} | R^{b} | Number of Sulfo Groups |
|---|---|---|---|
| Compound 043-1 | SO₃Na | H | 2 |
| Compound 043-2 | SO₃Na | SO₃Na | 3 |

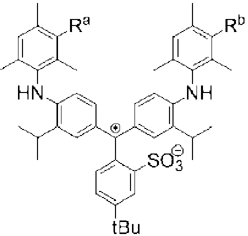

| Compound Name | R^{a} | R^{b} | Number of Sulfo Groups |
|---|---|---|---|
| Compound 044-1 | SO₃Na | H | 2 |
| Compound 044-2 | SO₃Na | SO₃Na | 3 |

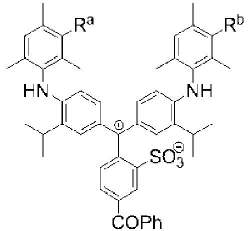

| Compound Name | R^{a} | R^{b} | Number of Sulfo Groups |
|---|---|---|---|
| Compound 045-1 | SO₃Na | H | 2 |
| Compound 045-2 | SO₃Na | SO₃Na | 3 |

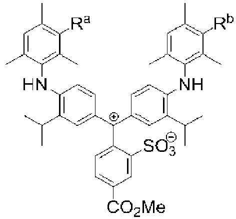

| Compound Name | R^{a} | R^{b} | Number of Sulfo Groups |
|---|---|---|---|
| Compound 046-1 | SO₃M | H | 2 |
| Compound 046-2 | SO₃M | SO₃M | 3 |

| | | | |
|---|---|---|---|
| M=Na/Li (50 mol%/50 mol%) | | | |

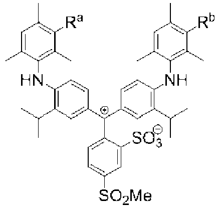

| Compound Name | R^{a} | R^{b} | Number of Sulfo Groups |
|---|---|---|---|
| Compound 047-1 | SO₃Na | H | 2 |
| Compound 047-2 | SO₃Na | SO₃Na | 3 |

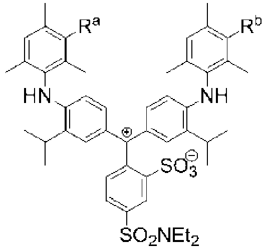

| Compound Name | R^{a} | R^{b} | Number of Sulfo Groups |
|---|---|---|---|
| Compound 048-1 | SO₃K | H | 2 |
| Compound 048-2 | SO₃K | SO₃K | 3 |

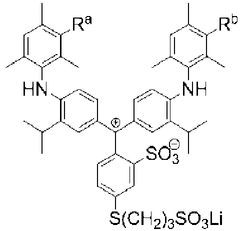

| Compound Name | R^{a} | R^{b} | Number of Sulfo Groups |
|---|---|---|---|
| Compound 049-1 | SO₃Li | H | 2 |
| Compound 049-2 | SO₃Li | SO₃Li | 3 |

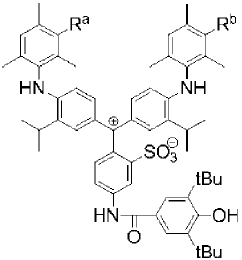

| Compound Name | R^{a} | R^{b} | Number of Sulfo Groups |
|---|---|---|---|
| Compound 050-1 | SO₃Li | H | 2 |
| Compound 050-2 | SO₃Li | SO₃Li | 3 |

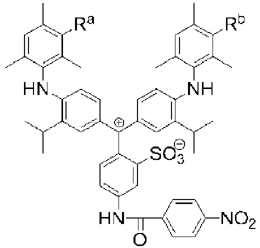

| Compound Name | R^{a} | R^{b} | Number of Sulfo Groups |
|---|---|---|---|
| Compound 051-1 | SO₃Li | H | 2 |
| Compound 051-2 | SO₃Li | SO₃Li | 3 |

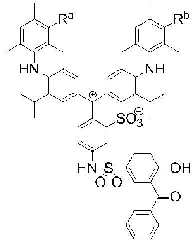

| Compound Name | R^{a} | R^{b} | Number of Sulfo Groups |
|---|---|---|---|
| Compound 052-1 | SO₃Li | H | 2 |
| Compound 052-2 | SO₃Li | SO₃Li | 3 |

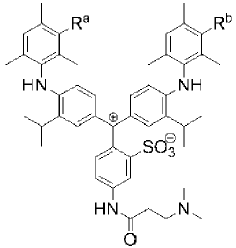

| Compound Name | R^{a} | R^{b} | Number of Sulfo Groups |
|---|---|---|---|
| Compound 053-1 | SO₃Li | H | 2 |
| Compound 053-2 | SO₃Li | SO₃Li | 3 |

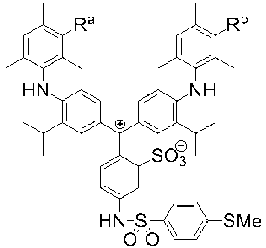

| Compound Name | R^{a} | R^{b} | Number of Sulfo Groups |
|---|---|---|---|
| Compound 054-1 | SO₃Li | H | 2 |
| Compound 054-2 | SO₃Li | SO₃Li | 3 |

### [Compound B]

The coloring composition according to the present invention includes a compound B in which any one of hydrogen atoms in the compound A is substituted with an ionic hydrophilic group.

Specific examples of the compound B include the same compounds as the specific examples of the compound A, and compounds in which any one of hydrogen atoms in the compounds of the specific examples of the compound A is substituted with an ionic hydrophilic group.

The compound B is a compound represented by any one of Formulae (1) to (3).

### [Synthesis Method]

A method of synthesizing the compound represented by any one of Formulae (1) to (3) will be described.

The compound represented by any one of Formulae (1) to (3) can be synthesized using a well-known method of synthesizing a triarylmethane dye of the related art. For example, the compound represented by Formula (1) or (2) can be obtained by causing a condensation reaction to occur using two equivalents of an aniline derivative and one equivalent of a benzaldehyde derivative and then oxidizing the obtained condensate. The compound represented by Formula (3) may be synthesized as described above by condensing an aniline derivative into which a substituent is introduced in advance and/or a benzaldehyde derivative, or may be synthesized by synthesizing a triarylmethane compound using a well-known synthesis method and then introducing a substituent thereinto through an addition reaction or the like. In the latter case, a triarylmethane compound may be used.

The method of manufacturing the compound represented by any one of Formulae (1) to (3) is not limited to the above-described methods because the compound represented by any one of Formulae (1) to (3) can be synthesized using a well-known manufacturing method.

### General Method of Synthesizing Compound Represented by Formula (1)

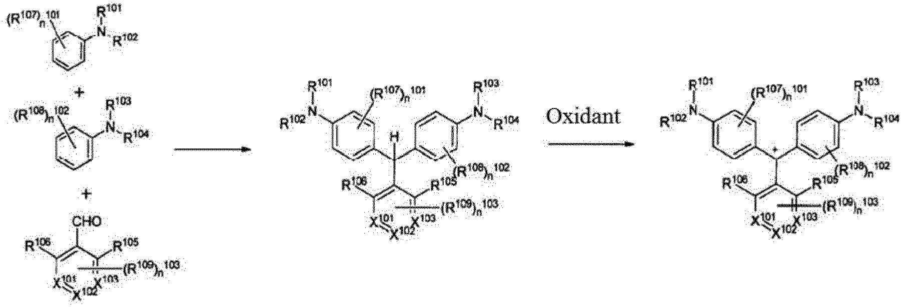

The respective symbols in the formulae are as described above.

### General Method of Synthesizing Compound Represented by Formula (2)

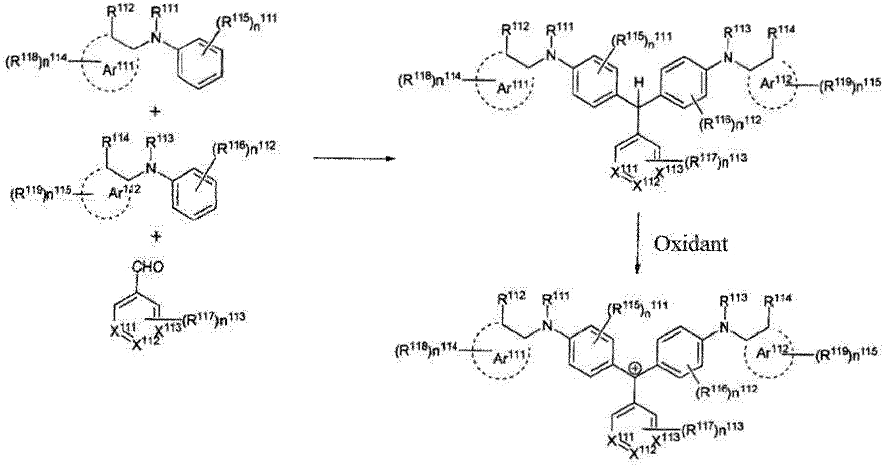

The respective symbols in the formulae are as described above.

A method of introducing a sulfo group into the triarylmethane dye will be described.

Examples of the method of introducing a sulfo group into the triarylmethane dye include the following methods (1) to (3). A combination of the methods (1) to (3) may also be used.
(1) A method of synthesizing a triarylmethane skeleton using a sulfonated material
(2) A method of causing the triarylmethane dye to react with a sulfonating agent for sulfonation
(3) A method of introducing a sulfo group into the triarylmethane dye by causing the triarylmethane dye to react with a material having a sulfo group

The method (2) will be described.

As the sulfonating agent, for example, concentrated sulfuric acid, fuming sulfuric acid, or amidosulfuric acid can be used alone or in combination. By appropriately controlling the kind of the sulfonating agent to be used, the amount of the sulfonating agent used, the reaction temperature, and the reaction time, different numbers of sulfo groups can be introduced.

### [Content Mass Ratio of Compound A to Compound B]

A content mass ratio (compound A:compound B) of the compound A to the compound B in the coloring composition according to the present invention is 99.99:0.01 to 0.01:99.99 and preferably 99:1 to 1:99.

In addition, in the coloring composition according to the present invention, the content of the compound B is higher than the content of the compound A. Regarding solubility in a solvent used in the coloring composition according to the present invention, the solubility of the compound B is higher than that of the compound A. Therefore, in a case where the content of the compound B is higher than that of the compound A in the coloring composition, storage stability is excellent.

A method of preparing the coloring composition according to the present invention will be described.

The coloring composition according to the present invention can be prepared by mixing the compound A and the compound B with a solvent and the like. In a mixing method, the mixing order or the like is not particularly limited. For example, mixing methods (i) to (iv) can be used.
(i) A solvent and the like are added to a mixture of the compound A and the compound B
(ii) A coloring composition including the compound A and the compound B are mixed with each other, and a predetermined solvent and the like are added to the mixture
(iii) The compound A and a coloring composition including the compound B are mixed with each other, and a predetermined solvent and the like are added to the mixture
(iv) A coloring composition including the compound A and a coloring composition including the compound B are mixed with each other, and a predetermined solvent and the like are added to the mixture

The coloring composition according to the present invention may consist of only the compound represented by any one of Formulae (1) to (3) as the colorant but may further include other colorants within a range where the effects of the present invention do not deteriorate. Examples of the other colorants which may be used in combination with the compound represented by any one of Formulae (1) to (3) or the salt thereof include well-known colorants, for example, dyes described in pp. 33 to 121 and pigments described in pp. 124 to 130 of "Dyeing Note" (Vol. 24, published by Shikisensha Co., Ltd.; hereinafter, the same shall be applied).

The content of the compound (the total content of the compound A and the compound B) represented by any one of Formulae (1) to (3) in the coloring composition is preferably 1 to 20 mass% and more preferably 1 to 10 mass%. By adjusting the content of the compound represented by any one of Formulae (1) to (3) in the coloring composition to be 1 mass% or higher, the printing density of ink on a recording medium during printing can be improved, and a required image density can be secured. In addition, by adjusting the total content of the compound represented by any one of Formulae (1) to (3) in the coloring composition to be 20 mass% or lower, in a case where the coloring composition is used in an ink jet method, the jettability is excellent, and an effect of preventing the clogging or the like of an ink jet nozzle can be obtained.

In general, the coloring composition according to the present invention includes a solvent in addition to the compound represented by any one of Formulae (1) to (3). The kind and amount of the solvent may vary depending on the kind, dyeing concentration, and dyeing method of the compound represented by any one of Formulae (1) to (3). However, the content of the solvent in the coloring composition is preferably 40 mass% or higher with respect to the total mass of the coloring composition. It is preferable that the solvent includes water, and the content of water in the solvent is preferably 50 mass% or higher with respect to the total mass of the solvent. In addition, the content of water in the coloring composition is preferably 30 mass% or higher with respect to the total mass of the coloring composition.

Examples of the recording medium for printing the coloring composition according to the present invention thereon include various fabrics, papers, coated papers on which an ink absorbing layer is formed, and plastic films, and an ink which is suitable for performing ink jet recording on each of the recording mediums has been performed.

The coloring composition according to the present invention can be used for, for example, a coloring composition for dyeing fabric (coloring composition for textile printing), an ink jet recording ink for forming an image on paper, a color toner, or a resist for a color filter. In particular, the coloring composition according to the present invention is suitable as a coloring composition for dyeing fabric.

### [Coloring Composition for Dyeing and Dyeing Method]

It is preferable that the coloring composition for dyeing according to the present invention is a coloring composition for dyeing a fiber. A method of dyeing a fiber is roughly classified into a dip dyeing method and a textile printing method. Dip dyeing is a process of dipping fabric to be dyed or yarn to be dyed in a dye solution, which is obtained by dissolving or dispersing a dye in a solvent, such that the dye is uniformly adsorbed on a surface of a fiber, is diffused into the fiber, and is fixed on the fiber by bonding. Textile printing is a dyeing method of producing a dyed material having a pattern by applying a dye or a pigment to fabric to be dyed to form a pattern thereon and fixing the dye or pigment on the fabric, and an effect of forming a pattern on the fabric using one color or multiple colors can be exhibited. Industrially, screen printing and roller printing in which a plate is used, transfer printing in which transfer paper is used, or ink jet textile printing in which a plate-making step is unnecessary is performed.

### [[Coloring Composition for Dip Dyeing and Method using The Same]]

Dip dyeing includes: a step of dipping fabric or yarn in a dye solution such that a dye is fixed on the fabric or the yarn; a washing step of washing off a portion of the dye which is not fixed on the fiber; and a drying step. In a case where the coloring composition according to the present invention is used for dip dyeing, the coloring composition can be used in the form of a dye solution in which fabric or yarn can be dipped. In this case, the dye solution may include not only a dye but also a solvent, a level dyeing agent, a pH adjuster, an inorganic neutral salt, or a dispersant. As the solvent, in general, water is used. As the additives such as a level dyeing agent, well-known level dyeing agents can be used. For uniform dyeing of a dye with high concentration, in addition to a method of using additives, a method of controlling dye concentration, dye-bath pH, salt concentration, dyeing temperature, dyeing time, pressure, and liquid current can be used.

In the washing step, water or warm water is used in a temperature range of normal temperature to 100°C. Water for washing may include a soaping agent. By completely removing a non-fixed portion of a coloring material, satisfactory results can be obtained in various kinds of water fastness, for example, washing fastness or perspiration fastness.

In the drying step, specifically, washed fabric is squeezed or dehydrated and then is hung out to dry or dried using a heat roll, an iron, or the like.

### [[Coloring Composition for Screen Printing, Roller Printing, or Transfer Printing, and Textile Printing Method using The Same]]

In a case where the coloring composition according to the present invention is used for screen printing, roller printing, or transfer printing, the coloring composition is used in the form of a color paste which is printed on fabric through a plate or transfer paper.

It is preferable that the textile printing method according to the present invention includes at least the following steps (1) to (4):
(1) a step of preparing a color paste by adding the coloring composition for dyeing according to the present invention to a solution including at least a polymer compound and water;
(2) a step of printing the color paste of (1) on fabric;
(3) a step of applying steam to the printed fabric; and
(4) a step of washing the printed fabric with water and drying the washed fabric.

It is preferable that the color paste satisfies the following suitabilities: printing suitability for printing the color paste on a plate; and dyeing suitability for a printed material in fixing and water washing treatments.

Therefore, in order to impart the printing suitability and the dyeing suitability, the color paste may include not only a dye but also a paste, a solvent, dyeing auxiliaries, and the like.

It is preferable that the paste is a water-soluble polymer which is a medium of the coloring composition. Examples of the water-soluble polymer include a well-known water-soluble polymer such as a starch, a seaweed, a natural gum, a cellulose derivative, sodium alginate, a protein material, a tannin material, or a lignin material. In addition, a well-known synthetic polymer such as a polyvinyl alcohol compound, a polyethylene oxide compound, an acrylic acid aqueous polymer, a styrene aqueous polymer, or a maleic anhydride aqueous polymer can also be used as the paste.

As the solvent, a water-soluble solvent is preferably used, and a solvent including at least water is most preferably used.

Examples of the dyeing auxiliaries include a color former such as an acid or an alkali, a dye solubilizer, a wetting agent, a moisture absorbent, a deep dyeing agent, an anti-reducing agent, a metal ion binding agent, an ultraviolet absorber, a dispersant, a resisting agent, a discharge agent, a preservative, a fungicide, an antioxidant, a migration inhibitor, a dye fixing agent, and an antifoaming agent.

In the step of preparing a color paste, it is preferable that the color paste is prepared by dissolving or dispersing a paste in a solvent to prepare a paste solution, adding dyeing auxiliaries to the paste solution, dissolving or dispersing a dye in a solvent to prepare a dye solution, adding the dye solution to the paste solution, and stirring the components.

In the textile printing method, unlike the dip dyeing method, after printing the color paste on fabric (a step of printing the color paste on fabric), a treatment of fixing the coloring material, which is printed on the fabric, on the fiber is performed. This treatment is called a color developing step, and a method using heated air or a method using normal pressure saturated steam or superheated steam can be performed for the treatment. In particular, a method using normal pressure saturated steam is preferable. In the present invention, it is preferable that the step of applying steam to the printed fabric is performed. In the step of applying steam to the printed fabric, the temperature and time in the steam treatment vary depending on the kind of the coloring composition and the kind of the fabric. For example, the temperature is preferably 90°C to 140°C and more preferably 100°C to 108°C. The time is preferably 1 to 60 minutes and more preferably 1 to 30 minutes After the step of applying steam to the printed fabric, as in the case of dip dyeing, a washing step and a drying step are performed to obtain a printed material. In the present invention, it is preferable that the fabric includes polyamide.

### [[Coloring Composition for Ink Jet Textile Printing and Method using The Same]]

In a case where the coloring composition according to the present invention is used for ink jet textile printing, it is preferable that the coloring composition is used in the form of an ink for ink jet textile printing.

"Ink jet ink" is ink that is used in a printer (ink jet printer) having a mechanism of jetting the ink from an ink jet nozzle to form an image. In particular, ink jet ink used for textile printing using an ink jet method will be called ink for ink jet textile printing.

It is preferable that an ink jet textile printing method according to the present invention includes the following steps (11) to (14):
(11) a step of applying a paste including at least a polymer compound and water to fabric;
(12) a step of printing the ink jet ink according to the present invention on the fabric using an ink jet method;
(13) a step of applying steam to the printed fabric; and
(14) a step of washing the printed fabric with water and drying the washed fabric.

In a case where a color paste used in a textile printing method of the related art is used in the ink jet textile printing method, nozzle clogging tends to occur Therefore, in the ink jet textile printing method, it is preferable that a pre-treatment step of applying a paste to fabric in advance (the step of applying a paste including at least a polymer compound and water to fabric) is performed. By performing the pre-treatment step, fabric handleability is improved. Specifically, pre-treated fabric is obtained by applying a paste solution including a paste, a solvent, and a hydrotropy agent to fabric and drying the fabric. In the present invention, it is preferable that the fabric includes polyamide.

As the paste, the same paste as that used for screen printing or the like can be used. As the solvent, a water-soluble solvent is preferably used, and a solvent including at least water is most preferably used.

In general, the hydrotropy agent serves to increase the color optical density of an image in a case where fabric to which an ink composition is applied is heated by steam. For example, typically, urea, alkyl urea, ethylene urea, propylene urea, thiourea, guanidine hydrochloride, or tetraalkyl ammonium halide is used. In addition, a well-known hydrotropy agent can be used, and examples thereof include a dye fixing agent described in pp. 426 to 429 of "Dyeing Note". The content of the hydrotropy agent is preferably 0.01 mass% to 20 mass% with respect to the total solid content of the paste solution.

Optionally, the paste solution further includes, for example, a pH adjuster, an aqueous (water-soluble) metal salt, a water repellant, a surfactant, a migration inhibitor, or a micropore forming agent.

In the pre-treatment, the paste solution is padded at a squeezing rate of 5% to 150% and preferably 10% to 130%.

In the pre-treatment, a method of applying the respective paste solutions to fabric is not particularly limited, and examples thereof include methods which are typically performed, for example, a dipping method, a padding method, a coating method, a screening method, a spraying method, a transfer method, and an ink jet method.

Next, the pre-treated fabric is printed using the ink jet ink.

The ink for ink jet textile printing can be prepared by dissolving and/or dispersing the compound represented by any one of Formulae (1) to (3) in a lipophilic medium or an aqueous medium. It is preferable that an aqueous medium is used to prepare the ink for ink jet textile printing. Therefore, in order to impart ink suitability, dyeing suitability, and image fastness, the ink for ink jet textile printing can include a solvent and a surfactant in addition to the dye.

The solvent is determined based on, for example, the kind of the substituent in the compound represented by any one of Formulae (1) to (3), the kind of the solvent component used for producing the coloring composition, and the kind of fabric to be dyed. As the solvent, an aqueous medium is preferably used, and water or a water-soluble organic solvent is more preferably used. The ink for ink jet textile printing can be prepared by using a lipophilic solvent or a water-soluble solvent and the solvent and dissolving and/or dispersing the compound represented by any one of Formulae (1) to (3) therein.

It is preferable that an organic solvent which may be included in the ink for ink jet textile printing according to the present invention is an aqueous organic solvent, and examples thereof include a polyhydric alcohol such as diethylene glycol or glycerin, an amine, a monohydric alcohol, and a polyhydric alcohol alkyl ether. In addition, each compound which is described as an example of a water-miscible organic solvent in paragraph "0076" of JP2002-371079A is preferable.

The content of the organic solvent in the ink for ink jet textile printing according to the present invention is preferably 10 mass% to 60 mass% with respect to the total mass of the ink for ink jet textile printing.

As the surfactant, any one of a cationic surfactant, an anionic surfactant, an amphoteric surfactant, and a nonionic surfactant can be used. In addition, the ink for ink jet textile printing according to the present invention optionally includes other additives within a range where the effects of the present invention do not deteriorate.

In a case where the compound represented by any one of Formulae (1) to (3) is dispersed in an aqueous medium, the compound can be dispersed using a method described in paragraphs "0232" and "0233" of JP2014-5462A.

The viscosity of the ink for ink jet textile printing according to the present invention is preferably 30 mPa·s or lower. In addition, the surface tension of the ink for ink jet textile printing according to the present invention is preferably 25 mN/m to 70 mN/m. The viscosity and the surface tension can be adjusted by adding various additives such as a viscosity adjuster, a surface tension adjuster, a specific resistance adjuster, a film conditioner, an ultraviolet absorber, an antioxidant, an antifading agent, a fungicide, a rust inhibitor, a dispersant, and a surfactant.

After drying, fabric which is printed using an ink jet method undergoes the color developing step, the washing step, and the drying step to obtain a printed material as in the case of other textile printing methods. A preferable method for performing the color developing step to the drying step is the same as in screen printing or the like.

The fabric used in the present invention is optionally pre-treated. The treatment may be performed before or after applying the paste to the fabric in the ink jet textile printing method. In addition, a pre-treatment agent may be added to the paste solution which is applied before dyeing.

A method for ink jet textile printing in which the coloring composition according to the present invention is used is not particularly limited as long as it includes a step of jetting the ink on fabric using an ink jet device.

### [Form of Coloring Composition and Fabric to be Dyed]

By using the compound represented by any one of Formulae (1) to (3) in the coloring composition according to the present invention as a dye, fabric can be dyed. By changing the kind of the substituent of the compound represented by any one of Formulae (1) to (3), various kinds of dyes can be prepared. In a case where the compound represented by any one of Formulae (1) to (3) includes at least one acidic group such as a sulfo group or a carboxyl group, an acid dye is prepared such that a protein fiber such as silk or wool or a polyamide fiber such as 6 nylon or 66 nylon can be dyed. In a case where the compound represented by any one of Formulae (1) to (3) is an oil-soluble compound which is insoluble in water, a dispersed dye is prepared such that a hydrophobic fiber such as polyester can be generally dyed but an acrylic fiber or a polyamide fiber can also be dyed. In a case where the compound represented by any one of Formulae (1) to (3) includes at least one basic group such as an amino group, a cationic dye is prepared such that an acrylic fiber can be dyed. In a case where the compound represented by any one of Formulae (1) to (3) includes at least one group which is reactive with a fiber, a reactive dye is prepared such that a cellulose fiber such as cotton, or a polyamide fiber can be dyed with this compound. Specific examples of the group which is reactive with a fiber include a chlorotriazinyl group, a chloropyrimidyl group, a vinylsulfonyl group, a chloroethylsulfonyl group, a sulfatoethylsulfonyl group, and a thiosulfatoethylsulfonyl group.

As the fabric, fabric made of one fiber may be used, or a composite fiber made of two or more fibers may be used.

It is preferable that the compound represented by any one of Formulae (1) to (3) is an acid dye. In particular, in a case where a polyamide fiber is dyed with this acid dye, excellent fixing properties can be obtained, and various performances such as light fastness, water fastness, and chlorine fastness can be improved.

A polyamide fiber which is preferable for fabric to be dyed is not particularly limited as long as it includes a polyamide fiber. Fabric made of only polyamide may be used, fabric made of a composite fiber may be used. Examples of the composite fiber include fibers described in JP2008-202210A, JP2006-322131A, and JP2007-100270A. Among these polyamide fibers, fibers including 6 nylon and 66 nylon are preferable.

As the fiber to be used, fabric is preferable. However, even in a case where yarn is dyed, the same effects can be obtained.

### Examples

Hereinafter, the present invention will be described using examples, but the present invention is not limited to these examples. Unless specified otherwise, "%" and "part(s)" represent "mass%" and "part(s) by mass".

### [Synthesis Examples]

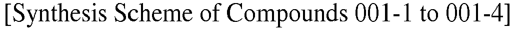

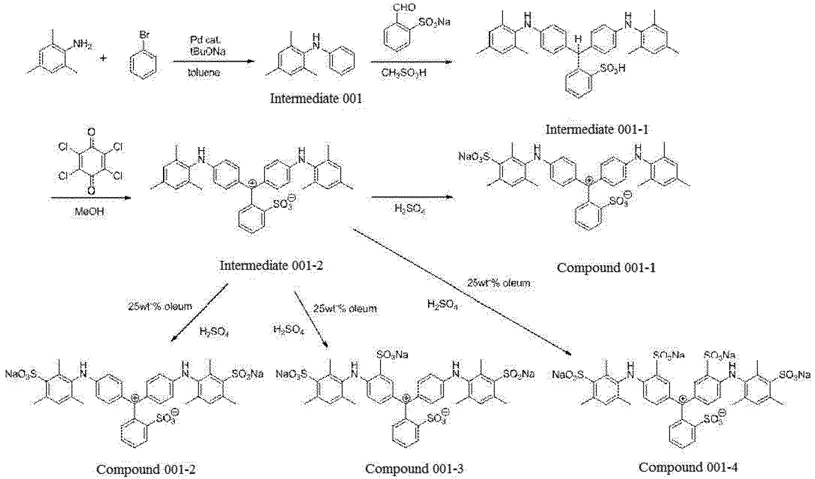

### [Compound 001-1]

30 g of 2,4,6-trimethylaniline, 34 g of bromobenzene, 39 g of t-butoxysodium, and 200 mL of toluene were put into a flask and were sufficiently stirred in a nitrogen stream. 210 mg of palladium acetate and 900 mg of 1,3-bis(2,6-diisopropylphenyl)imidazolium chloridewere added, and the reaction solution was heated to 110°C and was stirred for 6 hours. The obtained reaction solution was cooled, water was poured thereinto, and the solution was extracted with ethyl acetate. The obtained organic phase was dried with sodium sulfate and was condensed. Next, the condensate was purified by silica gel column chromatography (developing solution: ethyl acetate/hexane=1/20). As a result, 21 g of an intermediate 001 was obtained.

16 g of the intermediate 001, 10 g of sodium 2-formylbenzenesulfonate, and 80 mL of methanesulfonic acid were put into a flask and were stirred at 100°C for 6 hours. The obtained reaction solution was poured into 500 mL of iced water to obtain an intermediate 001-1, and crystals of the intermediate 001-1 were separated by filtration (16 g).

8 g of the intermediate 001-1, 3.4 g of chloranil, and 200 mL of methanol were mixed with each other, and the mixture was stirred at 50°C for 12 hours. After returning the temperature to room temperature, the obtained crystals were separated by filtration. The crystals were purified by column chromatography (filler: SEPHADEX, developing solution: methanol), and the obtained fraction was concentrated under a reduced pressure. As a result, 5 g of an intermediate 001-2 was obtained.

5 g of an intermediate 001-2 was added to 50 mL of sulfuric acid, and the solution was stirred while being cooled. The reaction solution was caused to react at 50 degrees for 5 hours, was poured into 160 g of ice, and the precipitated crystals were separated by filtration. The crystals were dissolved in methanol, and the solution was neutralized with sodium acetate and was purified by column chromatography (filler: SEPHADEX, developing solution: methanol). As a result, 3 g of a compound 001-1 was obtained.
Solution absorbance spectrum of the compound 001-1: λmax=605 nm, ε=101000 L·mol⁻¹·cm⁻¹ (aqueous solution)
ESI-mass spectrum (Posi): 669.2 (M-Na+2H)

### [Compound 001-2]

5 g of an intermediate 001-2 was added to 20 mL of sulfuric acid, and the solution was stirred while being cooled. 10 mL of 25% fuming sulfuric acid was added dropwise to the solution for 4 hours such that the internal temperature did not exceed 5°C. After the dropwise addition, the reaction solution was stirred at an internal temperature of 5 degrees or lower for 30 minutes and was poured into 200 g of ice, and the precipitated crystals were separated by filtration. The obtained wet crystals were dissolved in 200 mL of methanol, and the solution was neutralized to pH 6 with an 1M sodium methoxide/methanol solution and was purified by column chromatography (filler: SEPHADEX, developing solution: methanol). As a result, 2.5 g of a compound 001-2 was obtained.
Solution absorbance spectrum of the compound 001-2: λmax=605 nm, ε=117000 L·mol⁻¹·cm⁻¹ (aqueous solution)
ESI-mass spectrum (Posi): 749.2 (M-2Na+3H)

### [Compound 001-3]

15 g of 25 wt% fuming sulfuric acid was added dropwise to 15 g of sulfuric acid. This solution was cooled in iced water, and 3 g of the intermediate 001-2 was added thereto. The reaction solution was stirred at 5°C or lower for 3 hours and then was poured into 150 g of ice. The obtained solution was neutralized to pH 5.5 using a 50% sodium hydroxide aqueous solution, and the solvent was removed by distillation using an evaporator. The obtained crystals were dispersed in methanol, and insoluble matter was removed by filtration. The obtained solution was purified by column chromatography (filler: SEPHADEX, developing solution: methanol). As a result, 0.8 g of a compound 001-3 was obtained.
Solution absorbance spectrum of the compound 001-3: λmax=603 nm, ε=87200 L·mol⁻¹·cm⁻¹ (aqueous solution)
ESI-mass spectrum (Posi): 829.1 (M-3Na+4H)

### [Compound 001-4]

3 g of the intermediate 001-2 was added to 15 g of sulfuric acid, and the solution was stirred while being cooled. 15 g of 25% fuming sulfuric acid was added dropwise to the solution for 4 hours such that the internal temperature did not exceed 5°C. After the dropwise addition, the reaction solution was stirred at an internal temperature of 40 degrees for 1 hour and was poured into 150 g of ice, and the precipitated crystals were separated by filtration. The obtained wet crystals were dissolved in 200 mL of methanol, and the solution was neutralized to pH 6 with an 1M sodium methoxide/methanol solution and was purified by column chromatography (filler: SEPHADEX, developing solution: methanol). As a result, 1 g of a compound 001-4 was obtained.
Solution absorbance spectrum of the compound 001-4: λmax=600 nm, ε=69100 L·mol⁻¹·cm⁻¹ (aqueous solution)
ESI-mass spectrum (Posi): 909.1 (M-4Na+5H)

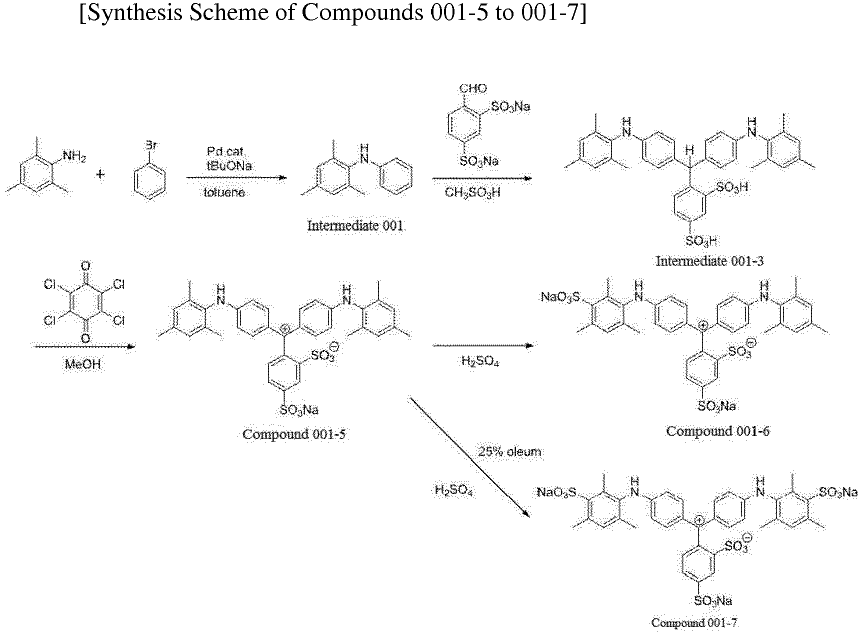

### [Compound 001-5]

16 g of the intermediate 001, 12 g of disodium 4-formylbenzene-1,3-disulfonate, and 80 mL of methanesulfonic acid were put into a flask and were stirred at 100°C for 6 hours. The obtained reaction solution was poured into 500 mL of iced water to obtain an intermediate 001-3, and crystals of the intermediate 001-3 were separated by filtration (20 g).

9 g of the intermediate 001-3, 3.4 g of chloranil, and 200 mL of methanol were mixed with each other, and the mixture was stirred at 50°C for 3 days. After returning the temperature to room temperature, the obtained crystals were separated by filtration. The crystals were purified by column chromatography (filler: SEPHADEX, developing solution: methanol), and the obtained fraction was dissolved in water. The obtained solution was neutralized to pH 7 using 1M sodium hydroxide, and the solvent was concentrated under a reduced pressure. As a result, 5 g of a compound 001-5 was obtained.
Solution absorbance spectrum of the compound 001-5: λmax=614 nm, ε=86100 L·mol⁻¹·cm⁻¹ (aqueous solution)
ESI-mass spectrum (Posi): 669.2 (M-Na+2H)

### [Compound 001-6]

5 g of the compound 001-5 was added to 20 mL of sulfuric acid, and the solution was stirred while being cooled. The reaction solution was caused to react at 50 degrees for 5 hours, was poured into 200 g of ice, and the precipitated crystals were separated by filtration. The obtained wet crystals were dissolved in methanol, and the solution was neutralized to pH 6 with an 1M sodium methoxide/methanol solution and was purified by column chromatography (filler: SEPHADEX, developing solution: methanol). As a result, 3 g of a compound 001-6 was obtained.
Solution absorbance spectrum of the compound 001-6: λmax=613 nm, ε=91300 L·mol⁻¹·cm⁻¹ (aqueous solution)
ESI-mass spectrum (Posi): 749.2 (M-2Na+3H)

### [Compound 001-7]

5 g of the compound 001-5 was added to 20 mL of sulfuric acid, and the solution was stirred while being cooled. 15 mL of 25% fuming sulfuric acid was added dropwise to the solution for 4 hours such that the internal temperature did not exceed 5°C. After the dropwise addition, the reaction solution was stirred at an internal temperature of 5 degrees or lower for 30 minutes and was poured into 200 g of ice, and the precipitated crystals were separated by filtration. The obtained wet crystals were dissolved in 200 mL of methanol, and the solution was neutralized to pH 6 with an 1M sodium methoxide/methanol solution and was purified by column chromatography (filler: SEPHADEX, developing solution: methanol). As a result, 2.5 g of a compound 001-7 was obtained.
Solution absorbance spectrum of the compound 001-7: λmax=613 nm, ε=87500 L·mol⁻¹·cm⁻¹ (aqueous solution)
ESI-mass spectrum (Posi): 829.1 (M-3Na+4H)

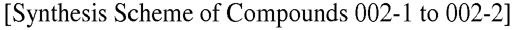

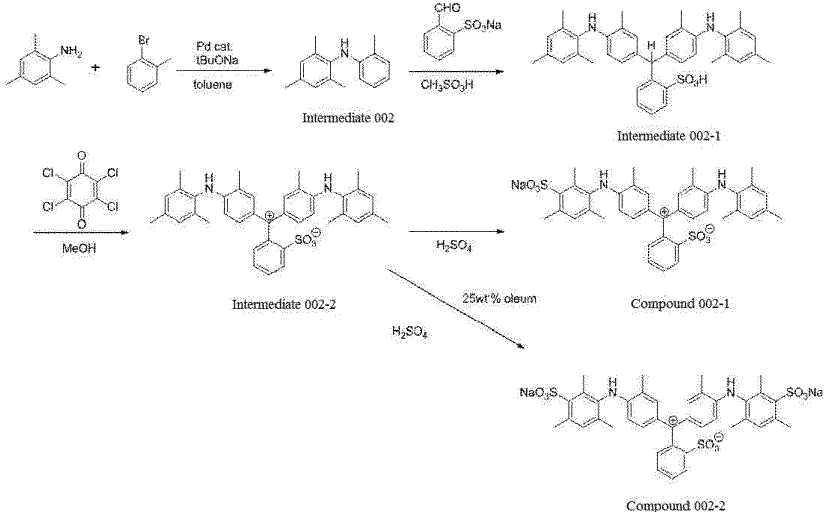

### [Compound 002-1]

An intermediate 002 was obtained using the same method as the method of synthesizing the intermediate 001, except that 2-bromotoluene was used instead of bromobenzene.

An intermediate 002-2 was obtained using the same method as the method of synthesizing the intermediate 001-1, except an intermediate 002-1 was used instead of the intermediate 001-1.

4 g of a compound 002-1 was obtained using the same method as the method of synthesizing the compound 001-1, except that the intermediate 002-2 was used instead of the intermediate 001-2.
Solution absorbance spectrum of the compound 002-1: λmax=611 nm, ε=99000 L·mol⁻¹·cm⁻¹ (aqueous solution)
ESI-mass spectrum (Posi): 697.2 (M-Na+2H)

### [Compound 002-2]

2.2 g of a compound 002-2 was obtained using the same method as the method of synthesizing the compound 001-2, except that the intermediate 002-2 was used instead of the intermediate 001-2.
Solution absorbance spectrum of the compound 002-2: λmax=610 nm, ε=98700 L·mol⁻¹·cm⁻¹ (aqueous solution)
ESI-mass spectrum (Posi): 777.2 (M-2Na+3H)

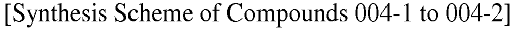

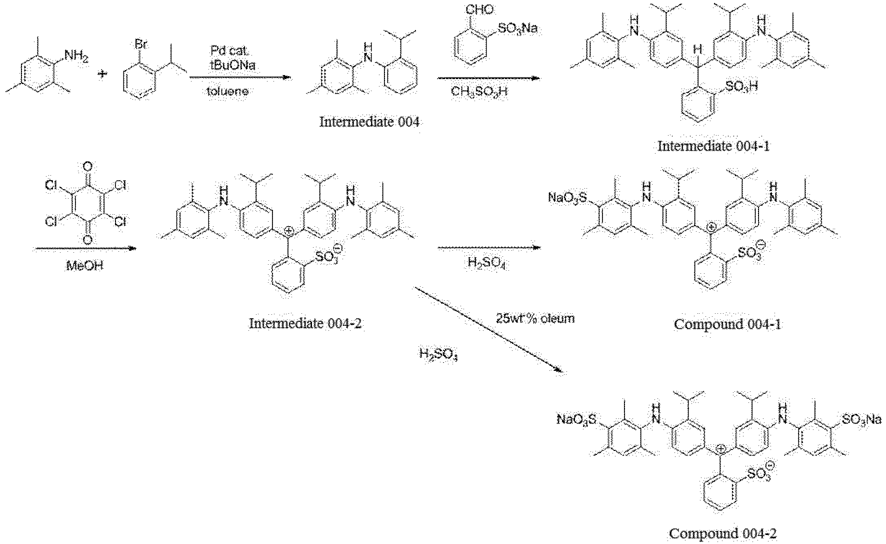

### [Compound 004-1]

An intermediate 004 was obtained using the same method as the method of synthesizing the intermediate 001, except that 2-bromocumene was used instead of bromobenzene.

An intermediate 004-2 was obtained using the same method as the method of synthesizing the intermediate 001-1, except the intermediate 004-1 was used instead of the intermediate 001-1.

2.1 g of a compound 004-1 was obtained using the same method as the method of synthesizing the compound 001-1, except that the intermediate 004-2 was used instead of the intermediate 001-2.
Solution absorbance spectrum of the compound 004-1: λmax=614 nm, ε=101000 L·mol⁻¹·cm⁻¹ (aqueous solution)
ESI-mass spectrum (Posi): 753.3 (M-Na+2H)

### [Compound 004-2]

1.8 g of a compound 004-2 was obtained using the same method as the method of synthesizing the compound 001-2, except that the intermediate 004-2 was used instead of the intermediate 001-2.
Solution absorbance spectrum of the compound 004-2: λmax=614 nm, ε=119000 L·mol⁻¹·cm⁻¹ (aqueous solution)
ESI-mass spectrum (Posi): 833.3 (M-2Na+3H)

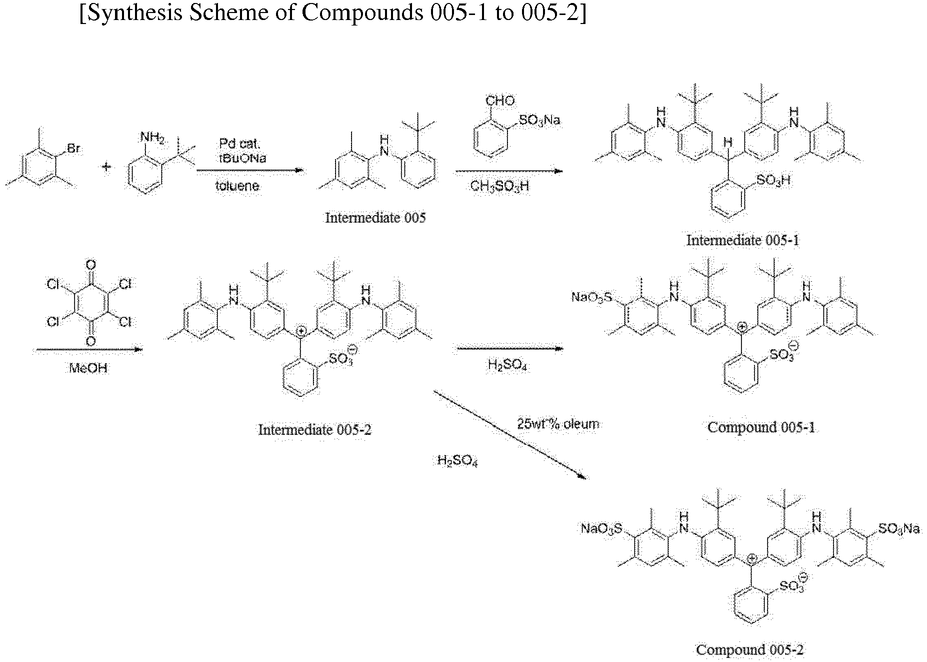

### [Compound 005-1]

An intermediate 005 was obtained using the same method as the method of synthesizing the intermediate 001, except that bromomesitylene was used instead of bromobenzene and 2-t-butylaniline was used instead of 2,4,6-trimethylaniline.

An intermediate 005-2 was obtained using the same method as the method of synthesizing the intermediate 001-1, except that an intermediate 005-1 was used instead of the intermediate 001-1.

0.9 g of a compound 005-1 was obtained using the same method as the method of synthesizing the compound 001-1, except that the intermediate 005-2 was used instead of the intermediate 001-2.
Solution absorbance spectrum of the compound 005-1: λmax=613 nm, ε=103000 L·mol⁻¹·cm⁻¹ (aqueous solution)
ESI-mass spectrum (Posi): 781.3 (M-Na+2H)

### [Compound 005-2]

1.7 g of a compound 005-2 was obtained using the same method as the method of synthesizing the compound 001-2, except that the intermediate 005-2 was used instead of the intermediate 001-2.
Solution absorbance spectrum of the compound 005-2: λmax=614 nm, ε=114000 L·mol⁻¹·cm⁻¹ (aqueous solution)
ESI-mass spectrum (Posi): 861.3 (M-2Na+3H)

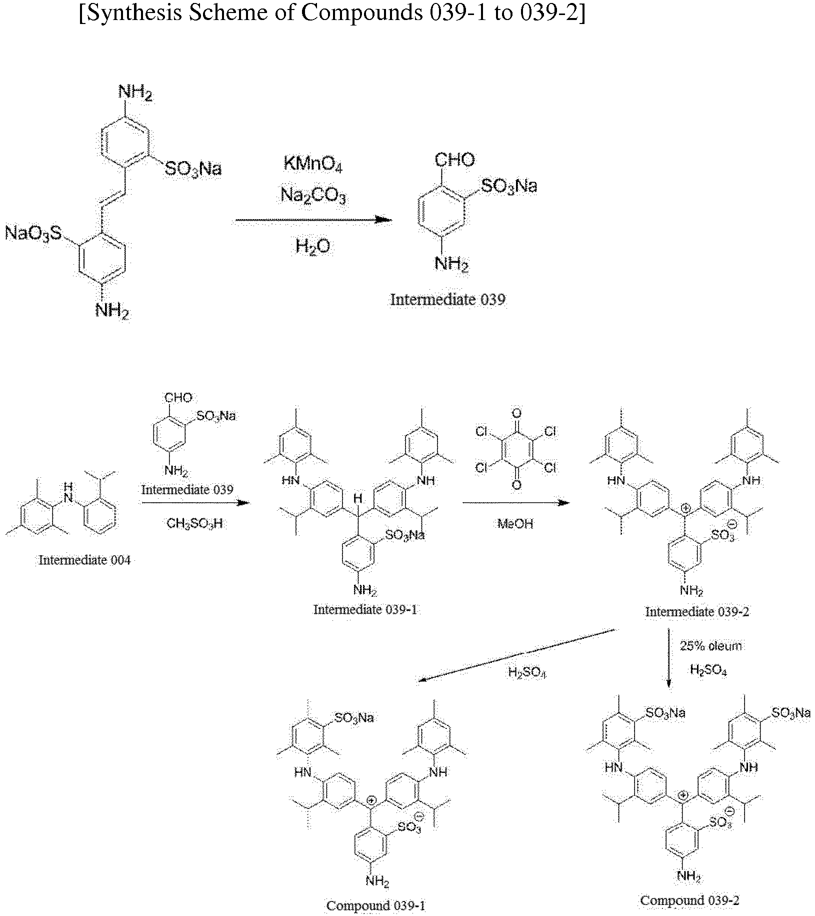

### [Compound 039-1]

37.0 g of sodium 4,4'-diaminostilbene-2,2'-disulfonate, 450 g of water, and 12.7 g of sodium carbonate were put into a flask, and 16 g of potassium permanganate was added thereto at 30°C or lower for 30 minutes. Next, the components were stirred at 25°C for 2 hours, the obtained reaction solution was filtered, and the obtained filtrate was concentrated. As a result, 50 g of crystals of an intermediate 039 was obtained.

11 g of the intermediate 004, 5.0 g of the intermediate 039, and 68 g of methanesulfonic acid were put into a flask and were stirred at 100°C for 4 hours. The obtained reaction solution was poured into 1.1 L of iced water to obtain an intermediate 039-1, and 10 g of crystals of the intermediate 039-1 was separated by filtration.

10 g of the intermediate 039-1, 5.2 g of chloranil, and 50 g of methanol were mixed with each other, and the mixture was stirred for 4 hours. The obtained crystals were separated by filtration. As a result, a coarse body of an intermediate 039-2 was obtained. The coarse body of the intermediate 039-2 was dissolved in methanol, and the solution was filtered. Next, the obtained filtrate was purified by column chromatography (filler: SEPHADEX, developing solution: methanol). As a result, 8.0 g of the compound 039-2 was obtained.

8.0 g of the intermediate 039-2 was mixed with 80 ml of concentrated sulfuric acid, and the mixture was stirred at 50°C for 5 hours. Next, the obtained reaction solution was poured into 400 g of iced water to obtain a compound 039-1, and crystals of the compound 039-1 were obtained. The coarse body of the compound 039-1 was dissolved in methanol, and the solution was neutralized to pH 6 with a 28% NaOMe/methanol solution and was purified by column chromatography (filler: SEPHADEX, developing solution: methanol). As a result, 6.1 g of the compound 039-1 was obtained.
Solution absorbance spectrum of the compound 039-1: λmax=602 nm, ε=120000 L·mol⁻¹·cm⁻¹ (aqueous solution)
ESI-mass spectrum (Posi): 767.3 (M-Na+2H)

### [Compound 039-2]

8.0 g of the intermediate 039-2 was mixed with 80 ml of concentrated sulfuric acid, and the mixture was added dropwise to 56.0 ml of 25% fuming sulfuric acid at 0°C for 2 hours. Next, the components were stirred at 0°C for 1 hour, the obtained reaction solution was poured into 450 g of iced water to obtain a compound 039-2, and crystals of the compound 039-2 were obtained. The coarse body of the compound 039-2 was dissolved in methanol, and the solution was neutralized to pH 6 with a 28% NaOMe/methanol solution and was purified by column chromatography (filler: SEPHADEX, developing solution: methanol). As a result, 7.5 g of the compound 039-2 was obtained.
Solution absorbance spectrum of the compound 039-2: λmax=603 nm, ε=117000 L.mol⁻¹·cm⁻¹ (aqueous solution)
ESI-mass spectrum (Posi): 847.4 (M-2Na+3H)

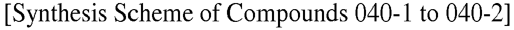

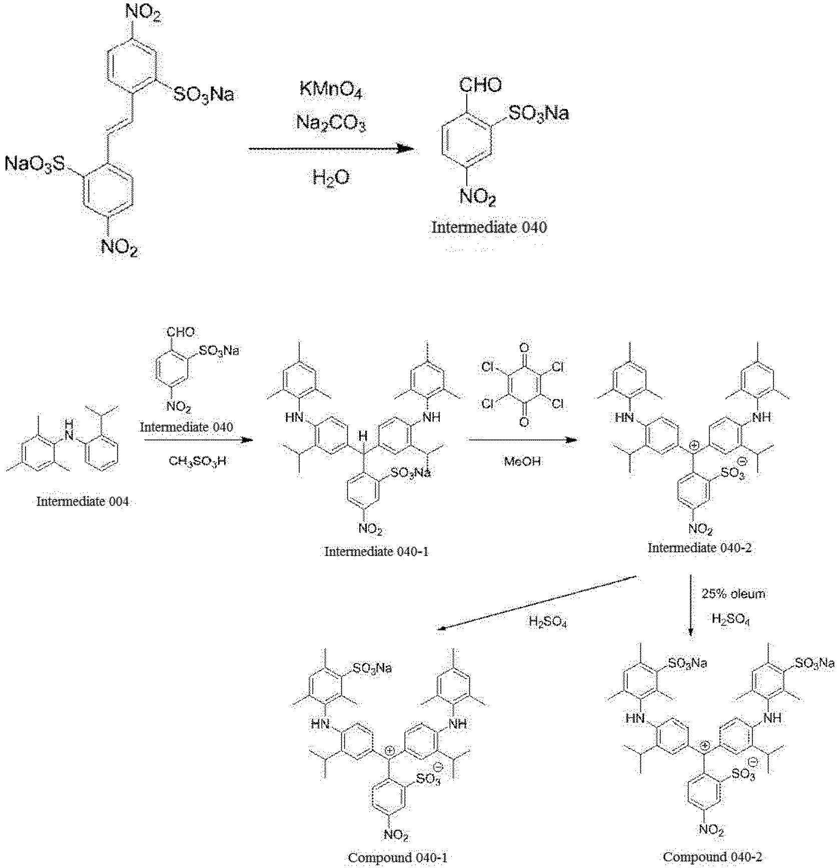

### [Compound 040-1]

20 g of sodium 4,4'-dinitrostilbene-2,2'-disulfonate, 75 g of water, 4.9 g of sodium carbonate were put into a flask, and a potassium permanganate aqueous solution (8.0 g of potassium permanganate and 225 g of water) was added thereto at 0°C for 1 hour. Next, the components were stirred at 0°C for 1 hour, and the obtained reaction solution was filtered. Next, 300 g of isopropyl alcohol was added to the obtained filtrate, and the reaction solution was left to stand for 1 day. The precipitated crystals were removed by filtration, and the obtained filtrate was concentrated. As a result, 13 g of crystals of an intermediate 040 was obtained.

14 g of the intermediate 004, 7.0 g of the intermediate 040, and 84 g of methanesulfonic acid were put into a flask and were stirred at 100°C for 4 hours. The obtained reaction solution was poured into 1.4 L of iced water to obtain an intermediate 040-1, and 18 g of crystals of the intermediate 040-1 was separated by filtration. 18 g of the intermediate 040-1, 9.0 g of chloranil, and 90 g of methanol were mixed with each other, and the mixture was stirred for 4 hours. The obtained crystals were separated by filtration. As a result, a coarse body of an intermediate 040-2 was obtained. The coarse body of the intermediate 040-2 was dissolved in methanol, and the solution was filtered. Next, the obtained filtrate was purified by column chromatography (filler: SEPHADEX, developing solution: methanol). As a result, 13 g of the intermediate 040-2 was obtained.

5.0 g of the intermediate 040-2 was mixed with 80 ml of concentrated sulfuric acid, the mixture was stirred at 50°C for 5 hours, the obtained reaction solution was poured into 400 g of iced water to obtain a compound 040-1, and crystals of the compound 040-1 were obtained. A coarse body of the compound 040-1 was dissolved in methanol, and the solution was neutralized to pH 6 with a 28% NaOMe/methanol solution and was purified by column chromatography (filler: SEPHADEX, developing solution: methanol). As a result, 4.2 g of the compound 040-1 was obtained.
Solution absorbance spectrum of the compound 040-1: λmax=628 nm, ε=116000 L·mol⁻¹·cm⁻¹ (aqueous solution)
ESI-mass spectrum (Posi): 797.3 (M-Na+2H)

### [Compound 040-2]

9.0 g of the intermediate 040-2 was mixed with 90 ml of concentrated sulfuric acid, and the mixture was added dropwise to 63.0 ml of 25% fuming sulfuric acid at 0°C for 2 hours. Next, the components were stirred at 0°C for 1 hour, the obtained reaction solution was poured into 504 g of iced water to obtain a compound 040-2, and crystals of the compound 040-2 were obtained. A coarse body of the compound 040-2 was dissolved in methanol, and the solution was neutralized with a 28% NaOMe solution and was purified by column chromatography (filler: SEPHADEX, developing solution: methanol). As a result, 8.5 g of the compound 040-2 was obtained.
Solution absorbance spectrum of the compound 040-2: λmax=629 nm, ε=112500 L·mol⁻¹·cm⁻¹ (aqueous solution)
ESI-mass spectrum (Posi): 878.2 (M-2Na+3H)

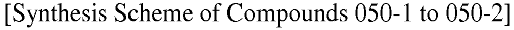

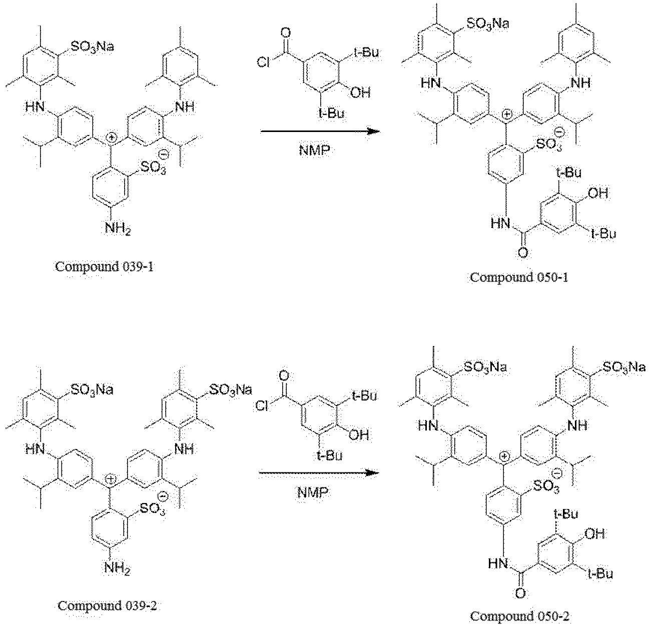

### [Compound 050-1]

1.0 g of the compound 039-1 was mixed with 30 ml of N-methylpyrrolidone, and 6.1 g of 3,5-di-t-butyl-4-hydroxybenzoyl chloride was added thereto at 25°C. Next, the components were stirred at 25°C for 2 hours, the obtained reaction solution was poured into 150 ml of toluene to obtain a compound 050-1, and crude crystals of the compound 050-1 were obtained. The crude crystals of the compound 050-1 were dissolved in methanol, and the solution was neutralized to pH 6 with a 28% NaOMe/MeOH solution and was purified by column chromatography (filler: SEPHADEX, developing solution: methanol). As a result, 1.1 g of the compound 050-1 was obtained.
Solution absorbance spectrum of the compound 050-1: λmax=615 nm
ESI-mass spectrum (Posi): 1000.5 (M-Na+2H)

### [Compound 050-2]

1.0 g of the compound 039-2 was mixed with 30 ml of N-methylpyrrolidone, and 6.1 g of 3,5-di-t-butyl-4-hydroxybenzoyl chloride was added thereto at 25°C. Next, the components were stirred at 25°C for 2 hours, the obtained reaction solution was poured into 150 ml of toluene to obtain a compound 050-2, and crystals of the compound 050-2 were obtained. A coarse body of the compound 050-2 was dissolved in methanol, and the solution was neutralized to pH 6 with a 28% NaOMe/MeOH solution and was purified by column chromatography (filler: SEPHADEX, developing solution: methanol). As a result, 1.0 g of the compound 050-2 was obtained.
Solution absorbance spectrum of the compound 050-2: λmax=616 nm
ESI-mass spectrum (Posi): 1080.4 (M-2Na+3H)

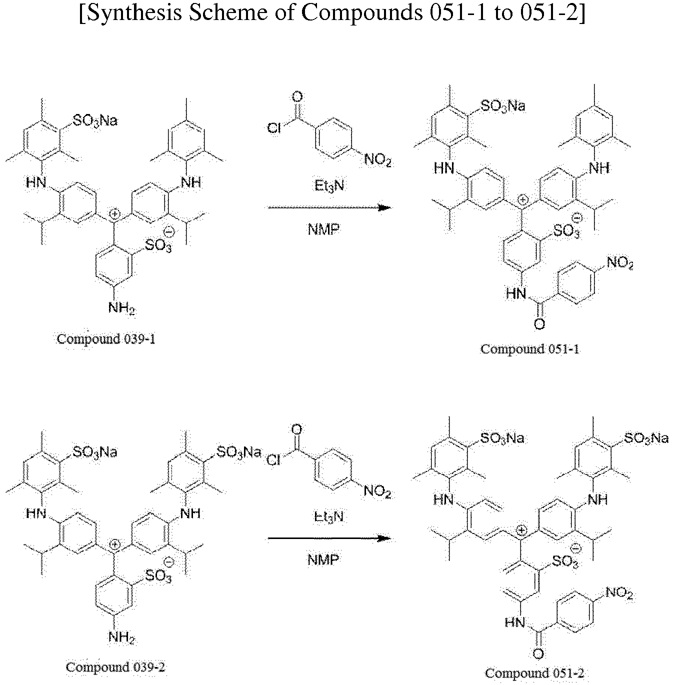

### [Compound 051-1]

1.0 g of the compound 039-1 was mixed with 30 ml of N-methylpyrrolidone, and 2.1 g of 3,5-p-nitrobenzoyl chloride was added thereto at 25°C. Next, the components were stirred at 25°C for 2 hours, the obtained reaction solution was poured into 150 ml of toluene to obtain a compound 051-1, and crude crystals of the compound 051-1 were obtained. The crude crystals of the compound 051-1 were dissolved in methanol, and the solution was neutralized to pH 6 with a 28% NaOMe/MeOH solution and was purified by column chromatography (filler: SEPHADEX, developing solution: methanol). As a result, 0.9 g of the compound 051-1 was obtained.
Solution absorbance spectrum of the compound 051-1: λmax=615 nm
ESI-mass spectrum (Posi): 917.3 (M-Na+2H)

### [Compound 051-2]

1.0 g of the compound 039-2 was mixed with 30 ml of N-methylpyrrolidone, and 2.1 g of p-nitrobenzoyl chloride was added thereto at 25°C. Next, the components were stirred at 25°C for 2 hours, the obtained reaction solution was poured into 150 ml of toluene to obtain a compound 051-2, and crystals of the compound 051-2 were obtained. A coarse body of the compound 051-2 was dissolved in methanol, and the solution was neutralized to pH 6 with a 28% NaOMe/MeOH solution and was purified by column chromatography (filler: SEPHADEX, developing solution: methanol). As a result, 0.8 g of the compound 051-2 was obtained.
Solution absorbance spectrum of the compound 051-2: λmax=617 nm
ESI-mass spectrum (Posi): 997.3 (M-2Na+3H)

### [Evaluation of Ink Storage Stability]

### <Preparation of Ink 1 and Ink 2>

An ink composition having the following composition was stirred for 1 hour while heated at 30 to 40°C. The obtained solution was filtered under reduced pressure through a microfilter having an average pore size of 0.5 µm. As a result, an ink solution for ink jet textile printing (Ink 1 and Ink 2) was prepared.

### <Ink 1>

| | |
|---|---|
| •Dye or dye mixture shown in Table 1 | 15 mass% |
| •Water | 85 mass% |

### <Ink 2>

| | |
|---|---|
| •Dye or dye mixture shown in Table 1 | 7 mass% |
| •Glycerin (manufactured by Wako Pure Chemical Industries, Ltd.; aqueous organic solvent) | 17 mass% |
| •Diethylene glycol (manufactured by Wako Pure Chemical Industries, Ltd.; aqueous organic solvent) | 3 mass% |
| •OLFINE E1010 (acetylenic glycol surfactant; manufactured by Nissin Chemical Co., Ltd.) | 1 mass% |
| •Water | 72 mass% |

After the ink 1 and the ink 2 were stored at -20°C for 2 weeks, precipitates were observed, and the viscosity was measured. Regarding the ink 2, after setting the ink 2 in an ink jet printer (DMP-2381, manufactured by Dimatix Inc.), a solid image was printed on plain paper. In a case where little precipitates were observed, an increase in viscosity was small, and blurring of a printed material was small, the ink storage stability was evaluated as excellent.

### [Evaluation Method]

### 1. Precipitates

A: no precipitates were observed
B: precipitates were observed

### 2. Viscosity of Ink

A: an increase in viscosity after storage was lower than 10% with respect to the viscosity before storage
B: an increase in viscosity after storage was 10% or higher and lower than 25% with respect to the viscosity before storage
C: an increase in viscosity after storage was 25% or higher with respect to the viscosity before storage

### 3. Blurring of Printed Material

A: no blurring was observed on a printed image
B: blurring was observed on a printed image
C: an image was not able to be printed

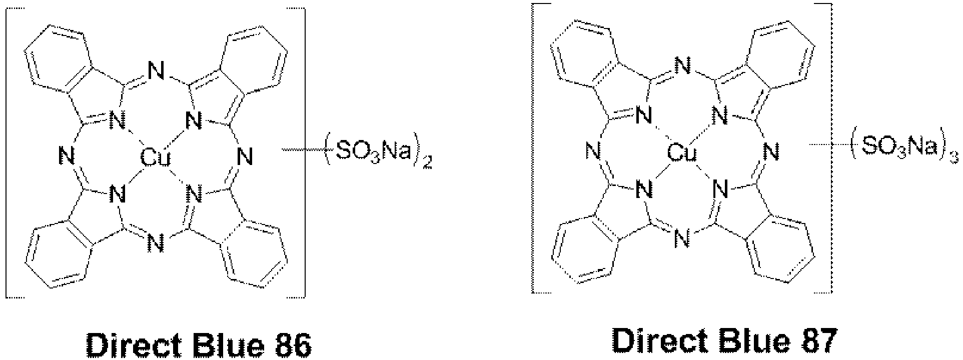

**[Table 1]**

| | Dye of Coloring Composition | | | Ink 1 | | Ink 2 | | |
|---|---|---|---|---|---|---|---|---|
| | Dye 1 | Dye 2 | Dye Mass Ratio (Dye 1/Dye 2) | Precipitate | Viscosity | Precipitate | Viscosity | Blurring of Printed Material |
| Example 1-1 | Compound 001-1 | Compound 001-2 | 99.95/0.05 | A | A | A | A | A |
| Example 1-2 | | | 99/1 | A | A | A | A | A |
| Example 1-3 | | | 95/5 | A | A | A | A | A |
| Example 1-4 | | | 50/50 | A | A | A | A | A |
| Example 1-5 | | | 1/99 | A | A | A | A | A |
| Example 1-6 | | | 0.05/99.5 | A | A | A | A | A |
| Example 2-1 | Compound 001-2 | Compound 001-3 | 99/1 | A | A | A | A | A |
| Example 2-2 | | | 50/50 | A | A | A | A | A |
| Example 2-3 | | | 1/99 | A | A | A | A | A |
| Example 3-1 | Compound 001-5 | Compound 001-6 | 99/1 | A | A | A | A | A |
| Example 3-2 | | | 50/50 | A | A | A | A | A |
| Example 3-3 | | | 1/99 | A | A | A | A | A |
| Example 4-1 | Compound 001-6 | Compound 001-7 | 99/1 | A | A | A | A | A |
| Example 4-2 | | | 50/50 | A | A | A | A | A |
| Example 4-3 | | | 1/99 | A | A | A | A | A |
| Example 5-1 | Compound 002-1 | Compound 002-2 | 99/1 | A | A | A | A | A |
| Example 5-2 | | | 50/50 | A | A | A | A | A |
| Example 5-3 | | | 1/99 | A | A | A | A | A |
| Example 6-1 | Compound 004-1 | Compound 004-2 | 99/1 | A | A | A | A | A |
| Example 6-2 | | | 50/50 | A | A | A | A | A |
| Example 6-3 | | | 1/99 | A | A | A | A | A |
| Example 7-1 | Compound 005-1 | Compound 005-2 | 99/1 | A | A | A | A | A |
| Example 7-2 | | | 50/50 | A | A | A | A | A |
| Example 7-3 | | | 1/99 | A | A | A | A | A |
| Example 8-1 | Compound 039-1 | Compound 039-2 | 99/1 | A | A | A | A | A |
| Example 8-2 | | | 50/50 | A | A | A | A | A |
| Example 8-3 | | | 1/99 | A | A | A | A | A |
| Example 9-1 | Compound 040-1 | Compound 040-2 | 99/1 | A | A | A | A | A |
| Example 9-2 | | | 50/50 | A | A | A | A | A |
| Example 9-3 | | | 1/99 | A | A | A | A | A |
| Example 10-1 | Compound 050-1 | Compound 050-2 | 99/1 | A | A | A | A | A |
| Example 10-2 | | | 50/50 | A | A | A | A | A |
| Example 10-3 | | | 1/99 | A | A | A | A | A |
| Example 11-1 | Compound 051-1 | Compound 051-2 | 99/1 | A | A | A | A | A |
| Example 11-2 | | | 50/50 | A | A | A | A | A |
| Example 11-3 | | | 1/99 | A | A | A | A | A |
| Comparative Example 12-1 | Direct Blue 86 | Direct Blue 87 | 100/0 | B | C | C | B | C |
| Comparative Example 12-2 | | | 50/50 | B | C | C | B | C |
| Comparative Example 12-3 | | | 0/100 | A | C | B | B | B |

### [Ink Jet Textile Printing Evaluation]

Ink jet textile printing was performed using a method described in JP2013-209786A.

### <Pre-Treatment Step>

Regarding the nylon 6 jersey as the fabric, the following components were mixed with each other to prepare Pre-Treatment Agent A. The fabric was padded with Pre-Treatment Agent A obtained above at a squeezing rate of 90% and was naturally dried. As a result, pre-treated fabric was obtained.

### (Pre-Treatment Agent A)

- Paste: guar gum [MEYPRO GUM NP, manufactured by Nissho Corporation] 2 g
- Hydrotropy agent: urea [manufactured by Wako Pure Chemical Industries, Ltd.] 5g
- pH adjuster: ammonium sulfate [manufactured by Wako Pure Chemical Industries, Ltd.] 4 g
- Water 89 g

### <Printing Step>

Next, an ink composition having the following composition was stirred for 1 hour while heated at 30°C to 40°C. The obtained solution was filtered under reduced pressure through a microfilter having an average pore size of 0.5 µm. As a result, an ink jet ink solution (ink 3) was prepared.

| | |
|---|---|
| •Dye or dye mixture shown in Table 2 | 3 mass% |
| •Glycerin (manufactured by Wako Pure Chemical Industries, Ltd.; aqueous organic solvent) | 15 mass% |
| •Diethylene glycol (manufactured by Wako Pure Chemical Industries, Ltd.; aqueous organic solvent) | 5 mass% |
| •OLFINE E1010 (acetylenic glycol surfactant; manufactured by Nissin Chemical Co., Ltd.) | 1 mass% |
| •Water | 76 mass% |

After setting each of the obtained ink jet ink solutions in an ink jet printer (DMP-2381, manufactured by Dimatix Inc.), a solid image was printed on the pre-treated fabric.

### <Post-Treatment Step>

After drying the printed fabric, saturated steam was applied to the printed fabric at 100°C for 20 minutes in a steam treatment step such that the dye was fixed on the fiber of the fabric. Next, the fabric was washed with cold water for 10 minutes, was washed with warm water at 60°C for 5 minutes, and then was naturally dried. Using the dyed fabric, a dyed material which was dyed cyan with a high density without color loss was obtained.

Using a spectrodensitometer("X-rite 938", manufactured by X-rite Inc.), the CMYK density of the dyed fabric was measured under conditions of a density filter (ISO status T), density white base (absolute white base), no polarization filter, and a view angle of 2° such that the reflection density of cyan (C) was measured as OD-Cyan.

### [Evaluation Method of Light Fastness]

Using a prepared dyed sample, a light fastness test was performed based on the third exposure method of "JIS L 0842 Test Method of Color Fastness to Ultraviolet Carbon Arc Lamp Light". The results are shown in the table below.

### [Color]

The color of the dyed fabric was determined by visual inspection.

**[Table 2]**

| | Dye of Coloring Composition | | | Ink 3 | | |
|---|---|---|---|---|---|---|
| | Dye 1 | Dye 2 | Dye Mass Ratio (Dye 1/Dye 2) | Color Density (OD Value) | Color | Light Fastness |
| Example 1-1 | Compound 001-1 | Compound 001-2 | 99.95/0.05 | 1.5 | Cyan | Grade 2 |
| Example 1-2 | | | 99/1 | 1.5 | Cyan | Grade 2 |
| Example 1-3 | | | 95/5 | 1.5 | Cyan | Grade 2 |
| Example 1-4 | | | 50/50 | 1.5 | Cyan | Grade 2 |
| Example 1-5 | | | 1/99 | 1.5 | Cyan | Grade 2 |
| Example 1-6 | | | 0.05/99.5 | 1.5 | Cyan | Grade 2 |
| Example 2-1 | Compound 001-2 | Compound 001-3 | 99/1 | 1.5 | Cyan | Grade 2 |
| Example 2-2 | | | 50/50 | 1.5 | Cyan | Grade 2 |
| Example 2-3 | | | 1/99 | 1.5 | Cyan | Grade 2 |
| Example 3-1 | Compound 001-5 | Compound 001-6 | 99/1 | 1.5 | Cyan | Grade 2 |
| Example 3-2 | | | 50/50 | 1.5 | Cyan | Grade 2 |
| Example 3-3 | | | 1/99 | 1.4 | Cyan | Grade 2 |
| Example 4-1 | Compound 001-6 | Compound 001-7 | 99/1 | 1.5 | Cyan | Grade 2 |
| Example 4-2 | | | 50/50 | 1.5 | Cyan | Grade 2 |
| Example 4-3 | | | 1/99 | 1.5 | Cyan | Grade 2 |
| Example 5-1 | Compound 002-1 | Compound 002-2 | 99/1 | 1.5 | Cyan | Grade 2 |
| Example 5-2 | | | 50/50 | 1.5 | Cyan | Grade 2 |
| Example 5-3 | | | 1/99 | 1.5 | Cyan | Grade 2 |
| Example 6-1 | Compound 004-1 | Compound 004-2 | 99/1 | 1.5 | Cyan | Grade 2 |
| Example 6-2 | | | 50/50 | 1.5 | Cyan | Grade 2 |
| Example 6-3 | | | 1/99 | 1.5 | Cyan | Grade 2 |
| Example 7-1 | Compound 005-1 | Compound 005-2 | 99/1 | 1.5 | Cyan | Grade 2 |
| Example 7-2 | | | 50/50 | 1.5 | Cyan | Grade 2 |
| Example 7-3 | | | 1/99 | 1.5 | Cyan | Grade 2 |
| Example 8-1 | Compound 039-1 | Compound 039-2 | 99/1 | 1.5 | Cyan | Grade 2 |
| Example 8-2 | | | 50/50 | 1.5 | Cyan | Grade 2 |
| Example 8-3 | | | 1/99 | 1.5 | Cyan | Grade 2 |
| Example 9-1 | Compound 040-1 | Compound 040-2 | 99/1 | 1.5 | Cyan | Grade 2 |
| Example 9-2 | | | 50/50 | 1.5 | Cyan | Grade 2 |
| Example 9-3 | | | 1/99 | 1.5 | Cyan | Grade 2 |
| Example 10-1 | Compound 050-1 | Compound 050-2 | 99/1 | 1.5 | Cyan | Grade 2 |
| Example 10-2 | | | 50/50 | 1.5 | Cyan | Grade 2 |
| Example 10-3 | | | 1/99 | 1.5 | Cyan | Grade 2 |
| Example 11-1 | Compound 051-1 | Compound 051-2 | 99/1 | 1.5 | Cyan | Grade 2 |
| Example 11-2 | | | 50/50 | 1.5 | Cyan | Grade 2 |
| Example 11-3 | | | 1/99 | 1.5 | Cyan | Grade 2 |
| Comparative Example 12-1 | Direct Blue 86 | Direct Blue 87 | 100/0 | 1.0 | Cyan | Grade 1 |
| Comparative Example 12-2 | | | 50/50 | 1.0 | Cyan | Grade 1 |
| Comparative Example 12-3 | | | 0/100 | 1.0 | Cyan | Grade 1 |

Even in a case where nylon 66 jersey or nylon 6 taffeta was used as the fabric instead of nylon 6 jersey, the same result of light fastness were obtained.

The coloring composition according to the present invention has excellent light fastness and storage stability. In addition, an ink jet ink including the coloring composition, and a textile printing method can be provided.

The present invention has been described in detail with reference to the specific embodiment. However, it is obvious to those skilled in the art that various modifications and changes can be made within a range not departing from the scope of the present invention.

The present application is based on Japanese Patent Application (JP2015-255261) filed on December 25, 2015, the entire content of which is incorporated herein by reference.

## Claims

1. A coloring composition comprising:
a compound A represented by any one of the following Formulae (1) to (3); and
a compound B in which any one of hydrogen atoms in the compound A is substituted with an ionic hydrophilic group,
wherein a content mass ratio of the compound A to the compound B is 99.99:0.01 to 0.01:99.99, 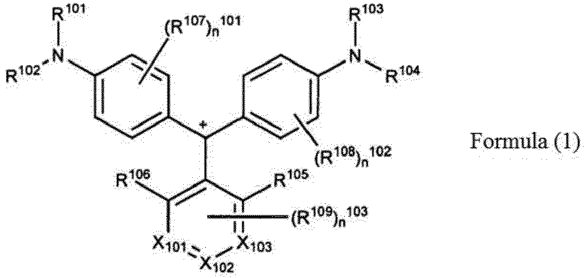
in Formula (1), R¹⁰¹ and R¹⁰³ each independently represent a hydrogen atom, an alkyl group, an aryl group, or a heterocyclic group,
R¹⁰² and R¹⁰⁴ each independently represent an alkyl group, an aryl group, or a heterocyclic group,
R¹⁰⁵ and R¹⁰⁶ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group,
R¹⁰⁷, R¹⁰⁸, and R¹⁰⁹ each independently represent a substituent,
X₁₀₁, X₁₀₂, and X₁₀₃ each independently represent CH or a nitrogen atom,
at least one of X₁₀₁, X₁₀₂, or X₁₀₃ represents CH,
in a case where X₁₀₁ to X₁₀₃ represent CH, R¹⁰⁹ may be bonded after a hydrogen atom is removed,
n¹⁰¹ and n¹⁰² each independently represent an integer of 0 to 4,
n¹⁰³ represents an integer of 0 to 3,
in a case where n¹⁰¹, n¹⁰², and n¹⁰³ each independently represent an integer of 2 or more, a plurality of R¹⁰⁷'s, R¹⁰⁸'s, and R¹⁰⁹'s may be the same as or different from each other,
R¹⁰⁷ and R¹⁰⁸ may be bonded to each other to form a ring,
a compound represented by Formula (1) has at least two ionic hydrophilic groups, and the compound represented by Formula (1) has a counter anion in a molecule, 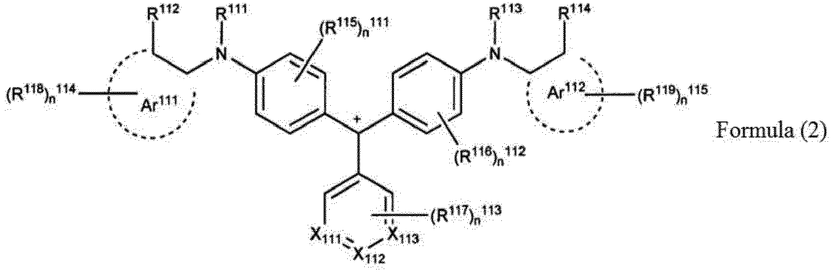
in Formula (2), R¹¹¹ and R¹¹³ each independently represent a hydrogen atom, an alkyl group, an aryl group, or a heterocyclic group,
R¹¹² and R¹¹⁴ each independently represent a halogen atom, an alkyl group, a cyano group, a nitro group, an alkoxy group, an acyloxy group, a carbamoyloxy group, an alkoxycarbonyloxy group, an amino group, an acylamino group, an aminocarbonylamino group, an alkoxycarbonylamino group, a sulfamoylamino group, an alkylsulfonylamino group, an alkylthio group, a sulfamoyl group, an alkylsulfinyl group, an alkylsulfonyl group, an acyl group, an alkoxycarbonyl group, a carbamoyl group, an imido group, or a sulfo group,
R¹¹⁵, R¹¹⁶, R¹¹⁷, R¹¹⁸, and R¹¹⁹ each independently represent a substituent,
X₁₁₁, X₁₁₂, and X₁₁₃ each independently represent CH or a nitrogen atom,
at least one of X₁₁₁, X₁₁₂, or X₁₁₃ represents CH,
in a case where X₁₁₁ to X₁₁₃ represent CH, R¹¹⁷ may be bonded after a hydrogen atom is removed,
Ar¹¹¹ and Ar¹¹² each independently represent a benzene ring, a naphthalene ring, or a heterocycle,
n¹¹¹ and n¹¹² each independently represent an integer of 0 to 4,
n¹¹³ represents an integer of 0 to 5,
n¹¹⁴ and n¹¹⁵ each independently represent an integer of 0 or more,
in a case where n¹¹¹, n¹¹², n¹¹³, n¹¹⁴, and n¹¹⁵ each independently represent an integer of 2 or more, a plurality of R¹¹⁵'s R¹¹⁶'s R¹¹⁷'s, R¹¹⁸'s, and R¹¹⁹'s may be the same as or different from each other,
a compound represented by Formula (2) has at least two ionic hydrophilic groups, and the compound represented by Formula (2) has a counter anion in a molecule, 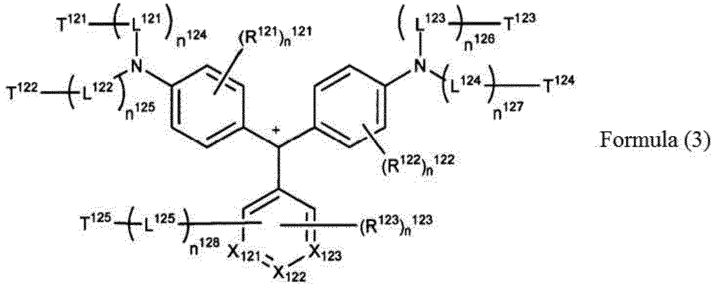
in Formula (3), L¹²¹, L¹²², L¹²³, L¹²⁴, and L¹²⁵ each independently represent a divalent linking group,
T¹²¹, T¹²², T¹²³, T¹²⁴, and T¹²⁵ each independently represent a hydrogen atom or a group represented by any one of the following Formulae (T-1) to (T-8),
at least one of T¹²¹, T¹²², T¹²³, T¹²⁴, or T¹²⁵ represents a group represented by any one of Formulae (T-1) to (T-8),
R¹²¹, R¹²², and R¹²³ each independently represent a substituent,
X₁₂₁, X₁₂₂, and X₁₂₃ each independently represent CH or a nitrogen atom,
at least one of X₁₂₁, X₁₂₂, or X₁₂₃ represents CH,
in a case where X₁₂₁ to X₁₂₃ represent CH, R¹²³ or (L¹²⁵)n¹²⁸-T¹²⁵ may be bonded after a hydrogen atom is removed,
n¹²¹ and n¹²² each independently represent an integer of 0 to 4,
n¹²³ represents an integer of 0 to 5,
n¹²⁴, n¹²⁵, n¹²⁶, n¹²⁷, and n¹²⁸ each independently represent 0 or 1,
in a case where n¹²¹, n¹²², and n¹²³ each independently represent an integer of 2 or more, a plurality of R¹²¹'s, R¹²²'s, and R¹²³'s may be the same as or different from each other,
R¹²¹ and R¹²² may be bonded to each other to form a ring,
a compound represented by Formula (3) has at least two ionic hydrophilic groups, and
the compound represented by Formula (3) has a counter anion in a molecule, 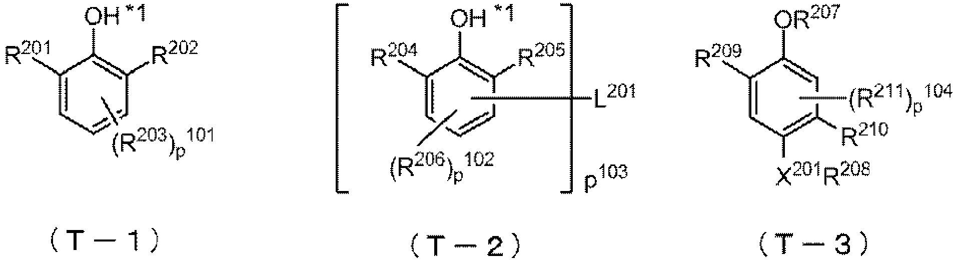 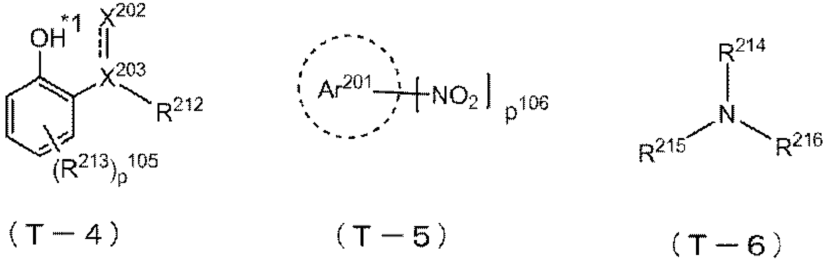 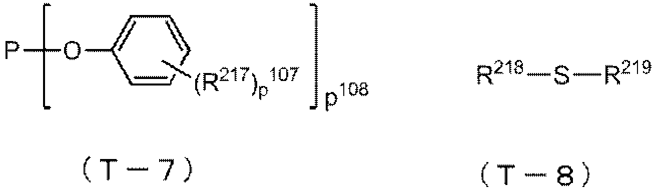
in Formula (T-1), R²⁰¹ and R²⁰² each independently represent an alkyl group,
R²⁰³ represents a substituent,
p¹⁰¹ represents an integer of 0 to 3,
in a case where p¹⁰¹ represents an integer of 2 or more, a plurality of R²⁰³'s may be the same as or different from each other,
in Formula (T-2), R²⁰⁴ represents an alkyl group,
R²⁰⁵ represents a hydrogen atom or an alkyl group,
R²⁰⁶ represents a substituent,
L²⁰¹ represents a p¹⁰³-valent linking group,
p¹⁰² represents an integer of 0 to 2,
p¹⁰³ represents 2 or 3,
in a case where p¹⁰² represents an integer of 2 or more, a plurality of R²⁰⁶'s may be the same as or different from each other,
in Formula (T-3), R²⁰⁷ represents an alkyl group,
R²⁰⁸ represents a hydrogen atom or an alkyl group,
R²⁰⁹ and R²¹⁰ each independently represent a hydrogen atom, an alkyl group, or an alkoxy group,
R²¹¹ represents a substituent,
X²⁰¹ represents an oxygen atom or NR²²⁰,
R²²⁰ represents a hydrogen atom or an alkyl group,
in a case where X²⁰¹ represents NH, at least one of R²⁰⁹ or R²¹⁰ represents an alkyl group or an alkoxy group,
p¹⁰⁴ represents an integer of 0 to 2,
in a case where p¹⁰⁴ represents 2, a plurality of R²¹¹'s may be the same as or different from each other,
in Formula (T-4), X²⁰² represents an oxygen atom or a nitrogen atom,
X²⁰³ represents a carbon atom or a nitrogen atom,
in a case where X²⁰³ represents a carbon atom, a bond between X²⁰² and X²⁰³ is a double bond,
in a case where X²⁰³ represents a nitrogen atom, a bond between X²⁰² and X²⁰³ is a single bond,
R²¹² represents an aryl group, a heterocyclic group, or a group which is linked to X²⁰² to form a heterocyclic group,
R²¹³ represents a substituent,
p¹⁰⁵ represents an integer of 0 to 4,
in a case where p¹⁰⁵ represents an integer of 2 or more, a plurality of R²¹³'s may be the same as or different from each other,
in Formula (T-5), Ar²⁰¹ represents an aryl group or a heterocyclic group,
p¹⁰⁶ represents an integer of 1 to 3,
in Formula (T-6), R²¹⁴ represents a hydrogen atom, *-O·, a hydroxyl group, an alkyl group, or an alkoxy group,
* represents a direct bond,
· represents an unpaired electron,
R²¹⁵ and R²¹⁶ each independently represent an alkyl group,
R²¹⁵ and R²¹⁶ may be bonded to each other to form a ring,
in Formula (T-7), R²¹⁷ represents a substituent,
p¹⁰⁷ represents an integer of 0 to 5,
in a case where p¹⁰⁷ represents an integer of 2 or more, a plurality of R²¹⁷'s may be the same as or different from each other,
p¹⁰⁸ represents 2 or 3,
in Formula (T-8), R²¹⁸ and R²¹⁹ each independently represent a hydrogen atom, an alkyl group, an aryl group, or a heterocyclic group,
R²¹⁸ and R²¹⁹ may be bonded to each other to form a ring,
a group represented by any one of Formulae (T-1) to (T-8) is bonded to L¹²¹, L¹²², L¹²³, L²⁴, or L¹²⁵ after any one of hydrogen atoms in the formula is removed,
a hydrogen atom represented by *1 is not removed for bonding, and
in a case where R²¹⁴ in Formula (T-6) represents a hydrogen atom, the hydrogen atom is not removed for bonding.

2. The coloring composition according to claim 1,
wherein the compound A is a compound represented by Formula (3), and
at least one of T¹²¹, T¹²², T¹²³, T¹²⁴, or T¹²⁵ in Formula (3) represents a group represented by Formula (T-2), (T-4), (T-5), (T-6), or (T-8).

3. The coloring composition according to claim 1 or 2,
wherein the compound A is a compound represented by Formula (3),
at least one of T¹²¹, T¹²², T¹²³, T¹²⁴, or T¹²⁵ in Formula (3) represents a group represented by Formula (T-4), and
Formula (T-4) is represented by the following Formula (T-41), (T-42), or (T-43), 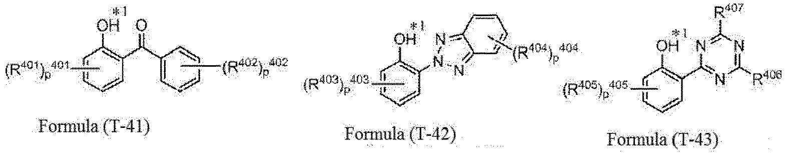
in Formula (T-41), R⁴⁰¹ and R⁴⁰² each independently represent a substituent,
p⁴⁰¹ represents an integer of 0 to 4,
p⁴⁰² represents an integer of 0 to 5,
in a case where p⁴⁰¹ and p⁴⁰² each independently represent an integer of 2 or more, a plurality of R⁴⁰¹'s and R⁴⁰²'s may be the same as or different from each other,
a hydrogen atom represented by *1 is not removed for bonding,
in Formula (T-42), R⁴⁰³ and R⁴⁰⁴ each independently represent a substituent,
p⁴⁰³ and p⁴⁰⁴ each independently represent an integer of 0 to 4,
in a case where p⁴⁰³ and p⁴⁰⁴ each independently represent an integer of 2 or more, a plurality of R⁴⁰³'s and R⁴⁰⁴'s may be the same as or different from each other,
a hydrogen atom represented by *1 is not removed for bonding,
in Formula (T-43), R⁴⁰⁵ represents a substituent,
R⁴⁰⁶ and R⁴⁰⁷ each independently represent an aryl group or a heterocyclic group,
p⁴⁰⁵ represents an integer of 0 to 4,
in a case where p⁴⁰⁵ represents an integer of 2 or more, a plurality of R⁴⁰⁵'s may be the same as or different from each other, and
a hydrogen atom represented by *1 is not removed for bonding.

4. The coloring composition according to any one of claims 1 to 3,
wherein the number of ionic hydrophilic groups in the compound A is two or three.

5. The coloring composition according to any one of claims 1 to 4,
wherein the content mass ratio of the compound A to the compound B is 99:1 to 1:99.

6. The coloring composition according to any one of claims 1 to 5,
wherein an ionic hydrophilic group in the compound A and the compound B is at least one of a carboxyl group or a sulfo group.

7. The coloring composition according to any one of claims 1 to 6,
wherein R¹⁰⁷ and R¹⁰⁸ in Formula (1), R¹¹⁵ and R¹¹⁶ in Formula (2), and R¹²¹ and R¹²² in Formula (3) represent a secondary or tertiary alkyl group which is substituted at an ortho position with respect to a nitrogen atom.

8. The coloring composition according to any one of claims 1 to 7, which is a coloring composition for dyeing.

9. An ink jet ink comprising the coloring composition according to any one of claims 1 to 8.

10. A textile printing method comprising the following steps (1) to (4):
(1) a step of preparing a color paste by adding the coloring composition according to claim 8 to a solution including at least a polymer compound and water;
(2) a step of printing the color paste of (1) on fabric;
(3) a step of applying steam to the printed fabric; and
(4) a step of washing the printed fabric with water and drying the washed fabric.

11. A textile printing method comprising the following steps (11) to (14):
(11) a step of applying a paste including at least a polymer compound and water to fabric;
(12) a step of printing the ink jet ink according to claim 9 on the fabric using an ink jet method;
(13) a step of applying steam to the printed fabric; and
(14) a step of washing the printed fabric with water and drying the washed fabric.

12. The textile printing method according to claim 10 or 11,
wherein the fabric includes polyamide.
